# EUROPÄISCHE PATENTSCHRIFT

(11) **EP 3 295 102 B1**
(45) Veröffentlichungstag und Bekanntmachung des Hinweises auf die Patenterteilung: **07.06.2023**
(21) Anmeldenummer: 16717128.9
(22) Anmeldetag: 15.04.2016
(51) Int. Cl.: F26B 3/06, C08J 3/24, F26B 17/04, F26B 21/02, F26B 21/12

(54) **HERSTELLUNGSVERFAHREN ZUR HERSTELLUNG WASSERABSORBIERENDER POLYMERARTIKEL UND BANDTROCKNER**
PRODUCTION METHOD FOR PRODUCING WATER ABSORBING POLYMER PRODUCTS AND BELT DRYER
MÉTHODE DE FABRICATION POUR FABRICER DES PRODUITS POLYMÈRES ABSORBANTS L'EAU ET SÉCHEUR À BANDE

(30) Priorität: 08.05.2015 EP 15166993
(43) Veröffentlichungstag der Anmeldung: 21.03.2018
(73) Patentinhaber: BASF SE, 67056 Ludwigshafen am Rhein (DE)
(72) Erfinder: GRÜNEWALD, Gerald, 67056 Ludwigshafen (DE); FUNK, Rüdiger, 65527 Niedernhausen (DE); WEISMANTEL, Matthias, 63637 Jossgrund (DE); POSSEMIERS, Karl, 67346 Speyer (DE)
(74) Vertreter: BASF IP Association
(86) Internationale Anmeldenummer: PCT/EP2016/058323
(87) Internationale Veröffentlichungsnummer: WO 2016/180597

(56) Entgegenhaltungen:
- US-A- 3 398 467
- US-A- 4 910 880
- US-A- 4 956 271
- US-A- 5 651 191
- US-B1- 6 174 978

## Beschreibung

Die Erfindung betrifft ein Herstellungsverfahren zur Herstellung wasserabsorbierender Polymerpartikel gemäß dem Oberbegriff des Anspruchs 1. Die Erfindung betrifft weiter einen Bandtrockner zur Trocknung eines wässrigen Polymergels gemäß dem Oberbegriff des Anspruchs 11.

Das Herstellungsverfahren weist die Schritte auf: Polymerisieren einer wässrigen Monomer-Lösung oder -Suspension zur Herstellung eines Polymergels; Trocknen des wässrigen Polymergels in einem Bandtrockner mit einem Förderband unter Aufnahme des wässrigen Polymergels auf dem Förderband und Fördern des Polymergels auf dem Förderband in eine Förderrichtung; Brechen und/oder Mahlen des getrockneten Polymergels zu Polymerpartikeln.

Zum Trocknen ist der Bandtrockner, als ein Umluftbandtrockner zur Führung von Umluft, mit einem das Förderband weitgehend umfassenden Trockneraufbau ausgebildet und mit einer am Trockneraufbau luftrückführend anschließenden Luftrückführung gebildet. Dabei wird Rückführluft aus dem Trockneraufbau entnommen und über die Luftrückführung dem Trockneraufbau wieder zugeführt. Die Luftrückführung weist eine Luftentnahmeführung auf, die zwischen einem luftstromaufwärtigen Eintrags-Abschnitt am Trockneraufbau und einem luftstromabwärtigen Austrags-Abschnitt in der Luftrückführung ausgebildet ist.

Als wasserabsorbierende bzw. superabsorbierende Polymere (SAP, kurz Superabsorber genannt) bezeichnet man vernetzte hydrophile Polymere, die ein Vielfaches ihrer Masse im trockenen Zustand (teilweise über das Tausendfache) an Flüssigkeiten, wie z. B. Wasser oder dergleichen Flüssigkeiten absorbieren können.

Das Haupteinsatzgebiet von Superabsorbern liegt im Hygienebereich und spielt auch im medizinischen Bereich in Wundauflagen und Pflastern eine bedeutende Rolle. Weitere wichtige Einsatzgebiete für Superabsorber stellen Landwirtschaft und Gartenbau dar, wo Superabsorber eingesetzt werden, um die Fähigkeit von Erde zur Speicherung von Feuchtigkeit zu verbessern.

Die Anforderungen an einen Superabsorber hängen von dem jeweiligen Anwendungsgebiet ab, weshalb die Eigenschaften der Superabsorber (z. B. der Quellungsgrad und die Quellungsgeschwindigkeit) entsprechend angepasst werden müssen. Dafür ist es von Bedeutung, ob die Aufnahme der zu absorbierenden Flüssigkeit unter Druck und/oder bei höheren Temperatur erfolgen soll, was insbesondere für den Einsatz von Superabsorbern in Inkontinenzprodukten wichtig ist. Von großer Bedeutung sind auch Art und Zusammensetzung der zu absorbierenden Flüssigkeit, da der Quellungsgrad eines Superabsorbers stark vom Salzgehalt des Quellungsmittels beeinflusst wird.

Die wasserabsorbierenden Polymere sind insbesondere Polymere aus (co-) polymerisierten hydrophilen Monomeren, Pfropfcopolymere von einem oder mehreren hydrophilen Monomeren auf einer geeigneten Pfropfgrundlage, vernetzte Cellulose oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche wasserabsorbierende Polymere werden zur Herstellung von Windeln, Tampons und Damenbinden, aber auch als wasserzurückhaltende Mittel im landwirtschaftlichen Gartenbau verwendet.

Die Herstellung der wasserabsorbierenden Polymere wird beispielsweise in der Monographie "Modern Super Absorbent Polymer Technology", von F. L. Buchholz und A. T. Graham, Wiley-VCH, 1998 oder in Ullmanns "Encyklopedia of Industrial Chemistry", 6. Auflage, Band 35, Seite 73 bis 103 beschrieben.

Ein superabsorbierendes Polymer im Zustand eines wässrigen Polymergels wird als ein in einem nassen Zustand befindlich angesehen und kann insofern auch allgemeiner als Nassgut bezeichnet werden; d.h. das wässrige Polymergel hat immer noch einen beträchtlichen Wasseranteil vor dem Trocknen; insbesondere wie unten beschrieben. Das wässrige Polymergel wird durch Polymerisieren einer Monomer-Lösung oder - Suspension gewonnen. Das wässrige Polymergel von noch wässrigen Polymerpartikeln wird bevorzugt als Granulat, z. B. mit einem Feststoffanteil von 40-60%, in den Bandtrockner eingebracht. In diesem Zustand ist das Polymergel grundsätzlich bereits vernetzt mit einem gewünschten Vernetzungsgrad, insbesondere zunächst homogen vernetzt, insbesondere mit einem vergleichsweise niedrigen Vernetzungsgrad insbesondere, wie unten weiter beschrieben, zunächst noch kaum oberflächenvernetzt.

Ein superabsorbierendes Polymer im Zustand eines wasserabsorbierenden Polymer-Partikels ist als in einem Zustand nach dem Trocknen befindlich anzusehen; d.h. es hat einen geringen restlichen Wassergehalt der Polymerpartikel nach dem Trocknen des wässrigen Polymergels, insbesondere wie unten beschrieben; also liegt das superabsorbierende Polymer bevorzugt als getrocknetes Polymergel, insbesondere getrocknete Polymerpartikel vor. In diesem Zustand können die wasserabsorbierenden Polymerpartikel bevorzugt nachvernetzt werden, insbesondere oberflächenvernetzt werden, wobei der Oberflächenvernetzungsgrad dann bevorzugt über dem obengenannten vergleichsweise niedrigen zunächst homogenen Vernetzungsgrad liegt. Vorzugsweise wird nach der Polymerisation ein wässriges Polymergel der wasserabsorbierenden Polymere erhalten, das getrocknet wird. Die Grundsätze einer Trocknung des wässrigen Polymergels zu einem wasserabsorbierenden Polymer mit wasserabsorbierenden, insbesondere getrockneten, Polymerpartikeln wird ebenfalls in der Monographie "Modern Super Absorbent Polymer Technology", von F. L. Buchholz und A. T. Graham, Wiley-VCH, 1998, in den Seiten 87 bis 93 beschrieben.

Im Bandtrockner wird das wässrige Polymergel zu einem teilgetrockneten Polymergel getrocknet und liegt insofern als ein Trockenkuchen vor. Der Trockenkuchen liegt bevorzugt als ein Strang von teilgetrockneten Polymergel, also als teilgetrockneter Polymerstrang, auf dem Band des Bandtrockners vor, der sich insofern durch den Trockneraufbau des Bandtrockners erstreckt.

Der Trockenkuchen liegt am Ende des Bandtrockners, d.h. beim Verlassen des Trockneraufbaus, als weitgehend getrockneter Strang von getrocknetem Polymergel, etwa in Form einer Platte oder einem brettartigen Strang, also als getrockneter Polymerstrang, vor. Im Folgenden wird teilweise auf das teilgetrocknete Polymergel und auf das getrocknete Polymergel des Trockenkuchens bereits mit der Begrifflichkeit "getrocknete Polymerpartikel" Bezug genommen; beide Fälle werden mit den Begriffen "superabsorbierendes oder wasserabsorbierendes Polymergel" oder "getrocknetes Polymergel" im Unterschied zu "wässrigem Polymergel" erfasst.

Bei einer eher breiten Größenverteilung von Partikeln des zu trocknenden wässrigen Polymergels erfolgt eine vollständige Trocknung aller Polymerpartikel unter solchen Trocknungsbedingungen, unter denen schließlich ein Großteil der Partikel bereits eher übertrocknet ist. Letztendlich soll das Trocknungsverfahren aber auch wirtschaftlich sein und die gewünschte Produktqualität liefern. Nach angemessener Verweilzeit des zu trocknenden wässrigen Polymergels im Bandtrockner soll dies zu einem superabsorbierenden Polymer mit wasserabsorbierenden Polymerpartikeln getrocknet werden, die einen gewünschten Wassergehalt, bevorzugt niedrigen Wassergehalt und insofern Restfeuchtegehalt, aufweisen.

Dementsprechend werden in der Praxis Trocknungsbedingungen gewählt, die einen Kompromiss zwischen Ausnutzung der Trocknerkapazität und der Verarbeitbarkeit der wasserabsorbierenden Polymerpartikel darstellen.

Das getrocknete Polymergel als weitgehend getrockneter Polymerstrang wird dann einem Brecher oder dergleichen Zerkleinerer am Ende des Bandtrockners zugeführt. Es entstehen dann also durchweg getrocknete Polymerpartikel von getrocknetem Polymergel.

Die getrockneten Polymerpartikel liegen dann teils als Bruch von getrocknetem Polymergel, z. B. vergleichsweise grobe Brocken, und teils als unvermeidlicher Bruchrest von getrocknetem Polymergel vor. Insbesondere der Bruchrest von getrocknetem Polymergel umfasst feine Pulverstücke von Polymerpartikeln umfassend Fein- und Feinstpartikel.

Die getrockneten Polymerpartikel werden dann bevorzugt einem Mahlvorgang zugeführt und zu gemahlenen getrockneten Polymerpartikel weiterverarbeitet.

Die gemahlenen getrockneten Polymerpartikel können dann einem Siebvorgang zugeführt werden. Eine Gutkornfraktion hat dann eine schon bevorzugte gewünschte Partikelgröße haben und kann bereits abgetrennt werden. Eine Überkorn- oder Feinkorn-Fraktion kann ggfs. nochmals gemahlen, gesiebt oder bearbeitet werden und zur Gutkornfaktion hinzugefügt werden.

Die getrockneten, gemahlenen und gesiebten Polymerpartikel der Gutkornfraktion können oberflächennachbearbeitet werden.

Die getrockneten, gemahlenen und gesiebten und oberflächennachbearbeiteten Polymerpartikel können einer Schutzsiebung zugeführt werden.

Beim Trocknungsverfahren können kontinuierlich arbeitende Konvektionsbandtrockner verwendet werden; im Folgenden betrifft dies einen Bandtrockner, der eingangs genannten Art, insbesondere einen Umluftbandtrockner. Der eingangs genannte Bandtrockner ist für ein wässriges Polymergel, insbesondere zur Bildung eines begrenzt rieselfähigen, stückigen und verformbaren pastösen Produkts, besonders ausgebildet. Bei einem kontinuierlich arbeitenden Bandtrockner wird die als durchlüftbares Haufwerk aufgelegte Produktschicht eines wässrigen Polymergels auf einem perforierten Förderband durch den Trocknungsraum transportiert und dabei zunächst zu teilgetrocknetem Polymergel und schließlich zu getrocknetem Polymergel getrocknet; dieses wird dann zu den oben genannten getrockneten Polymerpartikeln als wasserabsorbierende Polymerpartikel weiterverarbeitet.

Das die Produktschicht des Trockenkuchens von teilgetrocknetem Polymergel und dann getrocknetem Polymergel durchströmende Trocknungsgas dient sowohl zum Wärmeeintrag in das zu trocknende wässrige Polymergel bzw. in die teilweise getrockneten wasserabsorbierenden Polymerpartikel als auch zum Abtransport von verdampfender Feuchte. Als Trocknungsgas wird bevorzugt Luft als Trocknungsluft verwendet. Bei einem Umluftbandtrockner wird die die Produktschicht durchströmende Trocknungsluft zudem als Umluft geführt.

Desweiteren erlaubt eine Aufteilung des inneren Bereichs des Trockneraufbaus in mehrere kontrollierbare Bereiche --im folgenden als Kontrollzonen bezeichnet-- die Einstellung unterschiedlicher Trocknungsbedingungen, wie z. B. Trocknungstemperaturen, Trocknungsdrücke, Luftfeuchten od.dgl. Trocknungsbedingungen jeweils für eine Kontrollzone. Eine Einstellung der Trocknungs- bzw. Kühltemperaturen und anderer Trocknungsbedingungen innerhalb verschiedener Kontrollzonen erfolgt mittels geeignet dimensionierter Heizregister, Wärmetauscher sowie einer Zu- und Abluftführung von Trocknungsluft. Durch unterschiedliche Trocknungsbedingungen und/oder einstellbare Trocknungszeiten für das zu trocknende wässrige Polymergel kann der gewünschte Endtrocknungsgrad für die wasserabsorbierenden Polymerpartikel eingestellt werden. Der Bandtrockner hat im Vergleich zu anderen Trocknerbauarten den Vorteil, dass (bis auf die Schwerkraft) keine wesentliche mechanische Beanspruchung das Produkt beeinträchtigt, da das wässrige Polymergel bzw. die wasserabsorbierenden Polymerpartikel lose auf einem Förderband aufliegen. Prinzipiell bietet ein Bandtrockner die Möglichkeit, eine Kontrollzone mittels einer einzigen Trocknerzone baulich ganz zu gestalten. Ein Bandtrockner in einer Abwandlung bietet auch die Möglichkeit, eine Kontrollzone einer Anzahl von Trocknerzonen ganz oder teilweise baulich zu gestalten. Im einfachsten Fall umfasst der Trockneraufbau eine Kontrollzone und bildet eine einzige Trocknerzone. Eine Trocknerzone kann, muss aber nicht, einen modularen Aufbau haben, d.h. mittels einem einzigen oder einer Mehrzahl von Trocknermodulen baulich realisiert sein. Im Ergebnis kann ein Trockneraufbau mittels einer Anzahl von Trocknermodulen baulich realisiert sein. Ein Bandtrockner umfasst beispielsweise ein Produktaufgabemodul, eine Anzahl von Trocknermodulen zur Bildung einer oder mehrerer Trocknerzonen und ein Austragsmodul.

Das Austragsmodul dient zum Austragen des superabsorbierenden Polymers in Form der wasserabsorbierenden Polymerpartikel; insbesondere endet das Förderband im Austragsmodul bzw. hat dort einen Umkehrpunkt; das superabsorbierende Polymer kann im Austragsmodul auf einen oben genannten Brecher oder dergleichen Zerkleinerer fallen.

Die letzte Trocknerzone vor dem Austragsmodul, ggfs. auch eine vorletzte Trocknerzone oder eine Reihe von letzten Trocknerzonen vor dem Austragsmodul, kann zum Abkühlen der wasserabsorbierenden Polymerpartikel genutzt werden und kann demzufolge auch ohne einen Wärmeeintrag in die wasserabsorbierenden Polymerpartikel ausgebildet sein; in dem Fall kann die oder die Anzahl letzter Trocknerzonen vor dem Austragsmodul insbesondere ohne Heizregister und/oder Wärmetauscher ausgebildet sein. Eine Trocknerzone mit Wärmeabfuhr aus den wasserabsorbierenden Polymerpartikeln wird auch als Kühlzone bezeichnet und kann, jedenfalls grundsätzlich an verschiedensten Stellen des Trockneraufbaus platziert sein. Insbesondere handelt es sich bevorzugt bei der letzten Trocknerzone vor dem Austragsmodul um eine Kühlzone. Bevorzugt kann eine Kühlzone mit einer Umluftführung versehen sein. Dadurch kann eine Kühlzone baulich kürzer gestaltet werden als ohne Umluftführung.

Die letzte Trocknerzone kann aber in einer Abwandlung auch Heizregister und/oder Wärmetauscher und dgl. aufweisen; insofern also analog wie vorhergehende Trocknerzonen ausgebildet sein. Die letzte Trocknerzone vor dem Austragsmodul hat hier in der baulichen Realisierung ein Endmodul und zeichnet sich, insbesondere im Falle einer Kühlzone, dadurch aus, dass das Produkt in Form der wasserabsorbierenden Polymerpartikel kälter austritt als es eintritt.

Bandtrockner mit Transportbändern sind zu unterscheiden von Bandreaktoren. Während ein Bandreaktor verwendet wird, um wässriges Polymergel aus seinen Herstellungsstoffen zu produzieren wird ein Bandtrockner verwendet, um wasserabsorbierende Polymerpartikel aus einem wässrigen Polymergel zu produzieren, insbesondere um bevorzugt aus einem mit gewünschtem Vernetzungsgrad zunächst homogen vernetzten, ggfs. auch oberflächenvernetzten-wässrigen Polymergel die genannten wasserabsorbierenden Polymerpartikel zu produzieren.

In WO 2006/100300 A1 wird ein Verfahren zur Herstellung wasserabsorbierender Polymere mit Polymerisation einer Monomer-Lösung und Trocknung des durch die Polymerisation erhaltenen wässrigen Polymergels in einem Bandtrockner mittels eines erwärmten Luftstromes offenbart, wobei die Trocknung in mindestens zwei Temperaturzonen durchgeführt wird und/oder die Durchströmungsrichtung des Trocknungs-Luftstroms durch das wässrige Polymergel im vorderen Abschnitt eines Bandtrockners von unten und im hinteren Abschnitt des Bandtrockners von oben durchgeführt wird. Dabei wird die Trocknungsluft im Kreis geführt, um bei einem mehrfachen Durchgang durch die Produktschicht eine möglichst hohe Aufsättigung zu erfahren. Zur wirtschaftlichen Trocknung der wasserabsorbierenden Polymere wird die Luftführung im Trockner konsequent auf einen energieeffizienten Betrieb ausgelegt. Es sind verschiedene Luftführungskonzepte möglich, die Vorteile hinsichtlich Trocknungsverhalten und Energieausnutzung aufweisen. Bevorzugt ist hierbei die übergeordnete Luftführung im Kreuzgegenstrom.

US 6174978 B1 offenbart ein Herstellungsverfahren zur Herstellung wasserabsorbierender Polymerpartikel nach dem Stand der Technik.

US 4910880 A offenbart einen Bandtrockner nach dem Stand der Technik.

Eine Aufgabe der Erfindung ist es, ein verbessertes Herstellungsverfahren und eine Vorrichtung anzugeben. Insbesondere soll ein energieeffizientes Trocknungsverfahren angegeben werden; vorzugsweise unter Nutzung eines Kreuzgegenstromes einer Luftführung.

Vorzugsweise soll bei einem verbesserten Trocknungsverfahren der Wartungs- und Reinigungsaufwand verringert sein, insbesondere betreffend Einbauten in einer Luftrückführung, wie z. B. den betreffend darin angeschlossenen Kühlmodulen und/oder Trocknungsmodulen, insbesondere betreffend dort befindlichen Heizregistern oder Vorlufterhitzern. Insbesondere soll dies zu zeitlich gleichbleibenden Produkteigenschaften bei möglichst konstanten bzw. angemessen angepassten Betriebsparametern führen. Vorzugsweise ist ein Partikeleintrag in eine Luftrückführung, insbesondere in Einbauten in einer Luftrückführung --wie Kühlmodule und/oder Trocknungsmodule, z. B. Heizregister, oder dergleichen Einbauten-- verringert. Vorzugsweise ist ein Partikeleintrag in eine Luftrückführung auch bei einem energieeffizienten Trocknungsverfahren mit einer Luftrückführung im Gegenstrom und/oder unter Nutzung von Umluft im Kreuzstrom verringert. Vorzugsweise soll der Bandtrockner für eine Luftführung von Trocknungsluft gegen einen Produktstrom in dessen unmittelbarer Umgebung ausgebildet sein.

Betreffend das Herstellungsverfahren wird die Aufgabe durch die Erfindung mit einem Herstellungsverfahren des Anspruchs 1 gelöst.

Betreffend die Vorrichtung wird die Aufgabe durch die Erfindung mit einem Bandtrockner des Anspruchs 11 gelöst.

Die Erfindung geht betreffend das Herstellungsverfahren von einem Herstellungsverfahren der eingangs genannten Art gemäß dem Oberbegriff des Anspruchs 1 aus. Erfindungsgemäß ist vorgesehen, dass zum Trocknen ein Strömungsquerschnitt in wenigstens einem luftabführenden Abschnitt der Luftentnahmeführung eine Querschnittsvergrößerung aufweist, wobei die Querschnittsvergrößerung derart einen Querschnitt des luftabführenden Abschnitts der Luftentnahmeführung vergrößert, dass die Rückführluft wenigstens in dem luftabführenden Abschnitt der Luftentnahmeführung mit einer verringerten Strömungsgeschwindigkeit abgeführt wird, insbesondere eine Strömungsgeschwindigkeit die geringer ist als eine Strömungsgeschwindigkeit an einem luftstromaufwärtigen Querschnitt einer Luftentnahmeleitung und/oder geringer ist als eine Eintragsgeschwindigkeit am Eintrags-Abschnitt der Luftentnahmeführung und/oder die Rückführluft wenigstens in einem querschnittsvergrößerten Eintrags-Abschnitt der Luftentnahmeführung mit einer verringerten Eintragsgeschwindigkeit abgeführt wird. In dem Fall ist die verringerte Strömungsgeschwindigkeit geringer als eine Strömungsgeschwindigkeit an einem luftstromabwärtigen Querschnitt einer Luftentnahmeleitung.

Die Erfindung geht betreffend den Bandtrockner von einem Bandtrockner der eingangs genannten Art gemäß dem Oberbegriff des Anspruchs 11 aus. Erfindungsgemäß ist vorgesehen, dass ein Strömungsquerschnitt in wenigstens einem luftabführenden Abschnitt der Luftentnahmeführung mit einer Querschnittsvergrößerung versehen ist, wobei die Querschnittsvergrößerung derart einen Querschnitt des luftabführenden Abschnitts der Luftentnahmeführung vergrößert, dass die Rückführluft wenigstens in dem luftabführenden Abschnitt der Luftentnahmeführung mit einer verringerten Strömungsgeschwindigkeit abgeführt wird, insbesondere mit einer verringerten Strömungsgeschwindigkeit, die geringer ist als eine Strömungsgeschwindigkeit an einem luftstromaufwärtigen Querschnitt einer Luftentnahmeleitung und/oder eine Eintragsgeschwindigkeit am Eintrags-Abschnitt der Luftentnahmeführung.

Zusätzlich oder alternativ ist die Rückführluft wenigstens in einem querschnittsvergrößerten Eintrags-Abschnitt der Luftentnahmeführung mit einer verringerten Eintragsgeschwindigkeit abführbar. In dem Fall ist die verringerte Strömungsgeschwindigkeit geringer als eine Strömungsgeschwindigkeit an einem luftstromabwärtigen Querschnitt einer Luftentnahmeleitung.

Vorteilhafte Weiterbildungen der Erfindung sind den Unteransprüchen zu entnehmen und geben im einzelnen vorteilhafte Möglichkeiten an, das erläuterte Konzept im Rahmen der Aufgabenstellung sowie hinsichtlich weiterer Vorteile zu realisieren.

Bevorzugt schließt eine Luftentnahmeführung an eine (bevorzugt als Kühlzone ausgebildet) letzte Trocknerzone an; diese Weiterbildung ist im Rahmen einer besonders bevorzugten Ausführungsform in Bezug auf die Zeichnung erläutert. Grundsätzlich kann eine Luftentnahmeführung jedoch auch an einer anderen Trocknerzone des Trockneraufbaus anschließen. Unter einem luftabführenden Abschnitt der Luftentnahmeführung ist insbesondere ein solcher Abschnitt der Luftentnahmeführung zu verstehen, welcher unmittelbar an einen Eintrags-Abschnitt der Luftentnahmeführung für Rückführluft anschließt. Die Luftentnahmeführung schließt erfindungsgemäß insofern an eine Luftrückführung für Rückführluft an, welche die Rückführluft in einem luftzuführenden Abschnitt der Luftrückführung dem Trockneraufbau wieder zuführt und der dazu ebenfalls am Trockneraufbau angeschlossen ist.

Das Konzept umfasst insbesondere solche Weiterbildungen, bei denen der luftabführende Abschnitt mit einer Querschnittsvergrößerung --bezogen auf die Rückführluft-- zwischen dem luftstromaufwärtigen Eintrags-Abschnitt am Trockneraufbau und einem luftstromabwärtigen Austrags-Abschnitt in der Luftrückführung gebildet ist. Der Gegenstand der vorliegenden Anmeldung umfasst insbesondere auch solche Weiterbildungen, bei denen der luftabführende Abschnitt mit einer Querschnittsvergrößerung direkt am luftstromaufwärtigen Eintrags-Abschnitt am Trockneraufbau und/oder direkt am luftstromabwärtigen Austrags-Abschnitt in der Luftrückführung gebildet ist. Der Gegenstand umfasst auch Kombinationen solcher Weiterbildungen.

Unter einer Querschnittsvergrößerung ist generell zu verstehen, dass der luftabführende Abschnitt einen gegenüber einem übrigen Querschnitt einer Luftentnahmeleitung vergrößerten Querschnitt aufweist, derart dass die Rückführluft wenigstens in dem luftabführenden Abschnitt der Luftentnahmeführung mit einer gegenüber dem übrigen Querschnitt verringerten Strömungsgeschwindigkeit abgeführt wird. Unter einer Querschnittsvergrößerung, die einen Querschnitt des luftabführenden Abschnitts der Luftentnahmeführung vergrößert, ist insbesondere zu verstehen, dass sich der Querschnitt des luftabführenden Abschnitts von einem ersten luftstromaufwärtigen Querschnitt auf einen zweiten luftstromabwärtigen Querschnitt erweitert. Unter einer Querschnittsvergrößerung ist insofern zusätzlich oder alternativ insbesondere auch zu verstehen, dass der luftabführende Abschnitt am luftstromaufwärtigen Eintrags-Abschnitt am Trockneraufbau einen Leitungseintrittsbereich mit einem Querschnitt aufweist, der einen stark vergrößerten Ansaugbereich bildet. Insbesondere ist der Leitungseintrittsbereich erweitert gegenüber einer weiteren Luftentnahmeleitung der Luftentnahmeführung, insbesondere erweitert gegenüber einem Luftführungs-Querschnitt an einem Fördermittel in einer Luftrückführung. Entsprechend kann ein Leitungseintrittsbereich einen vergrößerten zylindrischen, ovalen, eckigen, insbesondere quadratischen oder rechteckigen, oder anders geformten Querschnitt eines Strömungskanals aufweisen, um den vergrößerten Ansaugbereich zu bilden. Der Leitungseintrittsbereich kann auch beispielsweise als ein Diffusor, Trichter oder dergleichen Strömungskanalausformung zur Bildung eines vergrößerten Ansaugbereichs gebildet sein.

So kann gemäß einer ersten Variante des Konzepts generell vorgesehen sein, dass die Rückführluft wenigstens in dem luftabführenden Abschnitt der Luftentnahmeführung mit einer verringerten Strömungsgeschwindigkeit abgeführt wird. Dies lässt sich beispielsweise bereits dadurch realisieren, dass eine oder mehrere Bypassleitungen zu einer Luftentnahmeleitung in der Luftentnahmeführung vorgesehen ist. Aufgrund einer Bypassleitung in der Luftentnahmeführung ist der Gesamt-Querschnitt des luftabführenden Abschnitts der Luftentnahmeführung vergrößert im Sinne des Konzepts, nämlich derart, dass die Luftentnahmeführung nunmehr den Querschnitt der Luftentnahmeleitung und den Querschnitt der Bypassleitung aufweist anstatt nur den Querschnitt der Luftentnahmeleitung. Aufgrund eines vergrößerten Gesamt-Querschnitts der Luftentnahmeführung wird insgesamt die Rückführluft wenigstens in dem luftabführenden Abschnitt der Luftentnahmeführung mit einer verringerten Strömungsgeschwindigkeit abgeführt.

Vorteilhaft wird, zusätzlich oder alternativ, der Querschnitt des luftabführenden Abschnitts der Luftentnahmeführung vergrößert, z. B. graduell oder stufenweise entlang des Verlaufs des luftabführenden Abschnitts; d.h. der Querschnitt des luftabführenden Abschnitts erweitert sich von einem ersten luftstromaufwärtigen Querschnitt auf einen zweiten luftstromabwärtigen Querschnitt. Betreffend das obige Beispiel der Bypassleitung kann dieser zweite luftstromabwärtige vergrößerte Querschnitt am Anschlusspunkt der Bypassleitung zur Luftentnahmeleitung gebildet sein. Zusätzlich oder alternativ kann dieser zweite luftstromabwärtige vergrößerte Querschnitt auch durch andere Weise in der Luftentnahmeleitung gebildet sein; so beispielsweise durch eine Setzkammer, einen Fliehkraftabscheider oder einen Aufweitungsbereich der Luftentnahmeleitung entlang des Verlaufs der Luftentnahmeleitung. Auf diese Weise wird die Rückführluft wenigstens in dem luftabführenden Abschnitt der Luftentnahmeführung (beispielsweise in dem luftstromabwärtigen vergrößerten Querschnitt) mit einer verringerten Strömungsgeschwindigkeit abgeführt; in dem Fall ist die verringerte Strömungsgeschwindigkeit insbesondere verringert gegenüber einem luftstromaufbwärtigen Querschnitt einer Luftentnahmeleitung - insbesondere ist die Strömungsgeschwindigkeit geringer ist als eine Eintragsgeschwindigkeit am Eintrags-Abschnitt der Luftentnahmeführung.

Es ist gemäß einer zweiten Variante des Konzepts generell vorgesehen, zusätzlich oder alternativ, dass die Rückführluft wenigstens in einem querschnittsvergrößerten Eintrags-Abschnitt der Luftentnahmeführung mit einer verringerten Eintragsgeschwindigkeit abführbar ist. Dies kann bereits durch einen querschnittsgroßen Leitungseintrittsbereich der Luftentnahmeleitung erreicht werden. Dadurch wird insgesamt die Rückführluft wenigstens in dem querschnittsvergrößerten Eintrags-Abschnitt --als luftabführenden Abschnitt der Luftentnahmeführung-- die Rückführluft mit einer verringerten Strömungsgeschwindigkeit abgeführt.

Alle obigen Angaben bezüglich der verringerten Strömungsgeschwindigkeiten und vergrößerte Querschnittsvergrößerungen verstehen sich insbesondere unter Bezug auf gleiche Förderluftmengen.

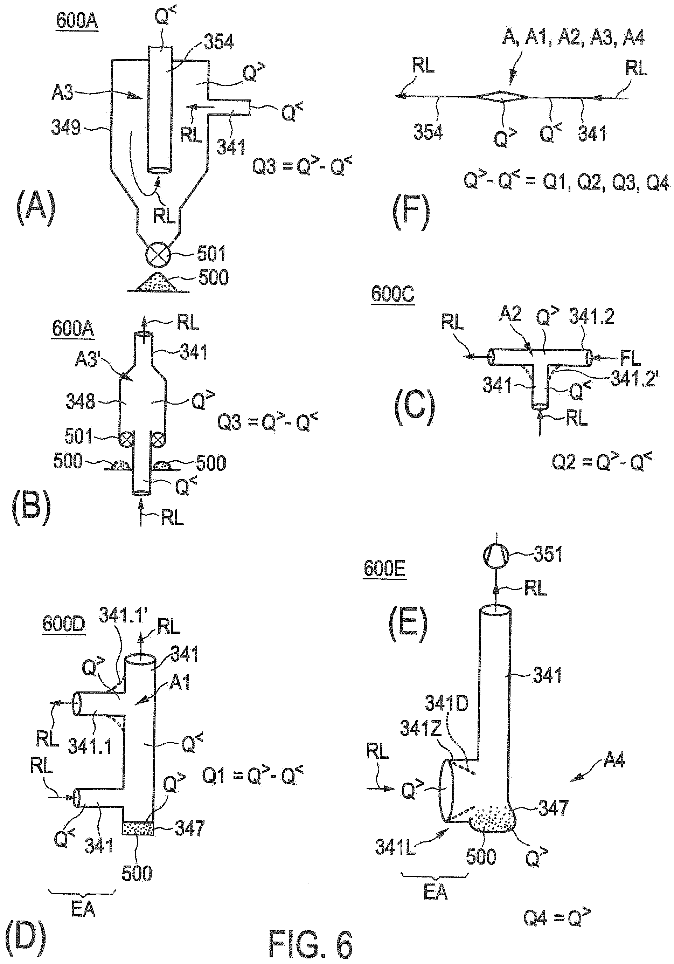

Beispiele dieser Varianten sind im Einzelnen als Weiterbildungen in den Unteransprüchen beansprucht und insbesondere im Rahmen der FIG.6 als Ausführungsbeispiele beschrieben.

Unter einer Luftrückführung ist eine Rückführung von entnommener Luft aus dem Trockneraufbau zu verstehen, welche in einer Luftentnahmeführung abgeführt wird und als Rückführluft entgegen der Förderrichtung des Förderbandes außerhalb des Trockneraufbaus, d.h. in Gegenstromrichtung, zurückgeführt wird und an einer entgegen der Förderrichtung des Förderbandes gelegenen Stelle, nämlich an einem luftzuführenden Abschnitt, dem Trockneraufbau wieder zugeführt wird (Luftrückführung für Rückführluft RL).

Vorzugsweise, aber nicht notwendigerweise, ist der Bandtrockner als ein Umluftbandtrockner zur Führung von Umluft ausgebildet, wobei eine kreuzende Führung eines Produktstromes von zu trocknenden wässrigem Polymergel auf dem Förderband im Bandtrockner und einem Umluft-Strom der Trocknungsluft vorgesehen ist.

Unter einem Kreuzgegenstrom ist eine kreuzende Führung eines Produktstromes von zu trocknendem wässrigen Polymergel auf dem Förderband im Bandtrockner und einem Strom der Trocknungsluft, insbesondere als Umluft, zu verstehen (Kreuzstrom). Dabei erfolgt eine Luftführung von Trocknungsluft gegen einen Produktstrom in dessen unmittelbarer Umgebung, d.h. entgegen einer Förderrichtung des Förderbandes im Bandtrockner, also im Gegenstrom innerhalb des Trockneraufbaus des Bandtrockners sozusagen ständig u.a. in Kontakt mit dem zu trocknendem wässrigen Polymergel auf dem Förderband aber entgegen dessen Förderrichtung (Luftführung von Trocknungsluft gegen einen Produktstrom, Gegenstrom).

Generell geht das Konzept von der Überlegung aus, dass sich Polymerpartikel im Trockneraufbau, insbesondere in einem Austragsmodul des Trockners beim Brechen des Strangs oder der Platte des Trockenkuchens, vom übrigen Fördergut des Trockenkuchens lösen können. Das getrocknete Polymergel als weitgehend getrockneter Polymerstrang wird dann einem Brecher am Ende des Bandtrockners zugeführt. Es entstehen aber bereits beim Abbrechen des Strangs oder der Platte getrocknete Polymerpartikel von getrocknetem Polymergel. Die getrockneten Polymerpartikel liegen dann teils als Bruch von getrocknetem Polymergel, z. B. vergleichsweise grobe Brocken, und teils als unvermeidlicher Bruchrest von getrocknetem Polymergel vor. Insbesondere der Bruchrest von getrocknetem Polymergel umfasst feine Pulverstücke von Polymerpartikeln umfassend Fein- und Feinstpartikel. Das getrocknete Polymergel liegt also bereits vor dem Brecher oder dergleichen Zerkleinerer jedenfalls teilweise bereits als getrocknete Polymerpartikel vor.

Insbesondere solche aber gegebenenfalls auch andere Polymerpartikel können entweder aufgrund eines Unterdrucks in das Innere einer Luftrückführung oder durch das Förderband selbst in die Luftrückführung befördert werden. Damit können solche Polymerpartikel auch mit der Rückführluft in der Luftrückführung in Richtung der und bis zu darin angeschlossenen Einbauten, wie Kühlmodule und/oder Trocknungsmodule, befördert werden. Nach Fördern des wässrigen Polymergels durch den Trockneraufbau in eine Förderrichtung hat das Fördergut, in Form der wasserabsorbierenden Polymerpartikel, in einem Austragsmodul bzw. in der dem Austragsmodul entgegen der Förderrichtung vorgelagerten letzten Trocknerzone des Bandtrockners eine vergleichsweise harte Konsistenz und eine vergleichsweise geringe Feuchtigkeit. Die sich einstellende Konsistenz und Feuchtigkeit erlauben die Weiterverarbeitung des Fördergutes durch Brechen oder Mahlen, wobei im Mittel eine bestimmte Partikelgrößeneinstellung möglich und wünschenswert ist. Die dabei gleichwohl entstehenden kleineren Partikel, Partikelchen, Stäube, Feinstäube und Feinststäube, insbesondere die beim Brechen auftretenden Fein- und Feinststäube, können durch den genannten Transport durch die Rückführung zu den oben genannten Einbauten (Kühlmodul und/oder Trocknungsmodul ggfs. dort befindliche Heizregister oder Vorlufterhitzer) gelangen und die Funktionsweise derselben beeinträchtigen und oder diese zusetzen. Insbesondere kann Luft wenigstens aus der letzten Trocknerzone in Vorlufterhitzer gelangen und diese beeinträchtigen oder zusetzen und oder generell durch Akkumulation in einem Einbau der Luftrückführung die Luftströmung beeinträchtigen. Dies kann soweit gehen, dass es durch das Zusetzen und teilweise Verkleben zu einer verminderten Leistung der Einbauten, wie Heizregister oder Vorlufterhitzer, kommen kann oder generell, durch einen erhöhten Druckverlust und dadurch verringerte Luftströmung, zu einer Beeinträchtigung der Trocknungseffizienz oder zu einem Einfluss auf die Produkteigenschaften kommen kann.

Das Konzept geht davon aus, dass ein Herstellungsverfahren mit einer Luftrückführung entgegen der Förderrichtung des Produktstromes in Form des superabsorbierenden Polymers grundsätzlich vorteilhaft ist, insbesondere zu einer verbesserten Energieeffizienz führen kann. Das Konzept hat erkannt, dass eine Querschnittsvergrößerung in einer Luftentnahmeführung derart signifikant einen Querschnitt des luftabführenden Abschnitts der Luftentnahmeführung vergrößern kann, dass Polymerpartikel und/oder sonstige Partikel (Feinstpartikel, Stäube, Partikel) wirksam in nur reduziertem Maße in die Luftentnahmeführung eingetragen werden und wenn, dann können sich mitgeführte Polymerpartikel und/oder sonstige Partikel (Feinstpartikel, Stäube, Partikel) absetzen. Eine Luftentnahmeleitung der Luftentnahmeführung dient zur Entnahme von Luft als Rückführluft, unterhalb oder oberhalb des Förderbandes aus dem Trockneraufbau und zur Führung der entnommenen Rückführluft luftstromabwärtig in Richtung der Luftrückführung, insbesondere in Richtung eines Austragsabschnitts der Luftentnahmeführung und weiter zu einem luftzuführenden Luftzuführ-Abschnitt der Luftrückführung; erfindungsgemäß über Einbauten wie Heizregister , Wärmetauscher, Rekuperatoren od. dgl., vorzugsweise mittels einem oder mehreren Fördermitteln für die Rückführluft wie eine Ansaugung, einem Verdichter, einem Förderer, einem Ventilator etc. und sonstigen Einbauten.

Der luftstromaufwärtige Abschnitt der Luftentnahmeleitung hat einen Querschnitt zur Aufnahme der entnommenen Luft mit einer luftstromaufwärtigen Strömungsgeschwindigkeit. Ein luftstromabwärtiger Abschnitt der Luftentnahmeleitung soll gemäß dem Konzept einen vergrößerten luftstromabwärtigen Querschnitt aufweisen.

In einer bevorzugten ersten Variante ist eine Querschnittsvergrößerung in einem luftabführenden Abschnitt der Luftentnahmeführung derart vorgesehen, dass die Rückführluft wenigstens in dem luftabführenden Abschnitt der Luftentnahmeführung generell mit einer verringerten Strömungsgeschwindigkeit abgeführt wird, insbesondere mit einer verringerten Strömungsgeschwindigkeit, die geringer ist als an einem luftstromaufwärtigen Querschnitt einer Luftentnahmeleitung und/oder einer Eintragsgeschwindigkeit am Eintrags-Abschnitt. Dies vermeidet dann gemäß dem Konzept, dass Polymerpartikel und andere Partikel gemäß der ersten Variante, dass diese weitertransportiert werden.

In einer zweiten Variante ist bereits eine Eintragsgeschwindigkeit am Eintrags-Abschnitt niedrig, insbesondere stark herabgesetzt. In dem Fall ist die verringerte Strömungsgeschwindigkeit, insbesondere aufgrund der im obigen Sinne signifikanten Querschnittsvergrößerung, signifikant geringer als an einem luftstromabwärtigen Querschnitt einer Luftentnahmeleitung. Letzteres führt dann gemäß dem Konzept zu einem bereits verringerten Einsaugen von Polymerpartikeln und anderen Partikeln gemäß der zweiten Variante.

Das Konzept nutzt insgesamt, dass an einer Querschnittsvergrößerung der statische Druck erhöht wird bzw. die Strömungsgeschwindigkeit der Rückführluft, insbesondere der entnommenen Luft, sinkt. Deshalb überwiegt dann in der Luftentnahmeführung --insbesondere in einem vertikal verlaufenden Leitungsabschnitts einer Luftentnahmeleitung-- der statische Druck und die Gewichtskraft der mitgeführten Partikel gegenüber der kinetischen Strömungsenergie und die Partikel fallen aus dem Strom der Rückführluft aus.

Anders ausgedrückt nimmt die Strömungsgeschwindigkeit in der Luftentnahmeführung-insbesondere in einem vertikal verlaufenden Leitungsabschnitt einer Luftentnahmeleitung-- soweit ab, dass der dadurch auf die mitgeführten Partikel wirkende Widerstand von der Schwerkraft überwunden wird und die mitgeführten Partikel ausfallen. Somit ist es bevorzugt, eine Strömung von Rückführluft entlang der Luftentnahmeleitung mit einer vergleichsweise stark variierten, insbesondere im genannten Abschnitt der Luftentnahmeleitung herabgesetzten Strömungsgeschwindigkeit, vorzusehen. Partikel mit großer Partikelgröße (und demzufolge hohem Gewicht) in der Strömung von Rückführluft setzen sich so bereits bei entsprechend geringer Strömungsgeschwindigkeit ab (z.B. gemäß der ersten Variante) und/oder werden erst gar nicht in die Luftentnahmeführung eingebracht (z.B. gemäß der zweiten Variante). Zwar können grundsätzlich Partikel mit sehr kleiner Partikelgröße (und demzufolge sehr geringem Gewicht) eher in die Luftentnahmeführung gelangen; selbst diese setzen sich aber bei entsprechend geringer Strömungsgeschwindigkeit im Bereich der Querschnittsvergrößerung des luftabführenden Abschnitts ab. Je geringer dabei die Strömungsgeschwindigkeit ist, desto eher können sich auch Feinststäube des wasserabsorbierenden Polymerpartikel-Produkts absetzen. Je geringer zudem eine Eintragsgeschwindigkeit am Eintrags-Abschnitt ist, desto weniger Partikel gelangen in die Luftentnahmeführung.

Im Rahmen einer Weiterbildung kann der Wert einer Strömungsgeschwindgkeit an einem Fördermittel für die Rückführluft in der Luftentnahmeführung und/oder der Luftrückführung genutzt werden, um ein Bezugsmaß für eine generell verringerte Strömungsgeschwindigkeit in einer Luftentnahmeführung aufgrund eines vergrößerten Gesamt-Querschnitts und/oder einer verringerten Strömungsgeschwindigkeit an einer Querschnittsvergrößerung in einem luftabführenden Abschnitt der Luftentnahmeführung und/oder einer bereits verringerten Eintragsgeschwindigkeit am Eintrags-Abschnitt der Luftentnahmeführung zu bilden.

Beispielsweise könnte die Eintragsgeschwindigkeit der Rückführluft am Eintrags-Abschnitt der Luftentnahmeführung auf weniger als 50% der Strömungsgeschwindgkeit an einem Fördermittel für die Rückführluft in der Luftentnahmeführung und/oder der Luftrückführung herabgesetzt werden durch eine geeignete Querschnittsvergrößerung am Leitungseintrittsbereich des Eintrags-Abschnitts (beispielsweise wie anhand von FIG. 6 (E) erläutert). Beispielsweise könnte die Strömungsgeschwindigkeit an der Querschnittsvergrößerung in einem luftabführenden Abschnitt der Luftentnahmeführung, insbesondere an einem am Leitungseintrittsbereich, auf weniger als 50% der Strömungsgeschwindigkeit an einem Fördermittel für die Rückführluft in der Luftentnahmeführung und/oder der Luftrückführung herabgesetzt werden durch eine geeignete Querschnittsvergrößerung am luftabführenden Abschnitt, insbesondere an einem am Leitungseintrittsbereich, (beispielsweise wie anhand von FIG. 6A - FIG. 6F erläutert) und geringer sein als eine Eintragsgeschwindigkeit am Eintrags-Abschnitt.

Insbesondere ist der Bandtrockner ein modularer Bandtrockner, der ein Auftragsmodul, eine Anzahl von Trocknungsmodulen und ein Austragsmodul aufweist, wobei das wässrige Polymergel mittels des modularen Bandtrockners in der Anzahl von Trocknungsmodulen getrocknet wird und die Rückführluft in der Luftentnahmeführung vor einem Austragsmodul abgeführt wird. Ein derart aufgebauter modularer Bandtrockner kann auf die Gegebenheiten der Produktionserfordernisse besonders flexibel angepasst werden.

Erfindungsgemäß wird die Rückführluft an einer in der Förderrichtung letzten Trocknerzone und/oder einer anderen Trocknerzone im in Förderrichtung hinteren Bereich des Trockneraufbaus abgeführt, wobei der Abschnitt der Luftentnahmeführung mit der letzten Trocknerzone und/oder der anderen Trocknerzone strömungsverbunden ist. Die in Förderrichtung letzte Trocknerzone ist bevorzugt mittels eines in Förderrichtung letzten Trocknermoduls vor einem Austragsmodul gebildet. Insbesondere hat es sich als vorteilhaft erwiesen, dass der Abschnitt der Luftentnahmeführung mit einer Kühlzone verbunden ist; d.h. mit einer Trocknerzone, die ohne einen Wärmeeintrag in die wasserabsorbierenden Polymerpartikel ausgebildet ist, bei der diese also kälter austreten als eintreten. Der luftabführende Abschnitt lässt sich vorteilhaft in der Luftentnahmeführung integrieren und/oder an die Luftrückführung strömungsverbindend anschließen.

Erfindungsgemäß ist der Abschnitt der Luftentnahmeführung mittels eines vertikal verlaufenden Leitungsabschnitts einer Luftentnahmeleitung gebildet, wobei der vertikal verlaufende Leitungsabschnitt der Luftentnahmeleitung die Querschnittsvergrößerung in Form eines oder mehrerer querschnittsvergrößernder Luftführungsmittel aufweist. Insbesondere in einem vertikal verlaufenden Leitungsabschnitt einer Luftentnahmeleitung in der Luftrückführung kommt die Gewichtskraft der mitgeführten Partikel besonders zum Tragen, sodass diese bei verringerter kinetischer Energie der Luftströmung infolge der Querschnittsvergrößerung aus dem Strom der Rückführluft ausfallen; d.h. nicht mehr von diesem mitgerissen oder getragen werden können. Dadurch kann eine schwerkraftunterstützte Partikelrückführung besonders vorteilhaft zum Tragen kommen. Insbesondere ist der vertikal verlaufende Leitungsabschnitt einer Luftentnahmeleitung an der letzten Trocknerzone, insbesondere am in Förderrichtung letzten Trocknungsmodul, angeschlossen.

Der Abschnitt kann jedoch auch als Teil der Luftentnahmeführung und/oder Luftrückführung mittels eines vertikal und/oder horizontal verlaufenden Leitungsabschnitts der Luftentnahmeleitung und/oder Luftrückführleitung gebildet sein, wobei der vertikal und/oder horizontal verlaufende Leitungsabschnitt der Luftentnahmeleitung und/oder Luftrückführleitung die Querschnittsvergrößerung als ein oder mehrere querschnittsvergrößernde Luftführungsmittel aufweist. Grundsätzlich kann der Abschnitt als Teil der Luftentnahmeführung und/oder Luftrückführung mittels eines beliebig orientiert verlaufenden Leitungsabschnitts der Luftentnahmeleitung und/oder Luftrückführleitung gebildet sein.

Unter einem querschnittvergrößernden Luftführungsmittel ist grundsätzlich eine Konstruktion und/oder Geometrie des Leitungsabschnitts zu verstehen, die dazu ausgebildet ist einen stromabwärtigen Querschnitt des Leitungsabschnitts gegenüber einem stromaufwärtigen Querschnitt des Leitungsabschnitts derart aufzuweiten, dass die Strömungsgeschwindigkeit einer Rückführluft in dem stromabwärtigen Querschnitt des Leitungsabschnitts verringert ist im Vergleich zu einer Strömungsgeschwindigkeit der Rückführluft in dem stromaufwärtigen Querschnitt. Allgemein begrenzt das Luftführungsmittel dazu den Strömungsweg der Rückführluft in geeigneter Weise, um eine Senkung der Strömungsgeschwindigkeit gemäß dem Bernoulli-Prinzip zu erreichen.

Grundsätzlich kann der Abschnitt der Luftentnahmeführung mit der Querschnittsvergrößerung --d. h. mit dem Anschluss eines oder mehrerer querschnittsvergrößernder Luftführungsmittel-- durch einen Leitungsabschnitt einer Luftentnahmeleitung gebildet sein, bei dem die Querschnittsvergrößerung in Form eines oder mehrerer querschnittsvergrößernder Luftführungsmittel, die auf einer Höhe angeordnet sind, die oberhalb des Förderbandes oder unterhalb des Förderbandes liegt.

Der Anschluss eines querschnittsvergrößernden Luftführungsmittels in Form wenigstens einer Bypassleitung, wenigstens einer Setzkammer und/oder wenigstens eines Fliehkraftabscheiders eignet sich bevorzugt oberhalb des Förderbandes; dies bereits aus baulichen Gründen. Der Anschluss eines querschnittsvergrößernden Luftführungsmittels in Form eines querschnittsgroßen Leitungseintrittsbereichs wie eines querschnittserweiterten Lufteintritts oder dergleichen Ansaugbereichs in die Luftentnahmeführung, wie z.B. eines zylindrischen Strömungskanals oder einer konisch aufgeweiteten Strömungskanalausformung in der Luftentnahmeleitung eignet sich bevorzugt unterhalb des Förderbandes; insbesondere kann ein querschnittsgroßer Leitungseintrittsbereich am Eintrags-Abschnitt zur Bildung eines im Querschnitt vergrößerten Ansaugbereichs angeordnet sein. Luftführungsmittel können oberhalb des Bandes angeschlossen werden. Luftführungsmittel können auch unterhalb des Bandes angeschlossen werden und sind insbesondere dadurch möglich, dass die Luft im Gehäuse des Trockneraufbaus zirkuliert und somit der Luftvolumenstrom mit den mitgerissenen Partikeln bereits nach unten abgeführt wird.

Besonders bevorzugt ist der luftabführende Abschnitt, der die Querschnittsvergrößerung aufweist, durch einen Leitungsabschnitt einer Luftentnahmeleitung gebildet, insbesondere an einer letzten Trocknerzone, insbesondere an einem in Förderrichtung letzten Trocknungsmodul, dem Endmodul, gebildet. Die folgenden bevorzugten weiterbildenden Varianten von Luftführungsmitteln lassen sich bevorzugt allein aber auch in Kombination realisieren.

Im Rahmen einer besonders bevorzugten ersten weiterbildenden Variante ist ein Luftführungsmittel gebildet mit einem Anschluss wenigstens einer ersten Bypassleitung an dem Leitungsabschnitt der Luftentnahmeleitung zur Bildung eines ersten luftabführenden Abschnitts mit Querschnittsvergrößerung, wobei die wenigstens eine erste Bypassleitung zur Luftentnahme aus dem Trockneraufbau ausgebildet ist, insbesondere oberhalb des Förderbandes. Vorzugsweise weist die Luftentnahmeleitung eine erste Drossel und/oder eine zweite Drossel auf und/oder eine Luftrückführleitung weist eine Gesamt-Drossel auf. Diese Variante lässt sich mit vergleichsweise geringem baulichen Aufwand realisieren. Insbesondere lässt sich eine Strömung von Rückführluft mittels der Drosseln vergleichsweise flexibel einstellen. In der ersten Variante ist demgemäß der luftstromaufwärtige Querschnitt mit dem zusätzlichen Querschnitt wenigstens eines internen Bypasses gebildet. Das ist vorteilhaft, denn es wird sogar intern aufgewärmte und bereits gefilterte Luft in die Rückführluft genommen, da diese Luft durch das Bett des Produktes von getrockneten wasserabsorbierenden Polymerpartikeln geführt wurde. Es können insbesondere ein, zwei oder mehr erste Bypassleitungen zur Luftentnahme aus dem Trockneraufbau vorgesehen sein. Insbesondere sind eine oder mehrere der Drosseln als Regeldrosseln ausgebildet.

Im Rahmen einer besonders bevorzugten zweiten weiterbildenden Variante ist ein Luftführungsmittel gebildet mit einem Anschluss wenigstens einer zweiten Bypassleitung an dem Leitungsabschnitt der Luftentnahmeleitung zur Bildung eines zweiten luftabführenden Abschnitts mit Querschnittsvergrößerung, wobei die wenigstens eine zweite Bypassleitung zur Luftzufuhr von Frischluft aus der Umgebung ausgebildet ist, insbesondere oberhalb des Förderbandes. Vorzugsweise weist die Luftentnahmeleitung eine erste Drossel und/oder eine Luftrückführleitung weist eine Gesamt-Drossel und/oder eine Zuluft-Drossel auf. Diese Variante lässt sich ebenfalls mit vergleichsweise geringem baulichen Aufwand realisieren und ermöglicht zudem den Zustrom von Frischluft zur Luftrückführung. Insbesondere lässt sich eine Strömung von Rückführluft mittels der Drosseln vergleichsweise flexibel einstellen. In der zweiten Variante ist der luftstromabwärtige Querschnitt bevorzugt der zusätzliche Querschnitt eines externen Bypasses. Das ist zwar aus Sicht einer Energieeffizienz (denn es wird kalte Luft zugeführt und die Fördermenge von aufgewärmter Luft sinkt) nicht optimal, jedoch grundsätzlich auch möglich. Es können insbesondere ein, zwei oder mehr zweite Bypassleitungen zur Luftzufuhr von Frischluft aus der Umgebung vorgesehen sein. Insbesondere sind eine oder mehrere der Drosseln als Regeldrosseln ausgebildet.

Eine erste Form einer oder mehrerer querschnittsvergrößernder Maßnahmen betrifft somit wenigstens einen Bypass. Ein interner Bypass für Rückführluft oder ein externer Bypass dient zur Minderung der Strömungsgeschwindigkeit im luftstromaufwärtigen Teil der Luftentnahmeleitung, also bei einer vertikalen Luftentnahmeleitung unten; d.h. Partikel werden erst gar nicht eingesaugt.

Bevorzugt weist eine Luftrückführung einen Bypass auf, wobei der Bypass derartig gestaltet ist, dass die Rückführluft abgeführt wird. Insbesondere kann dies, muss aber nicht, zu einer entlang der Luftrückführung veränderlichen und/oder variierenden Strömungsgeschwindigkeit führen. Die Weiterbildung greift auf, dass der Bypass hinsichtlich seiner Einlassöffnung für die Rückführung des Gesamtluftstroms variiert werden kann. Bevorzugt aber nicht notwendigerweise kann der Bypass auch hinsichtlich seines Querschnittes variiert werden und somit kann dieser generell die Strömungsgeschwindigkeiten beeinflussen, um ein Absetzen von Partikeln zu erreichen. Die variable Querschnittsvergrößerung bzw. Strömungsgeschwindigkeitsverringerung ermöglicht es in einer bevorzugten Weiterbildung, den Absetzprozess bzw. die Rückführung der Rückführluft zu beeinflussen in Abhängigkeit von Prozessparametern.

Bevorzugt umfasst die Luftentnahmeführung eine Luftentnahmeleitung mit wenigstens einer Bypassleitung mit einer variablen Querschnittsvergrößerung. Diese Weiterbildung führt zu einer Luftentnahmeleitung mit einer zusätzlichen Bypassleitung; dies ist besonders vorteilhaft, um variable Strömungsgeschwindigkeiten einzustellen. Die variable Querschnittsvergrößerung ermöglicht es, den Rückführprozess aktiv hinsichtlich der Vermeidung von Feinstäuben in der Umluft einzustellen. In Abhängigkeit von der Schüttgutdichte bzw. der vorliegenden Partikelgrößen können damit die entsprechenden Querschnitte eingestellt werden, um die Strömungsgeschwindigkeit derart zu verringern, dass die Partikel nicht mitgerissen werden.

Eine zweite Form einer oder mehrerer querschnittsvergrößernder Maßnahmen betrifft einen Absetzbereich oder dergleichen das Absetzen von Partikeln unterstützende oder herbeiführende Einbauelement.

Im Rahmen einer besonders bevorzugten dritten weiterbildenden Variante ist ein Luftführungsmittel gebildet mit einem Anschluss wenigstens einer Setzkammer oder wenigstens eines Fliehkraftabscheiders in der Luftentnahmeleitung zur Bildung eines dritten luftabführenden Abschnitts mit Querschnittsvergrößerung, insbesondere oberhalb des Förderbandes. Vorzugsweise weist die Luftentnahmeleitung eine erste Drossel und/oder eine Luftrückführleitung weist eine Gesamt-Drossel auf. Diese Variante lässt sich mit etwas höherem baulichen Aufwand realisieren und ermöglicht dabei eine sehr effektive und einstellbare schwerkraftbasierte Abtrennung von Partikeln aus einer Rückführluft in der Luftentnahmeleitung Insbesondere lässt sich eine Strömung von Rückführluft mittels der Drosseln zusätzlich flexibel einstellen. Der Fliehkraftabscheider ist bevorzugt derartig gestaltet, insbesondere steuerbar gestaltet, dass sich mitgeführte Polymerpartikel absetzen können. Fliehkraftabscheider werden unter anderem auch Zyklone genannt. Auch kann eine Setzkammer Anwendung finden. Dabei wird Luft durch deren eigene Strömungsgeschwindigkeit und der entsprechenden konstruktiven Gestaltung des Abscheiders in eine Drehbewegung versetzt. Die auf die Partikel wirkenden Zentrifugalkräfte beschleunigen diese radial nach außen und werden dadurch getrennt und nach innen geleitet, abgeführt. Ein Zyklon ist vor allem hinsichtlich des Einbaus vorteilhaft, da bei der Umlenkrolle und dem damit verbundenen Brechen des stückigen Polymergels vermehrt Feinstpolymerpartikel auftreten können. Das Austragsmodul bietet oberhalb des Förderbandes, insbesondere oberhalb einer Umlenkrolle des Förderbandes, die Möglichkeit, ein weiteres konstruktives Element einzubringen, ohne die Funktionsweise oder die zurückgeführten Luftströme hinsichtlich der Rückführ- und/oder Umluftleitungen, Heizregister etc. übermäßig zu beeinflussen. Insbesondere sind eine oder mehrere der Drosseln als Regeldrosseln ausgebildet.

Im Rahmen einer besonders bevorzugten vierten weiterbildenden Variante ist ein Luftführungsmittel gebildet mit einem Anschluss wenigstens eines querschnittsgroßen Leitungseintrittsbereichs, z.B. eines zylindrischen, ovalen, eckigen, insbesondere quadratischen oder rechteckigen, Strömungskanals und/oder einer sich aufweitenden Strömungskanalausformung in der Luftentnahmeleitung zur Bildung eines vierten luftabführenden Abschnitts mit Querschnittsvergrößerung insbesondere unterhalb des Förderbandes. Insbesondere weist die Luftentnahmeleitung eine erste Drossel und/oder eine Luftrückführleitung eine Gesamt-Drossel auf. Diese Variante lässt sich mit sehr geringem baulichen Aufwand realisieren und ermöglicht es dabei bereits den Eintrag von Partikeln in der Luftentnahmeleitung herabzusetzen. Insbesondere lässt sich eine Strömung von Rückführluft mittels der Drosseln zusätzlich flexibel einstellen. Die vierte Variante betrifft somit eine oder mehrere querschnittsvergrößernde Maßnahmen mittels einer Aufweitung einer Luftentnahmeleitung. Insbesondere sind eine oder mehrere der Drosseln als Regeldrosseln ausgebildet.

Im Rahmen einer weiteren Weiterbildung umfasst die Luftentnahmeführung eine Luftentnahmeleitung mit einem Luftführungsmittel und einer Drossel, insbesondere mit einer Bypassleitung und/oder einer ersten Drossel unterhalb des Förderbandes und/oder mit einer zweiten Drossel oberhalb des Förderbandes. Eine Drossel kann eine Drosselklappe zur Aktivregelung aufweisen. Diese vorteilhafte Weiterbildung kann neben der Bypassleitung, welche bereits eine variable Querschnittsvergrößerung darstellen kann, eine zusätzliche Vorrichtung aufweisen, welche die Strömungsgeschwindigkeit der Gesamtluft über eine Luftentnahmeführung regeln kann. Durch die Einführung von Drosselklappen oder dergleichen Drosseln bei einer pneumatischen Förderung können die Strömungsgeschwindigkeiten eingestellt werden. Insbesondere kann bei einer Anbringung einer Drossel am Trockneraufbau des Bandtrockners eine drosselbare Klappenöffnung eine zusätzliche Maßnahme zum Absetzen mitgeführter Partikel bilden. Die Partikel können sich im unteren Bereich einer Bypassleitung absetzen und werden dann nicht über die Luftentnahmeleitung in die Heizregister geführt. Mittels einer geführten Drosselöffnung oberhalb und/oder unterhalb des Förderbandes kann eine zusätzliche Optimierung hinsichtlich der Feinstäube bzw. der einzustellenden Strömungsgeschwindigkeiten erreicht werden.

Bevorzugt wird Umluft in einer Anzahl von Trocknerzonen, umfassend eine in Förderrichtung letzte Trocknerzone, durch das Polymergel zirkuliert. Grundsätzlich ist die Zirkulationsrichtung von Umluft von unten nach oben durch das Polymergel von Vorteil, da dieses eine Filterwirkung hat und somit der Feinstaubaustrag an der Luftentnahmeführung reduziert werden kann. Das Herstellungsverfahren kann somit eine optimierte Luftabführung ermöglichen mit einem möglichst geringen Partikelaustrag.

Insbesondere wird die Umluft wenigstens teilweise als Rückführluft aus der in Förderrichtung letzten Trocknerzone mittels der Luftentnahmeführung abgeführt. Anders ausgedrückt wird Umluft vor allem in der in Förderrichtung letzten Trocknerzone durch das Polymergel zirkuliert. Zum Zirkulieren der Umluft weist die letzte Trocknerzone mindestens einen Umluftventilator auf. Die letzte Trocknerzone kann auch eine Zuführung für Frischluft und eine Abführung für Abluft aufweisen. An die letzte Trocknerzone kann auch zum Abführen der Umluft mindestens eine Luftentnahmeführung anschließen um Rückführluft zu entnehmen. Ein Umluftventilator ist bevorzugt derart gestaltet, dass eine Luftzirkulation von Umluft in der letzten Trocknerzone mit einem Teil an Umgebungsluft durch das Polymergel möglich ist und zirkulierte Umluft wenigstens teilweise mit der Rückführluft in eine Luftentnahmeführung abführbar ist.

Bevorzugt ist in der letzten Trocknerzone vorgesehen, dass die Umluft mit einem Teil der Umgebungsluft zirkuliert, und zwar derart, dass sie ohne Wärmetauscher durch das Polymergel zirkuliert. Die zirkulierte Umluft trägt dazu bei, dass eine Restfeuchtemenge aus dem Produkt ausgetragen werden kann, dabei wirkt das perforierte Förderband, und bevorzugt auch das darauf liegende getrocknete Polymergel in Form eines Strangs,also das teilgetrocknete Polymergel und das getrocknete Polymergel des Trockenkuchens und die darin enthaltenen "getrockneten Polymerpartikel"-- als eine Art Filter, und die Fein- und Feinstäube von getrocknetem Polymergel, die durch die Zirkulation entstehen können, bleiben auf dem oberen Förderband sitzen und werden erst am Austragsmodul bei einer Umlenkrolle des Förderbandes ausgetragen. Es hat sich insbesondere als vorteilhaft erwiesen, eine Umluft hinsichtlich der Strömungsgeschwindigkeit einzustellen. Die Trocknungsgeschwindigkeit bzw. die vorliegenden Temperaturen als auch die Materialdicke von getrocknetem Polymer auf dem Förderband kann eine Rolle spielen hinsichtlich der im Austragsmodul entstehenden Partikel, insbesondere beim Brechen oder Zerkleinern des superabsorbierenden Polymers entstehenden Partikel.

Eine Weiterbildung geht von einem Bandtrockner zur kontinuierlichen Trocknung wasserabsorbierender Polymerpartikel aus, dabei umfasst der Bandtrockner ein Auftragsmodul und eine letzte Trocknerzone vor dem Austragsmodul, insbesondere eine mittels einem Endmodul gebildete letzte Trocknerzone. Bevorzugt weist das Endmodul mindestens einen Umluftventilator und mindestens eine Luftentnahme auf; dies zur Ausbildung einer Umluft-Zirkulation im Endmodul. Der Umluftventilator ist bevorzugt derart gestaltet, dass die Umluft im Endmodul mit einem Teil an Umgebungsluft durch das Polymergel zirkuliert. Zusätzlich ist bevorzugt vorgesehen, dass zirkulierte Umluft in eine Luftentnahmeführung abgeführt wird. Dabei hat es sich als besonders vorteilhaft erwiesen, dass die Umluft zunächst im Endmodul bzw. in der zugeordneten letzten Trocknerzone zirkuliert wird.

Bevorzugt weist eine Luftentnahmeführung einen Absetzbereich, insbesondere in oder angeschlossen an der Luftentnahmeleitung, auf, der ausgebildet ist, die Strömungsgeschwindigkeit der Rückführluft derart zu reduzieren, dass sich in der Rückführluft mitgeführte Polymerpartikel, insbesondere auch Feinstpolymerpartikel, absetzen können. Insbesondere ist der Absetzbereich derart gewählt, dass diese in den Trocknungsprozess rückführbar sind. Diese Weiterbildung greift den Gedanken auf, dass eine beruhigte Zone innerhalb oder in Verbindung mit einer Luftentnahmeleitung, die Möglichkeit einer bis zum Strömungsstillstand variierten Strömungsgeschwindigkeit für eine Strömung der Rückführluft in der Luftentnahmeführung bietet, insbesondere in der Luftentnahmeleitung bietet. Ein Absetzen selbst sehr leichter Feinstpartikel wird ermöglicht. Der Absetzbereich, beispielsweise in Form einer Absetzkammer, bietet auch die Möglichkeit, indirekt die Geschwindigkeit der Strömung der Rückführluft zu beeinflussen.

Bevorzugt weist die Luftrückführung, insbesondere die Luftentnahmeführung, insbesondere eine Luftentnahmeleitung, mindestens ein Filterelement auf. Das Filterelement ist eine Möglichkeit, die Partikel aufzufangen, wenn alternativ zur oder zusätzlich zu anderen konstruktiven Maßnahmen ein zusätzlicher Filter hinsichtlich der Feinstäube in ihrer Partikelgröße vorteilhaft sind. Bei Prozessparametern, wo eine erhöhte Luftmenge zurückgeführt werden muss, ohne damit die Strömungsgeschwindigkeit derart zu reduzieren, dass sich alle Feinstäube absetzen, ermöglicht diese Weiterbildung eine Reduzierung der Feinstpartikel in den Heizregistern bei der Luftrückführung.

Die sich abscheidenden bzw. aus einem Luftstrom ausfallenden Partikel im Bereich eines Anschlusses eines Luftführungsmittels --insbesondere einer ersten oder einer zweiten Bypassleitung, einer Setzkammer oder eines Fliehkraftabscheiders oder eines querschnittsgroßen Leitungseintrittsbereichs, z.B. eines zylindrischen ovalen, eckigen, insbesondere quadratischen oder rechteckigen, Strömungskanals und/oder eines sich aufweitenden Diffusors, Trichters oder dergleichen Strömungskanalausformung, insbesondere auch ein Absetzbereich oder ein Filter-- können auf verschiedene Weise behandelt werden. Sie können direkt wieder in den Produktstrom gegeben werden, d. h. fallen z.B. in den Bunker, z.B. direkt aus dem Fliehkraftabscheider. Sie können zunächst oder endgültig aus dem Prozess genommen werden, d.h. fallen in einen Auffang, wie ein BigBag oder dergleichen; gegebenenfalls können sie dann wieder zugeführt werden. Sie können in dem Prozess gehalten werden ohne am Produktstrom teilzunehmen; das erfordert eine Reinigung des Totraumes in dem sich die Partikel zunächst zurückführen lassen und dann ggfs. eine Wiederzuführung der Partikel.

Das Konzept lässt sich insbesondere umsetzen mit einem Herstellungsverfahren, aufweisend die Schritte:
- Prozessieren einer Monomer-Lösung oder -Suspension unter Polymerisation zu einem wässrigen Polymergel,
- Trocknen des wässrigen Polymergels in einem Bandtrockner, wobei der Bandtrockner ein zirkulierendes Transportband hat und das wässrige Polymergel auf dem Transportband gefördert wird.

Bevorzugt ist dabei vorgesehen, dass
- das Transportband als ein Plattentransportband gebildet ist, aufweisend eine Anzahl von Bandplatten die an einer Gelenklinie einer Gelenkkonstruktion getrennt sind und wobei jede Bandplatte eine Oberfläche zur Aufnahme des wässrigen Polymergels hat.

Insbesondere kann dieses Herstellungsverfahren umfassen: Prozessieren einer Monomer-Lösung oder -Suspension unter Polymerisation zu einem vernetzten wässrigen Polymergel.

Im Rahmen einer besonders bevorzugten Weiterbildung wurde erkannt, dass das Konzept der Erfindung oder einer seiner Weiterbildungen von besonderem Vorteil ist für einen speziellen Herstellungsprozess für Superabsorber, insbesondere für einen speziellen Herstellungsprozess für ein Polymergel für Superabsorber, der im folgenden mit einigen Weiterbildungen beschrieben wird und zum Teil auch in WO2006/100300 A1 näher erläutert ist, deren Offenbarungsgehalt hiermit durch Zitat in den Offenbarungsgehalt der vorliegenden Anmeldung aufgenommen ist.

Insbesondere betrifft dies ein Herstellungsverfahren zur Herstellung wasserabsorbierender Polymerpartikel mit Polymerisation einer Monomer-Lösung oder -Suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und optional ein oder mehrere wasserlösliche Polymere.

Die wasserabsorbierenden Polymerpartikel werden mit Polymerisation einer Monomer-Lösung oder -Suspension hergestellt und sind wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure und/oder deren Salze. Ganz besonders bevorzugt ist Acrylsäure und/oder deren Salze.

Weitere geeignete Monomere a) sind beispielsweise ethylenisch ungesättigte Sulfonsäuren, wie Styrolsulfonsäure und 2-Acrylamido-2-methylpropansulfonsäure (AMPS), und/oder deren Salze.

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew. % Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten Polymerisationsinhibitoren, vorzugsweise Hydrochinonhalbether, als Lagerstabilisator.

Die Monomer-Lösung enthält vorzugsweise bis zu 250 Gew.-ppm, bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf das unneutralisierte Monomer a). Beispielsweise kann zur Herstellung der Monomer-Lösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxyliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,2 bis 0,5 Gew.-%, jeweils bezogen auf Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite^{®} FF6 und Brüggolite^{®} FF7 (Brüggemann Chemicals; Heilbronn; Deutschland) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Vorzugsweise wird eine wässrige Monomer-Lösung verwendet. Der Wassergehalt der Monomer-Lösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomer-Suspensionen, d.h. Monomer-Lösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomer-Lösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomer-Lösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomer-Lösung oder -Suspension entstehende Polymergel durch beispielsweise gegenläufige Rührwellen kontinuierlich zerkleinert, wie in WO 2001/038402 A1 beschrieben. Die Polymerisation auf dem Förderband wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Zur Verbesserung der Trocknungseigenschaften kann das mittels eines Kneters erhaltene zerkleinerte Polymergel zusätzlich extrudiert werden.

Es ist aber auch möglich eine wässrige Monomer-Lösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2, WO 2008/052971 A1 und WO 2011/026876 A1 beschrieben.

Die Säuregruppen eines erhaltenen Polymergels sind teilweise neutralisiert. Die Neutralisation wird vorzugsweise auf der Stufe der Monomeren durchgeführt. Dies geschieht durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden wässrigen Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomer-Lösung zugesetzt und der gewünschte Endneutralisationsgrad erst nach der Polymerisation auf der Stufe des wässrigen Polymergels eingestellt wird. Wird das wässrige Polymergel zumindest teilweise nach der Polymerisation neutralisiert, so wird das wässrige Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das wässrige Polymergel wird dann vorzugsweise mit einem Bandtrockner getrocknet bis sich ein gewünschter, bevorzugt niedriger Wassergehalt einstellt, insofern insbesondere ein Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Mass Loss Upon Heating" bestimmt wird. Bei einer zu hohen Restfeuchte weist das getrocknete Polymergel eine zu niedrige Glasübergangstemperatur Tg auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als gemahlene Polymerpartikel abgetrennten superabsorbierenden Polymerpartikel beträgt vorzugsweise mindestens 200 µm, besonders bevorzugt von 250 bis 600 µm, ganz besonders von 300 bis 500 µm. Die mittlere Partikelgröße der Polymerpartikel kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Polymerpartikeln mit einer Partikelgröße von größer 150 µm beträgt vorzugsweise mindestens 90 Gew.-%, besonders bevorzugt mindestens 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher abgetrennt und in das Herstellungsverfahren rückgeführt. Die Rückführung erfolgt vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Herstellungsverfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise im letzten Drittel des Knetreaktors zugesetzt.

Werden die zu kleinen Polymerpartikel sehr früh zugesetzt, beispielsweise bereits zur Monomer-Lösung, so wird dadurch die Zentrifugenretentionskapazität (CRC) der erhaltenen wasserabsorbierenden Polymerpartikel gesenkt. Dies kann zwar beispielsweise durch Anpassung der Einsatzmenge an Vernetzer b) kompensiert werden. Die zu kleinen Polymerpartikel können auch später zugesetzt werden, könnten dann aber ggfs. nur unzureichend eingearbeitet werden.

Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von höchstens 600 µm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 5 Gew.-%, besonders bevorzugt 0,02 bis 2 Gew.-%, ganz besonders bevorzugt 0,05 bis 1 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im Herstellungsverfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Hydroxid, Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat, Citrat und Lactat, möglich. Es sind auch Salze mit unterschiedlichen Gegenionen möglich, beispielsweise basische Aluminiumsalze, wie Aluminiummonoacetat oder Aluminiummonolaktat. Aluminiumsulfat, Aluminiummonoacetat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1 Gew.-%, vorzugsweise 0,005 bis 0,5 Gew.-%, besonders bevorzugt 0,02 bis 0,2 Gew.-%. jeweils bezogen auf die Polymerpartikel.

Die Oberflächennachvernetzung wird so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar^{®} Mischer (Gebr. Lödige Maschinenbau GmbH; Paderborn; Deutschland), Vrieco-Nauta Continuous Mixer (Hosokawa Micron BV; Doetinchem; Niederlande), Processall Mixmill Mixer (Processall Incorporated; Cincinnati; USA) und Schugi Flexomix^{®} (Hosokawa Micron BV; Doetinchem; Niederlande). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3 Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex^{®} Horizontal Paddle Dryer (Hosokawa Micron GmbH; Leingarten; Deutschland), Hosokawa Bepex^{®} Disc Dryer (Hosokawa Micron GmbH; Leingarten; Deutschland), Holo-Flite^{®} dryers (Metso Minerals Industries Inc.; Danville; USA) und Nara Paddle Dryer (NARA Machinery Europe; Frechen; Deutschland). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und höchstens 60 Minuten.

In einer bevorzugten Ausführungsform der vorliegenden Erfindung werden die oberflächennachvernetzten, wasserabsorbierenden Polymerpartikel nach der thermischen Trocknung gekühlt. Die Kühlung wird vorzugsweise in Kontaktkühlern, besonders bevorzugt Schaufelkühlern, ganz besonders bevorzugt Scheibenkühlern, durchgeführt. Geeignete Kühler sind beispielsweise Hosokawa Bepex^{®} Horizontal Paddle Cooler (Hosokawa Micron GmbH; Leingarten; Deutschland), Hosokawa Bepex^{®} Disc Cooler (Hosokawa Micron GmbH; Leingarten; Deutschland), Holo-Flite^{®} coolers (Metso Minerals Industries Inc.; Danville; USA) und Nara Paddle Cooler (NARA Machinery Europe; Frechen; Deutschland). Überdies können auch Wirbelschichtkühler eingesetzt werden.

Im Kühler werden die oberflächennachvernetzten, wasserabsorbierenden Polymerpartikel auf 20 bis 150°C, vorzugsweise 30 bis 120°C, besonders bevorzugt 40 bis 100°C, ganz besonders bevorzugt 50 bis 80°C, abgekühlt.

Anschließend können die oberflächennachvernetzten, wasserabsorbierenden Polymerpartikel erneut klassiert werden, wobei zu kleine und/oder zu große Polymerpartikel abgetrennt und in das Her-stellungsverfahren rückgeführt werden.

Die oberflächennachvernetzten, wasserabsorbierenden Polymerpartikel können zur weiteren Verbesserung der Eigenschaften beschichtet und/oder nachbefeuchtet werden, insbesondere mit Additiven oder sonstigen Beschichtungen beschichtet und/oder mit Wasser nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die oberflächennachvernetzten, wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%, jeweils bezogen auf die oberflächennachvernetzten, wasserabsorbierenden Polymerpartikel. Durch die Nachbefeuchtung wird die mechanische Stabilität der Polymerpartikel erhöht und deren Neigung zur statischen Aufladung vermindert. Vorteilhaft wird die Nachbefeuchtung im Kühler nach der thermischen Trocknung durchgeführt.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil^{®} 200, und Tenside, wie Span^{®} 20.

Die gemäß dem Herstellungsverfahren hergestellten oberflächennachvernetzten, wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Feuchtegehalt gemäß der von der EDANA empfohlenen Testmethode Nr. WSP 230.2-05 "Mass Loss Upon Heating" bestimmt wird.

Die gemäß dem Herstellungsverfahren hergestellten oberflächennachvernetzten, wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der oberflächennachvernetzten, wasserabsorbierenden Polymerpartikel beträgt weniger als 60 g/g. Die Zentrifugenretentionskapazität (CRC) wird gemäß der von der EDANA empfohlenen Testmethode Nr. WSP 241.2-05 "Fluid Retention Capacity in Saline, After Centrifugation" bestimmt.

Die gemäß dem Herstellungsverfahren hergestellten oberflächennachvernetzten, wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der oberflächennachvernetzten, wasserabsorbierenden Polymerpartikel beträgt weniger als 35 g/g. Die Absorption unter einem Druck von 49,2 g/cm² wird analog der von der EDANA empfohlenen Testmethode Nr. WSP 242.2-05 "Absorption Under Pressure, Gravimetric Determination" bestimmt, wobei statt eines Drucks von 21,0 g/cm² ein Druck von 49,2 g/cm² eingestellt wird.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee und dem Konzept der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee und das Konzept der Erfindung ist nicht beschränkt auf die exakte Form oder das Detail der im folgenden gezeigten und beschriebenen bevorzugten Ausführungsformen oder beschränkt auf einen Gegenstand, die beschränkt wäre im Vergleich zu dem in den Ansprüchen beanspruchten Gegenstand. Bei angegebenen Bemessungsbereichen sollen auch innerhalb der genannten Grenzen beliebige Werte als Grenzwerte offenbart und beliebig einsetzbar und beanspruchbar sein. Weitere Vorteile, Merkmale und Einzelheiten der Erfindung ergeben sich aus der nachfolgenden Beschreibung, der bevorzugten Ausführungsbeispiele sowie anhand der Zeichnung.

Im Einzelnen zeigt die Zeichnung in:
- FIG. 1: eine schematisierte Darstellung eines Umluftbandtrockners gemäß einer besonders bevorzugten ersten Ausführungsform in einem Schnitt entlang der Förderrichtung C;
- FIG. 2: eine schematische Darstellung einer letzten Trocknungszone vor einem Austragsmodul bei einem Umluftbandtrockner der FIG.1 entgegen der Förderrichtung C in einem Schnitt quer zur Förderrichtung C;
- FIG. 3A: eine schematische Darstellung einer letzten Trocknungszone vor einem Austragsmodul bei einem Umluftbandtrockner der FIG.1 in einem Schnitt entlang der Förderrichtung C;
- FIG.3B: eine schematische Darstellung einer letzten Trocknungszone vor einem Austragsmodul bei einem Umluftbandtrockner gemäß einer besonders bevorzugten zweiten Ausführungsform in Abwandlung zur Ausführungsform der FIG.1 in einem Schnitt entlang der Förderrichtung C;
- FIG.4: eine schematische Darstellung eines hinteren Bereichs eines Umluftbandtrockners mit einer letzten Trocknungszone vor einem Austragsmodul entlang der Förderrichtung C gemäß einer besonders bevorzugten dritten Ausführungsform in Weiterbildung der Ausführungsform der FIG.1;
- FIG.5: ein schematisiertes Flussdiagramm für eine besonders bevorzugte Ausführungsform eines Herstellungsverfahrens;
- FIG.6A: schematisch einen grundsätzlichen Aufbau eines querschnittsvergrößernden Luftführungsmittels in einem Leitungsabschnitt einer Luftentnahmeleitung gemäß einer ersten Abwandlung ähnlich der zweiten Ausführungsform;
- FIG.6B: schematisch einen grundsätzlichen Aufbau eines querschnittsvergrößernden Luftführungsmittels in einem Leitungsabschnitt einer Luftentnahmeleitung gemäß einer zweiten Abwandlung analog der zweiten Ausführungsform;
- FIG.6C: schematisch einen grundsätzlichen Aufbau eines querschnittsvergrößernden Luftführungsmittels in einem Leitungsabschnitt einer Luftentnahmeleitung gemäß einer dritten Abwandlung ähnlich der ersten Ausführungsform;
- FIG. 6D: schematisch einen grundsätzlichen Aufbau eines querschnittsvergrößernden Luftführungsmittels in einem Leitungsabschnitt einer Luftentnahmeleitung gemäß einer vierten Abwandlung ähnlich der ersten Ausführungsform;
- FIG. 6E: schematisch einen grundsätzlichen Aufbau eines querschnittsvergrößernden Luftführungsmittels in einem Leitungsabschnitt einer Luftentnahmeleitung gemäß einer fünften Abwandlung ähnlich der ersten Ausführungsform;
- FIG. 6F: symbolisch eine Ausführungsform, bei welcher ein querschnittsvergrößerndes Luftführungsmittel, wie ein in FIG.6A bis FIG.6E gezeigtes querschnittsvergrößerndes Luftführungsmittel, in einem horizontal verlaufenden Leitungsabschnitts umgesetzt ist.

In der Zeichnung sind für gleiche oder ähnliche Teile oder Teile gleicher oder ähnlicher Funktion der Einfachheit halber gleiche Bezugszeichen benutzt.

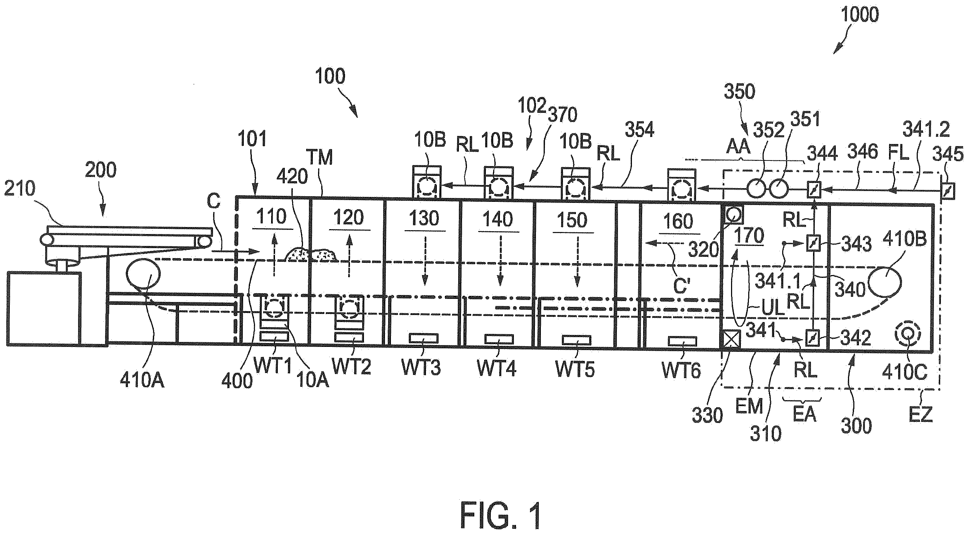

FIG.1 zeigt im Prinzip einen Bandtrockner, hier beispielhaft als ein Umluftbandtrockner 1000, der in der vorliegenden Ausführungsform modular aufgebaut ist. Der Umluftbandtrockner 1000 weist ein Auftragsmodul 200, einen Trockneraufbau 101 mit einem Trocknungsmodul 100 (das auch als TM bezeichnet ist) mit mehreren Trocknerzonen 110, 120, 130, 140, 150, 160, 170 und einem Austragsmodul 300 auf. Beim Umluftbandtrockner 1000 wird Nassgut in Form des wässrigen Polymergels kontinuierlich und gleichmäßig in dem Auftragsmodul 200 auf ein horizontal angeordnetes Förderband 400 aufgegeben und anschließend durchläuft dieses auf dem Förderband 400 das Trocknungsmodul 100, d.h. den Innenraum des Trockneraufbaus 101, in Förderrichtung C. Der Umluftbandtrockner 1000 ist als Einbandtrockner ausgebildet und kann in einer Abwandlung in analoger Weise durch einen Mehrstufentrockner oder einen Mehretagenoder auch einen Mehrbandtrockner ersetzt werden. Insgesamt kann man bei den einzelnen Trocknertypen einen Durchström- von einem Überströmtrockner unterscheiden; der in FIG.1 gezeigte Umluftbandtrockner 1000 ist ein Durchströmtrockner.

Zur Durchführung des Trocknungsverfahrens wird ein Umluftbandtrockner 1000 mit einem endlosen über Trageelemente und mindestens zwei Umlenkrollen, hier eine vordere Umlenkrolle 410A und eine hintere Umlenkrolle 410B, geführten Förderband 400 eingesetzt, von denen vorliegend mindestens eine Umlenkrolle angetrieben und eine verstellbar ist. Die Lagergehäuse der vorderen Umlenkrolle 410A des Förderbandes 400 und die zugehörige mechanische Bandspannvorrichtung befinden sich hier vorliegend im Aufgabemodul 200, die Antriebswelle mit aufgestecktem Bandantrieb im Austragsmodul 300. Auf dem Förderband 400 des Umluftbandtrockners 1000 wird das wässrige Polymergel langsam durch die mehreren hintereinander angeordneten Trocknerzonen 110, 120, 130, 140, 150, 160 und durch die letzte Trocknerzone 170 zum Austragsmodul 300 gefahren. Die den Trocknerzonen 110, 120, 130, 140, 150, 160, 170 zugeordneten Module sind baulich aus mit Profilen versteiften standardisierten Blechen als Boden-, Seiten- und Deckenwandungen gebildet und dabei mit sogenannten Schottblechen unterteilt. Vorliegend ist die letzte Trocknerzone 170 baulich als ein Endmodul EM vor dem Austragsmodul 300 realisiert.

Das Auftragsmodul 200 ist hier mit Profilen versteiften standardisierten Boden- und Seitenblechen gebildet. Die Produktaufgabe 210 kann ein Schwenkband sein, welches insbesondere für empfindliche und schüttfähige Produkte geeignet ist. Weiterhin könnten in Abwandlungen eine Verteilerschnecke oder eine Dreharmaufgabevorrichtung genutzt werden.

Auf der Oberseite des Förderbandes 400 wird das Produkt in Form von wässrigem Polymergel aufgetragen und über das Förderband 400 zum Austragsmodul 300 hin transportiert, bei dem es als getrocknetes superabsorbierendes Polymer 420 mit wasserabsorbierenden Polymerpartikeln ankommt.

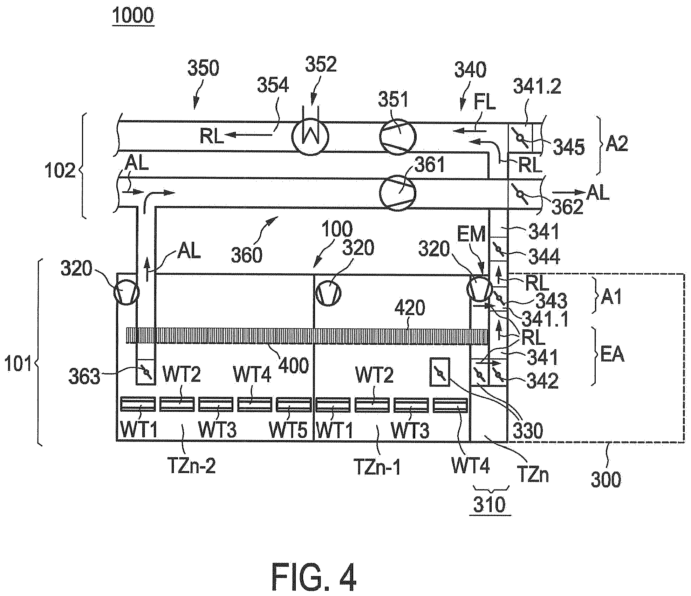

Die Transportbandvarianten sind hier dargestellt als ein einfaches Förderband, können aber auch ein kettengeführtes Drahtgewebeband, ein Scharnierplattenband ein Flechtband oder ein Drahtgewebeband, welches kettenlos geführt wird sein. Das zu trocknende Nassgut in Form von wässrigem Polymergel liegt auf einem hier perforierten Förderband 400 auf und wird von der mit Pfeilen dargestellten Trocknungsluft in unterschiedlicher Strömungsrichtung durchströmt. Das Nassgut in Form von wässrigem Polymergel wird von Trocknungsluft durch- bzw. überströmt während es auf dem Förderband durch den Innenraum des Trockneraufbaus 101 entlang der Förderrichtung C transportiert wird und dadurch getrocknet. Die Trocknungsluft wird zum einen --bevorzugt in einer Ebene quer zur Förderrichtung C-- als Umluft UL geführt, die in FIG.1 durch einen Pfeil in der Trocknerzone beispielhaft symbolisiert ist. Mittels der Führung von Trocknungsluft als Umluft UL, innerhalb einer Trocknerzone, insbesondere innerhalb einer jeden der Trocknerzonen 110, 120, 130, 140, 150, 160, 170 erfährt diese beim mehrfachen Durchgang durch das trocknende wässrige Polymergel eine möglichst hohe Aufsättigung mit Feuchte. Ein gewisser Anteil der Trocknungsluft (in FIG. 1 und FIG. 4 in Gegenstromrichtung C' entgegen der Förderrichtung gezeigt) verlässt als Abluft AL den Umluftbandtrockner 1000 hoch aufgesättigt mit Feuchte und führt somit die aus dem Produkt verdampfte Wassermenge ab; eine entsprechende Abluftführung 360 ist beispielhaft in Bezug auf FIG. 4 erläutert.

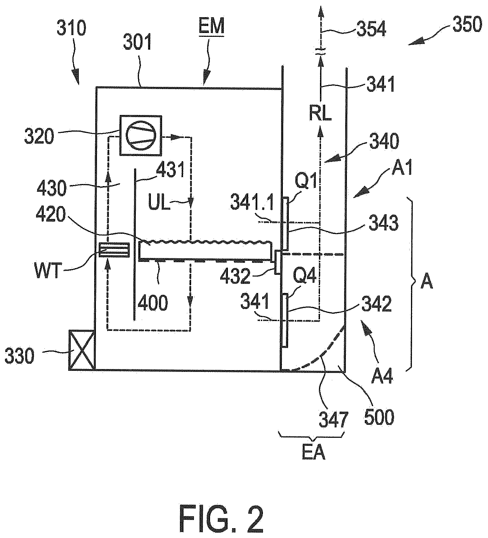

Eine Trocknerzone kann als Teil einer lufttechnischen Kontrollzone zur Einstellung von angemessenen Trocknungsbedingungen verstanden werden, der eine Zu- und Abluft mit einem im Rahmen eines Belüftungsaufbaus 102 ein- oder angebauten Heizregister/Ventilator 10A, 10B und/oder einem Wärmetauscher WT --hierfür jede Trocknerzone 110, 120, 130, 140, 150, 160 mit WT1, WT2, WT3, WT4, WT5, WT6 bezeichnet-- zugeordnet ist; ein diesbezüglich detaillierteres Ausführungsbeispiel ist, ähnlich dem der FIG.1, in Bezug auf FIG.2 erläutert.

In diesem Ausführungsbeispiel der FIG. 1 sind im Trocknungsmodul 100 die Trocknerzonen 110, 120, 130, 140, 150, 160, 170 dargestellt und diese werden weitgehend im Unterdruck und mit einem angemessenen Temperaturverlauf betrieben, der für den gesamten Trockneraufbau 101 eingestellt ist. Dazu erfolgt, wie in FIG. 1 mittels dem Pfeil in Gegenstromrichtung C' symbolisiert, eine Luftführung von Trocknungsluft gegen einen Produktstrom des zu trocknenden wässrigen Polymergels 420 in dessen unmittelbarer Umgebung, d.h. entgegen einer Förderrichtung C des Förderbandes 400 im Bandtrockner in Gegenstromrichtung C`, also im Gegenstrom innerhalb des Trockneraufbaus 101 des Bandtrockners sozusagen ständig u.a. in Kontakt mit dem zu trocknenden wässrigen Polymergel 420 auf dem Förderband 400 aber entgegen dessen Förderrichtung C (Luftführung von Trocknungsluft gegen einen Produktstrom, Gegenstrom).

Jede Trocknerzone kann, muss aber nicht, als ein einziges Trocknermodul realisiert sein. Auch kann jede Trocknerzone, muss aber nicht, mit einer Anzahl von Trocknermodulen realisiert sein. Ein modularer Aufbau kann Vorteile haben, wenn der bauliche Aufbau des Umluftbandtrockners 1000 vereinfacht sein soll; z.B. auch aus Fertigungsgründen. Grundsätzlich ist der Trockneraufbau 101 m.E. auch danach vergleichsweise einfach veränderbar.

Vorliegend sind die Trocknerzonen 110, 120, 130, 140, 150, 160 jeweils mit einem Trocknermodul gebildet und weisen mindestens einen Umluftventilator 10A, 10B, vorteilhafterweise mit einem Heizregister, auf. Dabei kann jede Trocknerzone 110, 120, 130, 140, 150, 160 individuell gesteuert werden. Die Produktanströmung mit Trocknungsluft (bzw. ggfs. Kühlluft) kann variiert werden, so dass die Parameter hinsichtlich der gewünschten Produktqualität entsprechend angepasst werden können. Dabei erfolgt die Anströmrichtung durch das superabsorbierende Polymergel von unten nach oben oder von oben nach unten. Die in FIG. 1 dargestellte Trocknungsanordnung eines Umluftbandtrockners 1000 zeigt, dass in einer, oder hier den vorderen, Trocknerzonen 110 und 120 das Polymergel 420 in Form von wässrigem Polymergel von unten nach oben angeströmt wird und anschließend in den Trocknerzonen 130, 140 und 150 und 160 das Polymergel 420 in Form von superabsorbierendem Polymer von oben nach unten angeströmt wird. Das superabsorbierende Polymer geht dabei durch Trocknung zunehmend über von wässrigem Polymergel zu getrocknetem Polymergel in Form eines brettartigen Strangs.

Die Trocknungszeit ist relativ beeinflussbar durch die Bandgeschwindigkeit des Förderbandes 400, die kontinuierlich verstellbar sein kann. Das Produkt in Form von wasserabsorbierenden Polymerpartikeln, die auf dem Förderband unter Bildung eines brettartigen Strangs aneinander hängen und/oder kleben, wird nach dem Trocknungsverfahren abgeworfen und der brettartige Strang wird gebrochen und anschließend werden die wasserabsorbierenden Polymerpartikel entsprechend der einzustellenden Partikelgröße gemahlen. Das Austragsmodul 300 ist derart ausgerüstet, dass das getrocknete superabsorbierende Polymer 420 als Strang entnehmbar ist, d.h. mit wasserabsorbierenden Polymerpartikeln, die unter Bildung des Strangs zusammenhängen oder zusammenkleben, entnehmbar ist; der Strang rutscht im Bereich der hinteren Umlenkrolle 410B in einen Brecher 410C.

Die erste und zweite Umlenkrolle 410A und 410B sorgen dafür, dass das Förderband 400 unterhalb der Produktschicht --und vorliegend auch innerhalb des Trockneraufbaus 101 (grundsätzlich wäre dies in einer Abwandlung auch außerhalb eines Trockneraufbaus möglich)-- entgegen der Förderrichtung C zurückgeführt wird, d.h. in Richtung der Gegenstromrichtung C`, und wieder in einer Endlosschleife für einen weiteren Auftragung von wässrigem Polymergel zur Verfügung steht. Der Umluftbandtrockner 1000 ist dahingehend konzipiert worden, ein optimales Trocknungsverhalten des aufgebrachten wässrigen Polymergels zu erhalten, dies bei ggfs. verringerter Produktionszeit bzw. erhöhter Durchsatzmenge beim Trocknen und damit ggfs. die Produktionskosten zu reduzieren.

Die gestrichelten Linien in FIG.1 im hinteren Teil des Umluftbandtrockners 1000 kennzeichnen symbolisch eine Endzone EZ, welche die letzte Trocknerzone 170 mit einem Endmodul EM und das Austragsmodul 300 umfasst. Die letzte Trocknerzone 170 wird im Folgenden mit Bezug auf das weiter aufgeführte Bezugszeichen 310 im Einzelnen anhand mehrerer Beispiele der FIG. 2 bis FIG. 7 erläutert. In einer Abwandlung kann die letzte Trocknerzone 170 --in einer Weiterbildung und im Folgenden 310 genannt-- des Umluftbandtrockners 1000 auch als ein Teil des Austragsmoduls 300 oder integral mit dem Austragsmodul 300 im Rahmen einer Endzone EZ gebildet sein. Gemäß FIG. 1 wird im Bereich der letzten Trocknerzone 170 Umluft UL durch das getrocknete superabsorbierende Polymer 420 zirkuliert. Teilweise wird Rückführluft RL, wie in FIG. 2 detailliert dargestellt, mittels einer Luftentnahmeführung 340 entnommen. Bevorzugt kann entlang der Luftentnahmeführung 340 eine Strömungsgeschwindigkeit der Rückführluft RL variieren. Die Rückführluft RL wird über die vorgenannten im Rahmen eines Belüftungsaufbaus 102 ein- oder angebauten Heizregister/Ventilator 10A, 10B und/oder einem Wärmetauscher wieder jedenfalls den Trocknerzonen 110, 120, 130, 140, 150 optional auch der Trocknerzone 160 wieder zugeführt.

Vorliegend im unteren Teil des Förderbandes ist in der letzten Trocknerzone 170 ein Zuluftelement 330 angeordnet. Ein Umluftventilator 320 oder dergleichen Luftfördermittel ist vorliegend im oberen Bereich des Förderbandes 400 angeordnet. Damit wird Umluft UL durch die getrockneten wasserabsorbierenden Polymerpartikel zirkuliert, wie dies in FIG.1 durch die Pfeilrichtung für die Umluft UL angedeutet ist. Damit ist ein vorteilhaftes Trocknungsverhalten auch in der letzten Trocknungszone 170 gewährleistet ist.

Dem Konzept der Erfindung folgend ist in dem in FIG. 1 dargestellten Ausführungsbeispiel zur Abführung von Rückführluft RL eine Luftentnahmeführung 340 mit der letzten Trocknerzone 170 strömungsverbunden und eine Luftentnahmeleitung 341 ist daran angeschlossen. Dazu ist eine Luftentnahmeleitung 341 der Luftentnahmeführung 340 und eine Bypassleitung 341.1 mit einer variablen Querschnittsvergrößerung angeschlossen. Die entsprechende Luftentnahmeführung 340 ist im Endmodul EM integriert. Die Bypassleitung 341.1 schließt ebenfalls an die Luftentnahmeleitung 341 an und ist derart gestaltet, dass die Rückführluft RL entlang eines vorzugsweise vertikalen Leitungsabschnitts der Luftentnahmeleitung 341 mit einer variierenden Strömungsgeschwindigkeit abgeführt wird.

Die Luftentnahmeführung 340 ist mit einer Luftrückführung 350 strömungsverbunden und dazu ist die Luftentnahmeleitung 341 an eine Luftrückführleitung 354 angeschlossen. Desweiteren ist bei der Luftrückführung 350 in FIG.1 vorgesehen, dass Frischluft FL über eine zur Luftrückführleitung 354 angeschlossene Zuluftleitung 346 zuführbar ist. Die Luftentnahmeleitung 341, die Bypassleitung 341.1 und die Zuluftleitung 346 haben im Ansaugbereich der Leitung eine erste, zweite und vierte Drossel 342, 343, 345 als Entnahmeluft-Drossel, Entnahmeluft-Bypass-Drossel und Zuluft-Bypass-Drossel bzw. in der Luftrückführleitung 354 ist eine dritte Drossel 344 als Gesamt-Drossel angeordnet.

Dem Konzept der Erfindung folgend kann in einer Abwandlung in einem hier nicht dargestellten Ausführungsbeispiel zur Abführung von Rückführluft RL eine Luftentnahmeführung 340 auch mit der vorletzten Trocknerzone 160 strömungsverbunden sein; ggfs. auch mit einer davor angeordneten Trocknerzone 150 oder einer anderen Trocknerzone im hinteren Bereich des Trockneraufbaus in Förderrichtung C. Die Rückführung von Rückführluft RL erweist sich dann jedenfalls als möglich, wenn deren Aufsättigung mit Feuchte der aus dem Produkt verdampften Wassermenge nicht zu hoch ist; d.h. wenn die Rückführung der Rückführluft RL in eine der vorderen Trocknerzonen dort jedenfalls keine signifikante Erhöhung der absoluten Luftfeuchte verursacht.

In FIG. 2 ist ergänzend zur ersten bevorzugten Ausführungsform der FIG.1 das Endmodul EM der letzten Trocknerzone 310 (in FIG. 1 mit 170 bezeichnet) in einem Schnitt quer zur Förderrichtung C gezeigt; dies mit einem Gehäuse 301 und dem perforierten Förderband 400 entgegen der Förderrichtung. Auf dem Förderband 400 im Endmodul EM ist das getrocknete superabsorbierende Polymer 420 umfassend wasserabsorbierende Polymerpartikel aufgetragen, wie dies anhand von FIG. 1 erläutert ist. Die Richtung der Luftzirkulation für die Umluft UL ist durch einen Pfeil dargestellt. Die Richtung wird durch den Betrieb eines Umluftventilators 320 im oberen Bereich des Gehäuses 301 bzw. des Trockneraufbaus 101 und eines Zuluftelements 330 im unteren Bereich des Gehäuses 301 bzw. des Trockneraufbaus 101 vorgegeben. Die Umluftventilator 320 ist im oberen Bereich des Innenraumes des Trockneraufbaus 101 angeordnet, d.h. oberhalb des Förderbandes 400. Die Umluft wird wie in FIG. 2 gezeigt im Innenraum des Endmoduls EM der letzten Trocknungszone 310 durch das Förderband zirkuliert, wobei in dem gezeigten Beispiel das getrocknete superabsorbierende Polymer 420, umfassend wasserabsorbierende Poylmerpartikel, von oben nach unten von der Umluft jedenfalls teilweise durchströmt wird. Das Förderband 400 ist vorliegend an der Innenseite des Gehäuses 301 des Trockneraufbaus 101 mittels einer Abdichtung 432 gegen dieses abgedichtet, um zu vermeiden, dass Umluft UL in größerem Maße am Förderband 400 vorbei in den Bereich unterhalb des Förderbandes 400 gelangt. Seitlich vom Förderband 400 wird die Umluft UL an diesem vorbei wieder nach oben geführt. Dabei durchströmt die Umluft einen Wärmetauscher WT in dem Endmodul EM der letzten Trocknungszone 310 entsprechend von unten nach oben. Die Zirkulation der Umluft wird mittels des Umluftventilators 320 aufrecht erhalten. Dazu ist der Wärmetauscher WT in einer Art Schacht 430 angeordnet, in dem auch die Umluft UL von einem Bereich unterhalb des Förderbandes 400 in einen Bereich oberhalb des Förderbandes 400 strömt; der Schacht 430 ist mit einer Wandung geeigneter Führungsmittel 431 seitlich des Förderbandes 400 und mit einer nicht näher bezeichneten Wandung des Gehäuses 301 des Trockneraufbaus 101 gebildet.

Das Endmodul EM bildet hier insofern die letzte Trocknerzone 310 vor dem Austragsmodul 300; im Prinzip kann das Endmodul EM in einer Abwandlung auch ohne einen Wärmetauscher WT ausgeführt sein - auch mit einem Wärmetauscher WT, insbesondere aber ohne einen Wärmetauscher WT ist die letzte Trocknerzone 310 dazu ausgebildet, dass, eine Wärmeabfuhr aus den wasserabsorbierenden Polymerpartikel erfolgt, jedenfalls aber kein Wärmeeintrag in die wasserabsorbierenden Polymerpartikel erfolgt, diese also kälter austreten als eintreten; die letzte Trocknerzone 310 vor dem Austragsmodul 300, im Prinzip das ganze Endmodul EM, wirkt dann (wie vorliegend) als Kühlzone.

Rückführluft RL wird aus dem Trockneraufbau 101 an einem Eintrags-Abschnitt EA der Luftentnahmeführung 340 entnommen und über die Luftrückführung 350 dem Trockneraufbau 101 an einem luftzuführenden Abschnitt 370 wieder zugeführt. Die Luftrückführung 350 weist also die Luftentnahmeführung 340 auf, die zwischen einem luftstromaufwärtigen Eintrags-Abschnitt EA am Trockneraufbau 101 und einem luftstromabwärtigen Austrags-Abschnitt AA in der Luftrückführung 350 ausgebildet ist. Bevorzugt wird Umluft UL geführt, insbesondere per Umluftventilator 320, und/oder beispielsweise Frischluft in einer Trocknerzone 170 zugeführt, insbesondere per einem Zuluftelement 330; so kann beispielsweise in einer Anzahl von Trocknerzonen 110, 120, 130, 140, 150, 160, 170 Umluft UL, insbesondere mit einem Anteil an Frischluft FL, durch das Polymergel zirkuliert werden. In einer oder mehrerer der letzten Zonen, z.B. 170, wird die Umluft UL wenigstens teilweise als Rückführluft aus der in Förderrichtung C letzten Trocknerzone 170 mittels der Luftentnahmeführung 340 abgeführt. Um eine Aufsättigung mit Feuchte der aus dem Produkt verdampften Wassermenge nicht zu hoch werden zu lassen hat es sich als vorteilhaft erwiesen, die Abführung von Rückführluft RL über eine Luftentnahmeführung 340 aus einer Trocknerzone im hinteren Bereich des Trockneraufbaus 101 in Förderrichtung C vorzunehmen. Der hintere Bereich des Trockneraufbaus 101 ist insbesondere auf die hintere Hälfte des Trockneraufbaus beschränkt. Entsprechend ist der vordere Bereich des Trockneraufbaus 101 insbesondere auf die vordere Hälfte des Trockneraufbaus beschränkt. Im Betrieb weist der vordere Bereich bevorzugt eine absolute Feuchte der Trocknungsluft (als Beladung trockener Luft) im Bereich von 100 bis 250g/kg auf. Der vordere Bereich eines Trockneraufbaus 101 ist ausgebildet, eine absolute Feuchte der Trocknungsluft im Bereich von 100 bis 250g/kg aufzuweisen. Im Betrieb weist der hintere Bereich eine absolute Feuchte der Trocknungsluft (als Beladung trockener Luft) im Bereich unterhalb von 100 bis 150g/kg, insbesondere unterhalb von 100g/kg, auf. Insbesondere liegt eine absolute Feuchte der Rückführluft unter 50g/kg in der Rückführluft RL. Insbesondere wird die Rückführluft RL an einem luftzuführenden Abschnitt 370 an einem vorderen Bereich des Trockneraufbaus 101 in Förderrichtung C dem Trockneraufbau 101 wieder zugeführt, wobei der vordere Bereich bevorzugt auf die vordere Hälfte des Trockneraufbaus beschränkt ist. Eine Rückführung der Rückführluft RL verursacht in einer der vorderen Trocknerzonen bevorzugt keine signifikante Erhöhung der absoluten Luftfeuchte, wenn diese im Bereich zwischen 100g/kg bis 350g/kg liegt.

Besonders bevorzugt ist, zusätzlich oder alternativ zu obiger Maßgabe, unter einem vorderen Bereich des Trockneraufbaus 101 derjenige Bereich zwischen dem Auftragsmodul 200 und bis zu einer in der Förderrichtung C danach angeordneten Trocknerzone zu verstehen, in welcher die absolute Luftfeuchte noch unterhalb oder bei der bevorzugten maximalen Luftfeuchte liegt; eine derartige bevorzugte maximale Luftfeuchte aller Trocknerzonen liegt im Bereich zwischen 200g/kg bis 350g/kg. Insbesondere ist, zusätzlich oder alternativ zu obiger Maßgabe, unter einem hinteren Bereich des Trockneraufbaus 101 derjenige Bereich zwischen dem Austragsmodul 300 bis zu einer entgegen der Förderrichtung C davor angeordneten Trocknerzone zu verstehen, in welcher die absolute Luftfeuchte noch unterhalb einer weiteren bevorzugten maximalen Luftfeuchte liegt, insbesondere unterhalb von 50g/kg liegt; eine derartige bevorzugte maximale Luftfeuchte liegt im Bereich zwischen 200g/kg bis 350g/kg.

Allgemein kann ein besonders bevorzugtes Profil von bevorzugten maximalen absoluten Luftfeuchten entlang der Förderrichtung C eines Produktstromes im Trockneraufbau 101 angegeben werden mit: beispielsweise 100g/kg am Beginn eines Trockneraufbaus 101 bzw. 100g/kg bis 250g/kg im vorderen Bereich eines Trockneraufbaus 101; 200g/kg bis 350g/kg etwa in einem mittleren Bereich eines Trockneraufbaus 101 (insgesamt maximale absolute Luftfeuchte als Beladung trockener Luft); 100 bis 150g/kg, insbesondere unterhalb von 100g/kg, im hinteren Bereich eines Trockneraufbaus 101. Anders ausgedrückt kann man feststellen, dass entgegen der Förderrichtung C eines Produktstromes im Trockneraufbau 101 ausgehend vom hinteren Bereich eines Trockneraufbaus 101 eine absolute Luftfeuchte als Beladung trockener Luft bevorzugt stetig steigt, bevorzugt bis zu einer Luftzufuhrstelle etwa in der Mitte des Trockneraufbau 101, jedenfalls bis zur nächsten Luftzufuhrstelle ausgehend vom hinteren Bereich eines Trockneraufbaus 101.

Wie in FIG.2 ersichtlich, ist an einer Seite des Gehäuses 301 die Luftentnahmeführung 340 angeordnet, mittels der durch eine erste Drossel 342 mit einstellbarem Querschnitt Q4 Rückführluft RL dem Endmodul EM entnommen und über eine Luftentnahmeleitung 341 einer Luftrückführleitung 354 der Luftrückführung 350 zugeführt wird; etwa wie dies in FIG.1 dargestellt ist. Die Rückführluft RL in der Luftentnahmeführung 340 wird entlang der Luftentnahmeleitung 341, bevorzugt mit einer variablen Strömungsgeschwindigkeit, in Abhängigkeit von einer Drosselstellung der ersten Drossel 342 entnommen und geführt. Ausschlaggebend dafür ist die weitere Entnahme von Rückführluft RL durch eine zweite Drossel 343 mit einstellbarem Querschnitt Q1 aus der letzten Trocknerzone 310; die Rückführluft RL wird wiederum in die Luftentnahmeleitung 341 aufgenommen, jedoch über eine erste Bypass-Leitung 341.1.

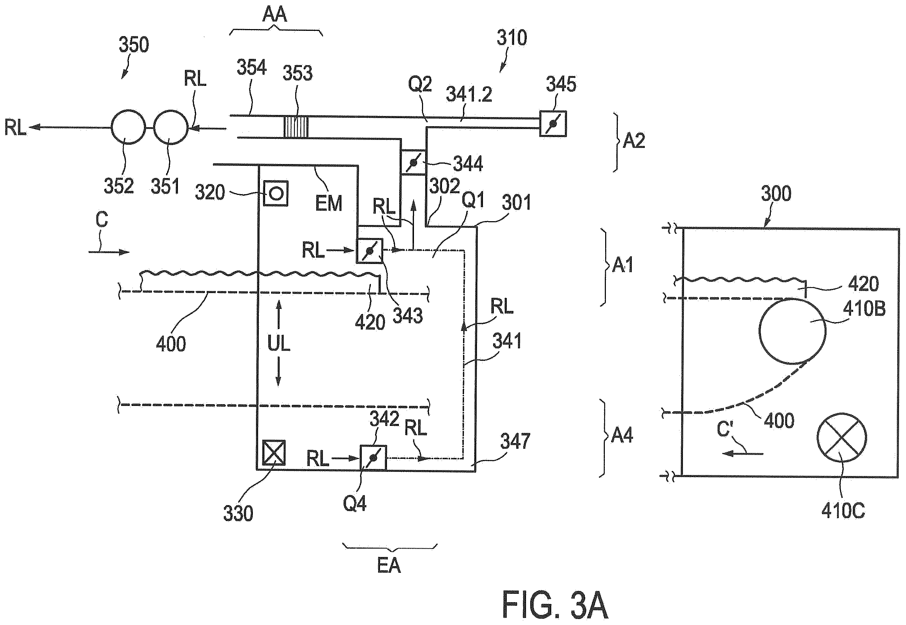

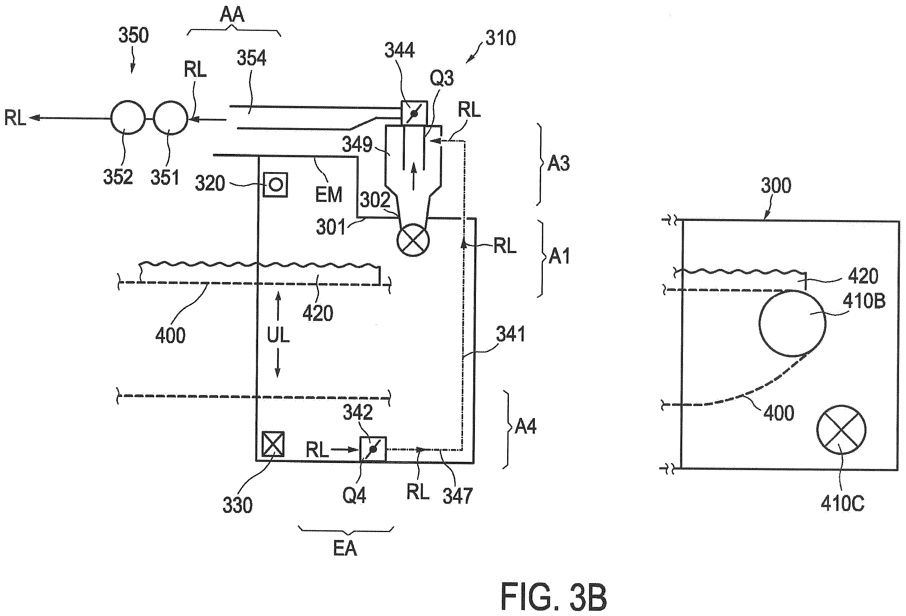

Die erste Bypass-Leitung 341.1 ist an einem luftstromabwärtigen Leitungsabschnitt Ader Luftentnahmeleitung 341, also luftstromabwärtig nach dem Eintrags-Abschnitt EA --hier zur Bildung eines ersten luftabführenden Abschnitts A1 mit Querschnittsvergrößerung Q1 oberhalb des Förderbandes 400 und zur Bildung eines vierten luftabführenden Abschnitts A4 mit Querschnittsvergrößerung Q4 unterhalb des Förderbandes 400-- an die Luftentnahmeleitung 341 angeschlossen. In der Ausführungsform der FIG.2 sind demnach zwei Drosseln 342, 343 dargestellt, die jeweils den luftdurchströmbaren Querschnitt Q4, Q1 einer Luftentnahmeleitung 341 bzw. der ersten Bypassleitung 341.1 zur Bildung eines Rückführluft-Bypasses verändern können. In diesem Falle umfasst die Luftentnahmeführung 340 im Bereich eines luftabführenden Abschnitts A eine erste Bypassleitung 341.1 mit einer ersten Drossel 343 als Rückführluft-Bypass. Der luftabführende Abschnitt A ist luftstromabwärtig eines luftstromaufwärtigen Eintrags-Abschnitts EA vom Trockneraufbau 101 (und luftstromaufwärtig eines in FIG. 3A und FIG. 3B beispielhaft näher dargestellten luftstromabwärtigen Austrags-Abschnitts AA zur Luftrückführung 350) ausgebildet. Ein Strömungsquerschnitt im luftabführenden Abschnitt A der Luftentnahmeführung 340 ist hier aufgrund des einmündenden, mit der ersten Bypassleitung 341.1 gebildeten Rückführluft-Bypasses mit einer Querschnittsvergrößerung Q1 versehen. Die Querschnittsvergrößerung Q1 ist derart ausgebildet, dass die Rückführluft RL im luftabführenden Abschnitt A der Luftentnahmeführung 340 mit einer verringerten Strömungsgeschwindigkeit abgeführt wird. Außerdem steht mit dem Gesamtquerschnitt der Bypassleitung 341.1 und der Luftentnahmeleitung 341 ein einstellbarer sehr viel größerer Querschnitt zur Entnahme von Rückführluft RL aus dem Endmodul EM zur Verfügung; dadurch wird auch im luftstromaufwärtigen Eintrags-Abschnitt EA Rückführluft RL dem Trockneraufbau 101 mit einer verringerten Strömungsgeschwindigkeit entnommen. Die Strömungsgeschwindigkeit im luftabführenden Abschnitt A --wenigstens aber an den Stellen der Querschnittsvergrößerung Q1 und Q4 im luftabführenden Abschnitt A-- in der Luftentnahmeleitung 341 ist geringer als eine Eintragsgeschwindigkeit am luftstromaufwärtigen Eintrags-Abschnitt EA ohne die genannte Querschnittsvergrößerung Q1, Q4 aufgrund der ersten Bypass-Leitung 341.1 bzw. dem vergrößerten Eintrags-Abschnitt EA.

Der Eintrag von Partikeln in die Luftentnahmeleitung 341 wird erheblich verringert bereits im Bereich des Eintrags-Abschnitts EA aufgrund einer vergrößerten Ausbildung desselben; dieser Vorteil ist insbesondere bei einem in Bodennähe befindlichen Eintrags-Abschnitt EA wertvoll, da dort eine Eintragswahrscheinlichkeit für Partikel vom Boden vergleichsweise hoch ist. Außerdem wird der ungewollte Weitertransport eingetragener Partikel verhindert, jedenfalls aber erheblich verringert infolge der genannten Querschnittsvergrößerung Q1.

Grundsätzlich, aber nicht notwendigerweise, besteht damit die Möglichkeit, eine Rückführluft RL in der Luftentnahmeführung 340 mit einer entlang des Verlaufs der zugeordneten Luftentnahmeleitung 341 variiert eingestellten Strömungsgeschwindigkeit abzuführen. In diesem Fall umfasst die Luftentnahmeführung 340 die Luftentnahmeleitung 341 und die erste Bypass-Leitung 341.1; hier mit einer ersten Drossel 342 unterhalb des Förderbandes 400 und mit einer zweiten Drossel 343 oberhalb des Förderbandes 400. Die beiden Drosseln weisen dazu jeweils eine Drosselklappe auf, die variabel einstellbar, insbesondere aktiv steuerbar und/oder regelbar sind. Ein Gesamtquerschnitt der Bypassleitung 341.1 und der Luftentnahmeleitung 341 sind damit variabel einstellbar.

Vorliegend wird Rückführluft RL unterhalb des Förderbandes 400 dem Endmodul EM entnommen. Ein Partikel- und/oder Staubeintrag mit der Rückführluft RL in die Luftrückführleitung 341 kann insgesamt dadurch gering gehalten werden, dass die Strömungsgeschwindigkeit derart niedrig eingestellt wird, dass Polymerpartikel oder andere Partikel oder Staub erst gar nicht in die Luftrückführleitung 341 gelangen oder aber absetzen können bevor sie in die Rückführleitung 354 gelangen, d.h. insbesondere bevor sie zu Einbauten in der Luftrückführung 350 insbesondere zu dort befindlichen Heizregistern oder Vorlufterhitzern gelangen. In diesem Falle sammeln sich abgesetzte Polymerpartikel 500 am unteren Ende der Luftentnahmeleitung 341 in einem Absetzbereich 347.

Durch den variablen Querschnitt der ersten Drossel 342 kann die Strömungsgeschwindigkeit derart gering eingestellt werden, dass sich Partikel absetzen können. Ggfs. kann die Strömungsgeschwindigkeit der Rückführluft RL zusätzlich eingestellt werden mit einem variablen Querschnitt der zweiten Drossel 343, auch Rückführluft-Bypass-Drossel genannt. Die erste und die zweite Drossel 342, 343 kann jeweils in Form einer Drosselklappe gebildet sein. Die Luftentnahmeführung 340 weist vorliegend zusätzlich einen Absetzbereich 347 auf, der sich durch einen vergrößerten Querschnitt gegenüber dem übrigen Querschnitt der Luftrückführleitung 341 auszeichnet; dazu kann z.B. eine Krümmung, Ecke oder Abbiegung der Luftrückführleitung 341 genutzt werden

Weiterhin ist es in einer Abwandlung möglich, dass die Luftentnahmeleitung 341 einen einstellbaren Querschnitt hat, der prinzipiell in seinem Querschnittswert luftstromabwärtig mittels einer in FIG.1 und FIG.3A gezeigten dritten Drossel 344, auch Gesamt-Drossel genannt, variierbar ist; dies ergibt eine zusätzliche Einstellmöglichkeit zur Anpassung der Strömungsgeschwindigkeit im genannten Querschnitt der Luftrückführleitung 354. Auch damit kann ein "Ausfallen" von Partikeln aus der Rückführluft RL unterstützt werden soweit eine damit verbundene geringfügige Reduzierung der Gesamtrückführleistung für die Rückführluft RL akzeptiert werden kann.

FIG.3A zeigt schematisiert --in einem Schnitt entlang der Förderrichtung C, wobei die oben beschriebene Luftentnahmeführung 340 in FIG.3A (und auch in FIG.3B) zum veranschaulichenden Verständnis in diesen Schnitt entlang der Förderrichtung C hineinprojiziert ist-- eine gegenüber der ersten Ausführungsform der FIG.2 weitergebildete Ausführung der ersten Ausführungsform; nämlich bezüglich der Luftentnahmeführung 340 und der Luftrückführung 350 am Endmodul EM der letzten Trocknerzone 310; diese entspricht im wesentlichen einer detaillierteren Darstellung der FIG.1.

Wie in FIG.3A gezeigt kann durch einen oder mehrere zusätzliche luftstromabwärtige Filter 353 das Mitführen von Partikeln, insbesondere auch Feinstpartikeln reduziert werden; dies allerdings unter Berücksichtigung eines Druckverlustes. Analog können Filter auch in einer Luftentnahmeleitung 341 oder auch in eine Bypassleitung 341.1 eingebaut werden.

Dazu zeigt FIG.3A wiederum die Luftentnahmeführung 340 im Bereich eines ersten luftabführenden Abschnitts A1 --wie in FIG.2; dort mit A bezeichnet--, eine erste Bypassleitung 341.1 und mit der ersten Drossel 343 als Rückführluft-Bypass. Der erste luftabführende Abschnitt A1 ist hier --wie in FIG.2-- mit einem vertikal verlaufenden Leitungsabschnitt einer Luftentnahmeleitung 341 gebildet, wobei der vertikal verlaufende Leitungsabschnitt der Luftentnahmeleitung 341 die Querschnittsvergrößerung Q1 aufweist.

Zusätzlich ist hier im Bereich eines zweiten luftabführenden Abschnitts A2 eine zweite Bypassleitung 341.2 mit einer vierten Drossel 345 als Zuluft-Bypass-Drossel vorgesehen, nämlich in einem Zuluft-Bypass für externe Frischluft FL. Insofern kann bei dieser Ausführungsform Rückführluft RL --per Rückführluft-Bypass der ersten Bypassleitung 341.1 und Frischluft FL per Zuluft-Bypass der zweiten Bypassleitung 341.2-- in die Luftentnahmeführung 340 und dann in die Luftrückführung 350 gegeben werden. Entsprechende Leitungen wie die Luftentnahmeleitung 341, die Bypassleitung 341.1 und die Luftrückführleitung 354 mit ihren Einbauten wie Ventilatoren 351, Wärmetauschern 352 und Filtern 353 sind Teile des Belüftungsaufbaus 102 in der Peripherie des Trockneraufbaus 101 (FIG.1, FIG.4), der in FIG.2, FIG.3A und FIG.3B jeweils mit einem Gehäuse 301 des Endmoduls EM für die letzte Trocknerzone 310 gezeigt ist.

FIG.3B zeigt schematisiert eine zweite Ausführungsform eines Umluftbandtrockners mit einem Endmodul EM der letzten Trocknerzone 310 in Förderrichtung C vor einem Austragsmodul 300, die gegenüber der ersten Ausführungsform der FIG.1 bis FIG.3A weitergebildet ist. FIG.3B zeigt dies in einem Schnitt entlang der Förderrichtung C, wobei die oben beschriebene Luftentnahmeführung 340 in FIG.3A zum veranschaulichenden Verständnis in diesen Schnitt entlang zur Förderrichtung C hineinprojiziert ist.

Im Falle der zweiten Ausführungsform ist in der Luftentnahmeführung 340 eine Luftentnahmeleitung gezeigt, die einen Fliehkraftabscheider 349 aufweist. Der Fliehkraftabscheider 349 ist, ggfs. mit weiteren Aktivelementen, derart gestaltet, dass sich mitgeführte Polymerpartikel absetzen.

Insbesondere können sich die mitgeführten Polymerpartikel oberhalb der Umlenkrolle 410B des Förderbandes 400 absetzen. Insbesondere können sich aus dem Trockneraufbau 101 in der Nähe eines Leitungseintrittsbereichs Partikel und/oder Feinststäube durch den Abwurf des getrockneten superabsorbierenden Polymers 420 vermehrt absetzen; dies ist verstärkt auch durch das Brechen in einem Brecher 410C, welcher zum Beispiel als ein Kreuzflügelzerkleinerer gebildet sein kann.

Wie weiter anhand von FIG.6 erläutert ist, können Aspekte der in FIG.3A und FIG.3B gezeigten ersten und zweiten Ausführungsform in einer hier nicht dargestellten Ausführungsform kombiniert werden. Insbesondere ist es beispielsweise vorteilhaft --wie in dem repräsentativen Beispiel in FIG.6E gezeigt-- eine Aufweitung einer Luftentnahmeleitung 341 vorzusehen, Die Aufweitung einer Luftentnahmeleitung 341 kann zusätzlich oder alternativ durch einen in FIG.6E näher erläuterten querschnittsgroßen Leitungseintrittsbereichs 341L erreicht werden. Beispiele eines querschnittsgroßen Leitungseintrittsbereichs 341L sind in FIG.6E gestrichelt gezeigt als ein zylindrischer Strömungskanal 341Z und/oder ein sich aufweitender Diffusor, Trichter oder dergleichen Strömungskanalausformung 341D, oder eine Setzkammer od. dgl. Aufweitung. Ein in FIG.6E näher erläuterter querschnittsgroßer Leitungseintrittsbereich 341L verringert bereits die Gefahr eines Eintrags von Partikeln in die Luftentnahmeleitung 341.

Am Gehäuse des Austragsmoduls 300 kann ein Flansch 302 angebracht werden, der den Anschluss zu einem Fliehkraftabscheider 349, z. B. ein Zyklon, aufweist. In diesem können sich Partikel und Feinstpartikel unter Bildung eines dritten luftabführenden Abschnitts A3 mit einer Querschnittsvergrößerung Q3 absetzen. Zyklone dienen in großtechnischen Anlagen zur Absonderung von sowohl festen Partikeln als auch flüssigen Partikeln; insofern eignet sich ein Fliehkraftabscheider in besonderer Weise zum Abscheiden von wasserabsorbierenden Polymerpartikeln mit Restfeuchte. Dabei werden in dem Fliehkraftabscheider 349 (im Unterschied zu einer Zentrifuge) die Rückführluft RL als Träger durch deren eigene Strömungsgeschwindigkeit und entsprechend konstruktiven Gestaltung des Fliehkraftabscheiders 349 in eine Drehbewegung versetzt. Die auf die Partikel wirkenden Zentrifugalkräfte beschleunigen diese radial nach außen. Sie werden vom Strom der Rückführluft RL getrennt, der nach innen geleitet und abgeführt wird in ein zentrales Tauchrohr der weiteren Luftrückführleitung 354. Die Positionierung auf dem Austragsmodul 300 erlaubt die direkte Rückführung der abgesetzten Partikel in den Austrag zum Brecher 410C. Jegliche andere Positionierungen inklusive bspw. oberhalb eines Bigbags zum Austragen und Sammeln der abgesetzten Partikel ist denkbar.

In der Luftentnahmeleitung 341 bietet zusätzlich der Fliehkraftabscheider 349 ähnlich wie ein Absetzbereich 347, eine weitere Möglichkeit, die Gesamtluft hinsichtlich unerwünschter Partikel und Feinststäube zu reinigen und somit ein Zusetzen und ein Verkleben des Wärmetauschers 351, Ventilators 352 oder anderer Einbauten in der Luftrückführleitung 354 zu reduzieren. Die hier dargestellte Möglichkeit, einen Fliehkraftabscheider zu integrieren, ist auch in anderen Positionen des Umluftbandtrockners 1000 möglich. Der in FIG.3B gezeigte Fliehkraftabscheider 349 schließt an eine Luftrückführleitung 354 zu einer dritten Drossel 344 als Gesamt-Drossel an, über welche von Partikeln gereinigte Rückführluft RL wieder über die Umlufteinbauten, wie den Wärmetauscher 352 und Ventilator 351, der Luftrückführung 350 zugeführt werden kann.

FIG.4 zeigt schematisch ein Endmodul EM vor dem Austragsmodul 300 auf, das als letzte Trocknerzone 310 mit einer Luftentnahmeführung 340 wie in FIG.1 und FIG.3A sowie mit einer Luftrückführung 350, die an einem Trockneraufbau 101 zur Rückführung der Rückführluft RL in den Trockneraufbau 101 wiederanschließt. Dem Trockneraufbau 101 ist ein Belüftungsaufbau 102 --wie in FIG.1-- aufgesetzt, wobei der Trockneraufbau 101 in Kombination mit dem Belüftungsaufbau 102 hier als Trocknungsmodul 100 bezeichnet ist. Als Teil des Belüftungsaufbaus 102 weist die Luftrückführung 350 eine Reihe von Einbauten, nämlich vorliegend einen Ventilator 351 zur Umwälzung der Rückführluft RL und/oder Frischluft FL und einen Wärmetauscher 352 auf.

Weiter ist bei dem in FIG.4 schematisch gezeigten Umluftbandtrockner 1000 eine Abluftführung 360 zur Führung von Feuchte beladener Abluft AL vorgesehen, wobei die Abluft AL nicht zur Rückführung vorgesehen ist, sondern in die Umgebung über eine Abgabedrossel 362 abgegeben wird. Die Abluftführung 360 weist ebenfalls Einbauten, wie einen Ventilator 361 zur Ansaugung der Feuchte beladenen Abluft AL aus einer oder mehreren Trocknerzonen TZi (i=1..n) auf und zur Abgabe derselben zur Umgebung über die Abgabedrossel 362. Von den beispielhaft fünf Trocknerzonen TZi (i=1..n=5) sind die drei letzten Trocknerzonen TZ_n-2, TZ_n-1 und TZ_n (Endmodul EM für die letzte Trocknerzone 310 / TZ_n vor dem Austragsmodul 300) des Trockneraufbaus 101 dargestellt.

Im Unterschied zu den bisher gezeigten Ausführungsformen ist bei dem Bandtrockner 1000 der FIG.4 am endseitigen Bereich jeweils eine vorletzte Trocknerzone TZ_n-1 und die davor (TZ_n-2) mit einer Anzahl von vier bzw. fünf gleich bezeichneten Wärmetauschern WT1, WT2, WT3, WT4, WT5 bestückt; diese können beispielsweise jeweils als Teil eines Trocknungsmoduls gebildet sein, das mit den anderen zu einer Trocknerzone TZ_i (i=1..n; hier n=5) assembliert werden kann - die letzte Trocknerzone TZ_n (letzte Trocknerzone 310 mit Endmodul EM vor dem Austragsmodul 300) weist einen Umluftventilator 320 und ein Zuluftelement 330 auf, z.B. eine Luftklappe; die Kombination eines Umluftventilators 320 und eines Zuluftelements 330 kann auch als Luftzirkulationseinrichtung bezeichnet werden. In einer hier nicht gezeigten Abwandlung können auch mehrere Umluftventilatoren 320 und/oder Zuluftelemente 330 jeweils in den Trocknerzonen TZi (i=1..n; hier n=5) vorgesehen sein.

Auf diese hier beispielhaft genannte Weise können auch mehrere Trocknerzonen TZi (i=1..n; hier n=5) zur Bildung einer nicht näher bezeichneten Kontrollzone zusammengefasst werden; für jede Kontrollzone können (weitgehend unabhängig von anderen) nicht näher dargestellte Temperatur- und Drucksensoren vorgesehen sein. Diese können beispielsweise nur als Messpunkte oder zusätzlich oder alternativ als Kontroll- und/oder Regelsensorik dienen. Außerdem hat jede Trocknerzone TZ_n, TZ_n-1, vorliegend wenigstens ein Zuluftelement 330 und/oder ein Abluftlelement 363; hier jeweils als Drosselklappe dargestellt.

Das Austragsmodul 300 ist vorliegend separat bezeichnet. Die auch als Endzone bezeichnete letzte Trocknerzone 310, TZ_n weist --wie bei den vorher erläuterten Ausführungsformen-- einen Umluftventilator 320 und ein Zuluftelement 330 auf. Außerdem sind die als Drosselklappe dargestellte erste Drossel 342 zur Bildung einer Rückführluftdrossel in der Luftentnahmeleitung 341 und die zweite Drossel 343 zur Bildung einer Rückführluft-Bypassdrossel in der ersten Bypassleitung 341.1 zur Bildung eines Zuluft-Bypass dargestellt. Die dritte Drossel 344 als Gesamt-Drossel ist in der Luftentnahmeleitung 341 zur Luftrückführleitung 354 angebracht, um den Strom der Rückführluft RL zu regulieren. Die vierte Drossel 345 zur Bildung einer Zuluft-Bypassdrossel ist in der zweiten Bypassleitung 341.2 zur Bildung eines Zuluft-Bypass angeordnet.

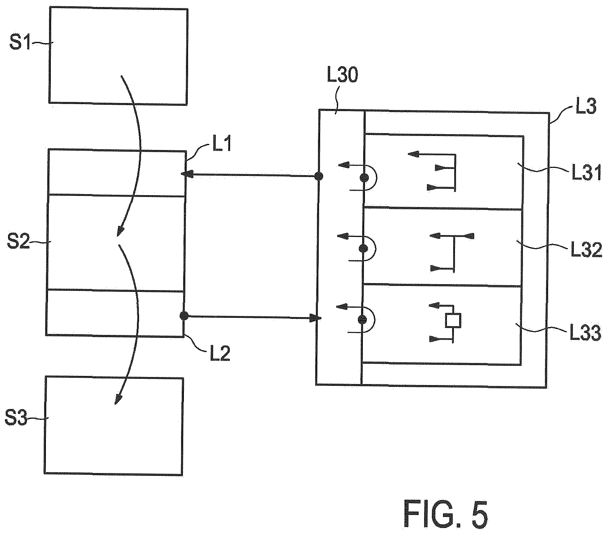

FIG.5 zeigt schematisch den Ablauf eines Herstellungsverfahrens, bei dem die Schritte Polymerisieren S1, Trocknen S2 und Brechen S3 dargestellt sind.

Zum Trocknen S2 wird im Schritt L2 Rückführluft vom Trockneraufbau 101 wenigstens teilweise in die Luftentnahmeführung 340 abgeführt. Im Schritt L1 wird die Rückführluft RL über die Luftrückführung 350 dem Trockneraufbau 101 wieder zugeführt. In einem Schritt L3 gibt es für die Führung der Rückführluft RL in der Luftentnahmeführung 340 zur Luftrückführung 350 grundsätzlich drei Optionen, die --allein oder in Kombination, -wie hier dargestellt-- genutzt werden können. Alle Optionen dienen dazu, einen Strömungsquerschnitt im luftabführenden Abschnitt A, A1, A2, A3 der Luftentnahmeführung 340 mit einer Querschnittsvergrößerung Q, Q1, Q2, Q3 zu versehen. Die Querschnittsvergrößerung ist dabei derart ausgebildet , dass die Rückführluft RL jedenfalls im luftabführenden Abschnitt A, A1, A2, A3 der Luftentnahmeführung 340 mit einer Strömungsgeschwindigkeit abgeführt wird, die geringer ist als eine Eintragsgeschwindigkeit am luftstromaufwärtigen Eintrags-Abschnitt EA. Zusätzlich oder alternativ kann am luftstromaufwärtigen Eintrags-Abschnitt EA am Trockneraufbau 101 eine genannte Querschnittsvergrößerung Q4 vorgesehen sein.

Die grundsätzliche Option besteht darin, in einem Schritt L30 Rückführluft RL lediglich über die Luftentnahmeleitung 341 abzuführen. Sollte sich die Strömungsgeschwindigkeit (ggfs. in Anbetracht des vergleichsweise geringen Querschnitts) in der Luftentnahmeleitung 341 zu hoch einstellen, gibt es zunächst die Möglichkeit, die vorgenannte dritte Drossel 344 als Gesamt-Drossel nachzustellen.

In einer ersten weiteren Option L31 kann die erste Bypassleitung 341.1 als Rückführluft-Bypass genutzt werden; dies ist durch die entsprechende Pfeilsymbolik für die erste Option L31 dargestellt. Beispielsweise kann in einer Ausführungsform eine Luftentnahmeleitung 341 mit der ersten Bypassleitung 341.1 versehen sein.

Eine zweite Option L32 besteht darin, eine zweite Bypassleitung 341.2 als Zuluft-Bypass zu nutzen; dies ist durch die entsprechende Pfeilsymbolik für die zweite Option L32 dargestellt. Beispielsweise kann in einer anderen Ausführungsform eine Luftentnahmeleitung 341 mit einer zweiten Bypassleitung 341.2 realisiert sein.

Eine dritte Option L33 besteht darin, eine in der Luftentnahmeleitung 341 angeordnete Setzkammer 348, einen Fliehkraftabscheider 349 oder im einfachsten Fall eine Strömungsquerschnittserweiterung wie einen querschnittsgroßen Leitungseintrittsbereich 341L (z.B. eines zylindrischen ovalen, eckigen, insbesondere quadratischen oder rechteckigen, Strömungskanals 341Z und/oder eines sich aufweitenden Diffusors Trichters oder dergleichen Strömungskanalausformung 341D oder dgl. Aufweitung der Luftentnahmeleitung 341) oder einen Absetzbereich 347 zu nutzen, um die Strömungsgeschwindigkeit in der Luftentnahmeleitung 341 herabzusetzen; dies ist durch die entsprechende Pfeilsymbolik für die dritte Option L33 dargestellt. Beispielsweise kann eine Anlage gemäß Option L33 lediglich mit einer Luftentnahmeleitung 341 und einer Setzkammer 348 realisiert sein.

Die Optionen L31, L32, L33 können unabhängig voneinander baulich realisiert sein und einmal festgelegt, zunächst nicht veränderlich sein, d.h. variabel aber fest. Es kann aber auch beim Umluftbandtrockner 1000 vorgesehen sein, die Optionen je nach Gegebenheiten zu kombinieren und/oder zu verändern, d. h. z. B. zu- oder abzuschalten und/oder eine Drosseleinstellung der Drosseln 342, 343, 344, 345 oder einen in FIG.3A gezeigten Filter 353 steuernd und/oder regelnd anzupassen.

FIG.6 zeigt symbolisch fünf besonders bevorzugte Beispiele zur Realisierung eines Luftführungsmittels 600 in einem Leitungsabschnitt einer Luftentnahmeleitung 341 zur Durchführung von Rückführluft RL, grundsätzlich wie zuvor beschrieben, die einzeln oder in Kombination beliebig miteinander in abgewandelten Ausführungsformen realisierbar sind. Dazu sind Luftführungsmittel 600 der FIG.6A bis FIG.6F in unterschiedlichen bevorzugten Abwandlungen ausgeführt zur Bildung eines luftabführenden Abschnitts A1, A2, A3, A4, der eine Querschnittsvergrößerung Q1, Q2, Q3, Q4 aufweist.

Unter einer Querschnittsvergrößerung Q1, Q2, Q3, Q4 ist demnach generell zu verstehen, dass der luftabführende Abschnitt A1, A2, A3, A4 einen gegenüber einem übrigen Querschnitt einer Luftentnahmeleitung vergrößerten Querschnitt aufweist, derart dass die Rückführluft RL wenigstens in dem luftabführenden Abschnitt A1, A2, A3, A4 der Luftentnahmeführung mit einer gegenüber dem übrigen Querschnitt verringerten Strömungsgeschwindigkeit abgeführt wird.

Unter einer Querschnittsvergrößerung, die einen Querschnitt des luftabführenden Abschnitts der Luftentnahmeführung vergrößert, ist insbesondere zu verstehen, dass sich der Querschnitt des luftabführenden Abschnitts A1, A2, A3, A4 von einem ersten luftstromaufwärtigen Querschnitt auf einen zweiten luftstromabwärtigen Querschnitt erweitert - dies ist der Fall jedenfalls im Beispiel der FIG.6A, FIG.6B, FIG.6F.

Unter einer Querschnittsvergrößerung ist insofern zusätzlich oder alternativ insbesondere auch zu verstehen, dass der luftabführende Abschnitt am luftstromaufwärtigen Eintrags-Abschnitt am Trockneraufbau einen Leitungseintrittsbereich mit einem Querschnitt aufweist, der einen stark vergrößerten Ansaugbereich bildet - dies ist der Fall jedenfalls im Beispiel der FIG.6E. Insbesondere ist dort der Leitungseintrittsbereich erweitert gegenüber einer weiteren Luftentnahmeleitung der Luftentnahmeführung, insbesondere erweitert gegenüber einem Luftführungs-Querschnitt an einem Fördermittel in einer Luftrückführung. Entsprechend kann ein Leitungseintrittsbereich einen vergrößerten zylindrischen, ovalen, eckigen, insbesondere quadratischen oder rechteckigen, oder anders geformten Querschnitt eines Strömungskanals aufweisen, um den vergrößerten Ansaugbereich zu bilden. Der Leitungseintrittsbereich kann auch beispielsweise als ein Diffusor, Trichter oder dergleichen Strömungskanalausformung zur Bildung eines vergrößerten Ansaugbereichs gebildet sein.

So kann gemäß einer ersten Variante des Konzepts generell vorgesehen sein, dass die Rückführluft wenigstens in dem luftabführenden Abschnitt der Luftentnahmeführung mit einer verringerten Strömungsgeschwindigkeit abgeführt wird. Dies lässt sich beispielsweise bereits dadurch realisieren, dass eine oder mehrere Bypassleitungen 341.1, 341.2 zu einer Luftentnahmeleitung 341 in der Luftentnahmeführung vorgesehen ist - dies ist der Fall jedenfalls im Beispiel der FIG.6C, FIG.6D. Aufgrund einer Bypassleitung in der Luftentnahmefürhung ist der Gesamt-Querschnitt (Q> plus Q<) des luftabführenden Abschnitts der Luftentnahmeführung vergrößert im Sinne des Konzepts, nämlich derart, dass die Luftentnahmeführung nunmehr den Querschnitt Q< der Luftentnahmeleitung 341 und den Querschnitt Q> der Bypassleitung 341.1 aufweist anstatt nur den Querschnitt der Luftentnahmeleitung. Aufgrund eines vergrößerten Gesamt-Querschnitts (Q> plus Q<) der Luftentnahmeführung wird insgesamt die Rückführluft wenigstens in dem luftabführenden Abschnitt der Luftentnahmeführung mit einer verringerten Strömungsgeschwindigkeit abgeführt; in dem Fall ist die verringerte Strömungsgeschwindigkeit insbesondere verringert gegenüber einem luftstromaufbwärtigen Querschnitt einer Luftentnahmeleitung.

Vorteilhaft wird, zusätzlich oder alternativ, der Querschnitt des luftabführenden Abschnitts der Luftentnahmeführung vergrößert, z.B. graduell oder stufenweise entlang des Verlaufs des luftabführenden Abschnitts; d.h. der Querschnitt des luftabführenden Abschnitts erweitert sich von einem ersten Iuftstromaufwärtigen Querschnitt auf einen zweiten luftstromabwärtigen Querschnitt - dies ist der Fall jedenfalls im Beispiel der FIG.6A, FIG.6B, FIG.6F.

Aber auch betreffend das obige Beispiel der Bypassleitung kann dieser zweite Iuftstromabwärtige vergrößerte Querschnitt am Anschlusspunkt der Bypassleitung zur Luftentnahmeleitung --also im Iuftabführenden Abschnitt A1 (FIG.6D) oder im Iuftabführenden Abschnitt A2 (FIG.6C)-- gebildet sein. In FIG.6C und FIG.6D ist dies durch die gestrichelt eingezeichneten, am Anschlusspunkt aufgeweiteten Bypassleitungen 341.1' und 341.2' gezeigt; insofern ist dort eine besonders bevorzugte Kombination einer Bypassleitung 341.1 und 341.2 als solcher mit einem vergrößerten Querschnitt des luftabführenden Abschnitts A1, A2 realisiert mittels der am Anschlusspunkt aufgeweiteten Bypassleitungen 341.1' und 341.2'.

Zusätzlich oder alternativ kann dieser zweite luftstromabwärtige vergrößerte Querschnitt auch durch andere Weise in der Luftentnahmeleitung gebildet sein; so beispielsweise durch eine Setzkammer, einen Fliehkraftabscheider oder einen Aufweitungsbereich der Luftentnahmeleitung entlang des Verlaufs der Luftentnahmeleitung - dies ist der Fall jedenfalls im Beispiel der FIG.6A, FIG.6B, FIG.6F. Auf diese Weise wird die Rückführluft wenigstens in dem luftabführenden Abschnitt der Luftentnahmeführung (beispielsweise in dem luftstromabwärtigen vergrößerten Querschnitt) mit einer verringerten Strömungsgeschwindigkeit abgeführt, die geringer ist als eine Eintragsgeschwindigkeit am Eintrags-Abschnitt der Luftentnahmeführung.

Es ist gemäß einer zweiten Variante des Konzepts generell vorgesehen, zusätzlich oder alternativ, dass die Rückführluft wenigstens in einem querschnittsvergrößerten Eintrags-Abschnitt der Luftentnahmeführung mit einer verringerten Eintragsgeschwindigkeit abführbar ist. Dies kann bereits durch einen querschittsgroßen Leitungseintrittsbereich der Luftentnahmeleitung erreicht werden - dies ist der Fall jedenfalls im Beispiel der FIG.6E. Dadurch wird insgesamt die Rückführluft wenigstens in dem querschnittsvergrößerten Eintrags-Abschnitt EA --als luftabführenden Abschnitt der Luftentnahmeführung-- mit einer verringerten Strömungsgeschwindigkeit abgeführt; in dem Fall ist die verringerte Strömungsgeschwindigkeit insbesondere verringert gegenüber einem luftstromabwärtigen Querschnitt einer Luftentnahmeleitung.

Alle obigen Angaben bezüglich der verringerte Strömungsgeschwindigkeiten und vergrößerte Querschnittsvergrößerungen verstehen sich unter Bezug auf gleiche Förderluftmengen.

Eine Querschnittsvergrößerung Q1, Q2, Q3, Q4 ist jeweils als Differenz eines größeren Querschnitts Q> im Luftführungsmittel und einem Iuftstromaufwärtigen kleineren Querschnitt Q< in dem Leitungsabschnitt der Luftentnahmeleitung 341 gebildet und in FIG.6A bis FIG.6F beispielhaft gezeigt.

Im Einzelnen zeigt FIG.6A einen Leitungsabschnitt der Luftentnahmeleitung 341 ähnlich der FIG.3B, wobei das Luftführungsmittel 600A in Form eines Fliehkraftabscheiders 349 gebildet ist, der im luftabführenden Abschnitt A3, d.h. im Inneren des Fliehkraftabscheiders 349, einen größeren Querschnitt Q> aufweist, der den kleineren Querschnitt Q< der Luftentnahmeleitung 341 in einem luftstromaufwärtigen Leitungsabschnitt übersteigt. Rückführluft RL wird seitlich in den Fliehkraftabscheider 349 eingeführt, im Kreis geführt und über ein Tauchrohr unter Bildung der weiteren Luftrückführleitung 354 abgesaugt. In Folge der Fliehkraft und Schwerkraft können sich Polymerpartikel 500 im unteren Bereich des Fliehkraftabscheiders 349 absetzen und über eine Klappe oder dgl. Ventil 501 entnommen werden.

Ganz ähnlich zeigt FIG.6B ein Luftführungsmittel 600B in einem Leitungsabschnitt der Luftentnahmeleitung 341 in Form einer Setzkammer 348. Der luftabführende Abschnitt A3' im Inneren der Setzkammer 348 weist einen größeren Querschnitt Q> im Vergleich zu einem luftstromaufwärtigen Abschnitt Q< der Luftentnahmeleitung 341 auf, so dass eine Querschnttsvergrößerung Q3 = Q> - Q< im luftführenden Abschnitt A3' gebildet ist. Infolge der Strömungsverlangsamung im luftführenden Abschnitt A3' können sich Partikel infolge ihrer Gewichtskraft aus dem Luftstrom der Rückführluft RL gegen die geringere kinetische Energie der Luftströmung im luftführenden Abschnitt A3' lösen und im unteren Bereich der Setzkammer 348 absetzen. Die abgesetzten Partikel 500 können über geeignete Klappen oder Ventile 501 entnommen werden.FIG.6C zeigt einen Leitungsabschnitt der Luftentnahmeleitung 341 an dem eine zweite Bypassleitung 341.2 anschließt an die Luftentnahmeleitung 341; nämlich in der Art eines T förmigen Leitungsanschlusses der zweiten Bypassleitung 341.2 und der Luftentnahmeleitung 341. Auf diese Weise kann dem Strom von Rückführluft RL ein Strom Frischluft FL hinzugefügt werden. Unter Bezug auf eine (im Vergleich zu einer Situation ohne die Bypassleitung 341.2) anzunehmende gleiche Förderluftmenge ist bereits aufgrund der zweiten Bypassleitung 341.2 ein Gesamt-Querschnitt der Luftentnahmeführung von "Q<" auf "Q< plus Q>" erhöht. Außerdem aber bildet sich im T förmigen Leitungsanschluss der Luftentnahmeleitung 341 zur zweiten Bypassleitung 341.2 ein luftabführender Abschnitt A2 derart aus, dass dieser einen größeren Querschnitt Q> als ein kleiner Querschnitt Q< in einem luftstromaufwärtigen Abschnitt der Luftentnahmeleitung 341 hat. Im luftabführenden Abschnitt A2 ist somit eine Querschnittsvergrößerung Q2 = Q> - Q< gegeben, was zu einer verringerten Strömungsgeschwindigkeit im Strom der Rückführluft RL in der Luftentnahmeleitung 341 führt, insbesondere verringert gegenüber einem luftstromaufwärtigen Querschnitt der Luftentnahmeleitung; jedenfalls aber im luftabführenden Abschnitt A2, d.h. im Bereich der Querschnittsvergrößerung Q2 = Q> - Q<. Man mag annehmen, dass in Bezug auf normalerweise gleiche Strömungsgeschwindigkeiten der Frischluft FL und Rückführluft RL in dem Fall der FIG.6C der luftabführende Abschnitt A2 zudem besonders vergrößert ausgebildet ist, z.B. durch Abrundungen, Ausstülpungen oder dergleichen; dies ist insbesondere im Fall der gestrichelten Bypassleitung 341.2' gezeigt. Insgesamt führen alle die vorgenannten Maßnahmen allein oder in Kombination was zu einer verringerten Strömungsgeschwindigkeit im Strom der Rückführluft RL in der Luftentnahmeleitung 341, insbesondere im Bereich des querschittsvergrößerten luftabführenden Abschnitt A2.

Partikel in dem Strom von Rückführluft RL können somit aus dem Luftstrom der Rückführluft RL ausfallen und sich in einem unteren (hier nicht gezeigten) stromaufwärtigen Abschnitt der Luftentnahmeleitung 341 sammeln. Der stromaufwärtige Abschnitt der Luftentnahmeleitung 341 vor dem T förmigen Leitungsanschluss zur zweiten Bypassleitung 341.2 hat vorzugsweise einen vertikalen Verlauf.

Vorzugsweise wird durch den Bypassluftstrom in der zweiten Bypassleitung 341.2 bereits die Lufteintrittsgeschwindigkeit im Eintragsabschnitt EA der Luftentnahmeleitung 341 verringert, was das Mitnehmen von Partikeln in die Luftrückführleitung aus der letzten Trocknerzone 310 bereits vermeidet.

FIG.6D zeigt ein Luftführungsmittel 600D in einem Leitungsabschnitt der Luftentnahmeleitung 341 das mittels einer ersten Bypassleitung 341.1 zur Luftentnahmeleitung 341 gebildet ist. Unter Bezug auf eine (im Vergleich zu einer Situation ohne die Bypassleitung 341.1) anzunehmende gleiche Förderluftmenge ist bereits aufgrund der ersten Bypassleitung 341.1 ein Gesamt-Querschnitt der Luftentnahmeführung von "Q<" auf "Q< plus Q>" erhöht. Außerdem aber bildet sich in dem im wesentlichen T förmigen Leitungsanschluss der ersten Bypassleitung 341.1 und der Luftentnahmeleitung 341 ein luftabführender Abschnitt A1 mit einem größeren Querschnitt Q>, der einen kleineren Querschnitt Q< in einem luftstromaufwärtigen Abschnitt der Luftentnahmeleitung 341 übersteigt. Auf diese Weise ist im luftabführenden Abschnitt A1 eine Querschnittsvergrößerung Q1 = Q> - Q< gebildet, was zu einer entsprechenden Verringerung der Strömungsgeschwindigkeit des Luftstroms der Rückführluft RL in der Luftentnahmeleitung 341 führt, insbesondere verringert gegenüber einem Iuftstromaufwärtigen Querschnitt der Luftentnahmeleitung; jedenfalls aber im Iuftabführenden Abschnitt A1, d.h. im Bereich der Querschnittsvergrößerung Q1 = Q> - Q<. Man mag annehmen, dass in Bezug auf normalerweise gleiche Strömungsgeschwindigkeiten der Rückführluft RL in dem Fall der FIG.6D der luftabführende Abschnitt A1 zudem besonders vergrößert ausgebildet ist, z.B. durch Abrundungen, Ausstülpungen oder dergleichen; dies ist insbesondere im Fall der gestrichelten Bypassleitung 341.1' gezeigt. Insgesamt führen alle die vorgenannten Maßnahmen allein oder in Kombination zu einer verringerten Strömungsgeschwindigkeit im Strom der Rückführluft RL in der Luftentnahmeleitung 341, insbesondere im Bereich des querschittsvergrößerten Iuftabführenden Abschnitt A1. Dies wiederum verursacht deswegen ein Ausfallen von mitgeführten Partikeln infolge derer Gewichtskraft. Die Partikel 500 können sich in einem Absetzbereich 347 eines unteren Teils der im Wesentlichen vertikal geführten Luftentnahmeleitung 341 absetzen.

Darüber hinaus entsteht ein genereller Effekt dadurch, dass die Luftentnahmeleitung 341 im Querschnitt praktisch verdoppelt werden kann, jedenfalls der Gesamtquerschnitt der Luftentnahmeleitung 341 und der ersten Bypassleitung 341.1 der den der Luftentnahmeleitung 341 deutlich übersteigt. Damit ist generell die Strömungsgeschwindigkeit in einem unteren Querschnitt Q> der Luftentnahmeleitung 341, nämlich in einem Eintrags-Abschnitt EA, verringert. Dies führt bereits dazu, dass vergleichsweise wenige Partikel in die Luftentnahmeleitung 341 hineingeraten. Ggfs. kann über ein Drosselmittel in der ersten Bypassleitung 341.1 dieselbe so weit geöffnet werden, dass ein Hauptteil der Strömung über die erste Bypassleitung 341.1 zur Luftentnahmeleitung 341 führt; also der Hauptteil des Stroms der Rückführluft RL über die erste Bypassleitung 341.1 geführt wird anstatt direkt über die Luftentnahmeleitung 341 am Eintrags-Abschnitt EA. Dies hat den Vorteil, dass eine Strömungsstärke einer bodennahen Strömung von Rückführluft RL der Luftentnahmeleitung 341 im unteren Bereich weitgehend gering gehalten wird. Dies führt wiederum dazu, dass bereits der Eintrag von Polymerpartikeln gering gehalten wird. Beispielsweise könnte die Strömungsgeschwindigkeit an einer Querschnittsvergrößerung in einem luftabführenden Abschnitt der Luftentnahmeführung auf weniger als 50% der Strömungsgeschwindigkeit an einem Fördermittel für die Rückführluft in der Luftentnahmeführung und/oder der Luftrückführung herabgesetzt werden durch eine geeignete Querschnittsvergrößerung am luftabführenden Abschnitt (beispielsweise wie anhand von FIG.6 (A, B, C, D, F) erläutert) und geringer sein als eine Eintragsgeschwindigkeit am Eintrags-Abschnitt.

FIG.6E zeigt ein Luftführungsmittel 600E das sich besonders bevorzugt zur Kombination mit den zuvor erläuterten Luftführungsmittel 600A bis 600D eignet, nämlich unter Ausbildung eines vergleichsweise großen Querschnitts Q> im Eintrags-Abschnitt EA der Luftentnahmeleitung 341. Dazu weist die Luftentnahmeleitung 341 am Eintrags-Abschnitt EA einen geeigneten querschnittsgroßen Leitungseintrittsbereich 341L, z.B. hier einen zylindrischen Strömungskanal 341Z (durchgezogen gezeichnet) und/oder einen sich aufweitenden Diffusor, Trichter oder dergleichen Strömungskanalausformung 341D (gestrichelt gezeichnet). Zusätzlich oder alternativ kann ein Absetzbereich 347 mit vergrößertem Querschnitt mit Q> ausgeführt werden, insbesondere im Bereich einer Umlenkung der Luftentnahmeleitung 341 ausgeführt werden. Beides führt dazu, dass sich eine Querschnittsvergrößerung Q4=Q> ergibt. Dies wiederum führt zum gewichtskraftbedingten Ausfallen von mitgeführten Polymerpartikeln aus der Rückführluft RL , bzw. hält infolge des zylindrisch oder diffusorartig aufgeweiteten Querschnitts Q> am Leitungseintrittsbereich 341L des Eintrags-Abschnitts EA den Eintrag von Polymerpartikeln bereits gering. Beispielsweise könnte die Eintragsgeschwindigkeit der Rückführluft am Leitungseintrittsbereich 341L des Eintrags-Abschnitts EA der Luftentnahmeleitung 341 auf weniger als 50% der Strömungsgeschwindigkeit an einem Fördermittel, z.B. einem in FIG.1 bis FIG.4 gezeigten Ventilator 351 in der Rückführleitung 354, für die Rückführluft RL in der Luftentnahmeführung 340 und/oder der Luftrückführung 350 herabgesetzt werden durch eine geeignete Querschnittsvergrößerung am Leitungseintrittsbereich 341L des Eintrags-Abschnitts EA (beispielsweise wie anhand von FIG.6E erläutert betreffend einen zylindrischen Strömungskanal 341Z oder eine sich aufweitende Strömungskanalausformung 341D. Grundsätzlich zeigt sich, dass --obgleich eine Herabsetzung einer Eintragsgeschwindigkeit der Rückführluft am Leitungseintrittsbereich 341L des Eintrags-Abschnitts EA der Luftentnahmeleitung 341 auf weniger als 50% der Strömungsgeschwindigkeit an einem Fördermittel besonders vorteilhaft ist-- bereits eine Herabsetzung der Eintragsgeschwindigkeit der Rückführluft am Leitungseintrittsbereich 341L des Eintrags-Abschnitts EA der Luftentnahmeleitung 341 auf weniger als 90%, insbesondere 80%, insbesondere 70% der Strömungsgeschwindigkeit an einem Fördermittel Vorteile hat und eine Verbesserung im Sinne der Aufgabe der Erfindung mit sich bringt.

In FIG.6F ist symbolisch veranschaulicht, dass das Konzept der Erfindung auch im Rahmen eines horizontal verlaufenden Leitungsabschnitts umgesetzt werden kann. Dazu sind die vorgenannten Maßnahmen der Abschnitte A, A1, A2, A3, A4 der Luftentnahmeführung 340 und/oder Luftrückführung 350 mittels eines horizontal verlaufenden Leitungsabschnitts einer Luftentnahmeleitung 341 gezeigt, wobei der horizontal verlaufende Leitungsabschnitt der Luftentnahmeleitung 341 und/oder Luftrückführleitung 354 die Querschnittsvergrößerung Q, Q1, Q2, Q3, Q4 als ein oder mehrere querschnittvergrößernde Luftführungsmittel aufweist.

## Patentansprüche

1. Herstellungsverfahren zur Herstellung wasserabsorbierender Polymerpartikel, wobei das Herstellungsverfahren die Schritte aufweist:
- Polymerisieren einer wässrigen Monomer-Lösung oder -Suspension zur Herstellung eines wässrigen Polymergels,
- Brechen und/oder Mahlen eines getrockneten Polymergels zu wasserabsorbierenden Polymerpartikeln,
- Trocknen des wässrigen Polymergels in einem Bandtrockner ausgebildet als ein Umluftbandtrockner (1000), der zur Führung von Umluft (UL) ausgebildet ist, mit einem Förderband unter Aufnahme des wässrigen Polymergels auf dem Förderband und Fördern des Polymergels auf dem Förderband in eine Förderrichtung (C),
wobei zum Trocknen:
- der Bandtrockner mit einem das Förderband weitgehend umfassenden Trockneraufbau (101) gebildet ist, wobei Umluft (UL) in einer Anzahl von Trocknerzonen (110, 120, 130, 140, 150, 160) umfassend eine in Förderrichtung (C) letzte Trocknerzone (170) durch das Polymergel zirkuliert wird,
wobei der Bandtrockner mit einer am Trockneraufbau (101) luftrückführend anschließenden Luftrückführung (350) gebildet ist, wobei Rückführluft (RL) aus dem Trockneraufbau (101) entnommen und über die Luftrückführung (350) dem Trockneraufbau (101) wieder zugeführt wird, und die Umluft (UL) wenigstens teilweise als die Rückführluft (RL) aus der in Förderrichtung (C) letzten Trocknerzone (170) oder einer der letzten Trocknerzonen mittels einer Luftentnahmeführung (340) abgeführt wird, wobei
- unter Luftrückführung eine Rückführung von entnommener Luft aus dem Trockneraufbau (101) zu verstehen, welche in der Luftentnahmeführung (340) abgeführt wird und als Rückführluft (RL) entgegen der Förderrichtung (C) des Förderbandes außerhalb des Trockneraufbaus (101) zurückgeführt wird und an einer entgegen der Förderrichtung (C) des Förderbandes gelegenen Stelle, nämlich an einem luftzuführenden Abschnitt (370) dem Trockneraufbau (101) wieder zugeführt wird, wobei
- die Luftentnahmeführung (340) an die Luftrückführung (350) für Rückführluft (RL) anschließt, welche die Rückführluft (RL) in dem luftzuführenden Abschnitt (370) der Luftrückführung (350) dem Trockneraufbau (101) wieder zuführt und der dazu ebenfalls am Trockneraufbau (101) angeschlossen ist, und
- die Luftrückführung (350) die Luftentnahmeführung (340) aufweist, die zwischen einem luftstromaufwärtigen Eintrags-Abschnitt (EA) am Trockneraufbau (101) und einem luftstromabwärtigen Austrags-Abschnitt (AA) in der Luftrückführung (350) ausgebildet ist, wobei
- die Rückführluft (RL) an einer in der Förderrichtung (C) letzten Trocknerzone (170) und/oder einer anderen Trocknerzone (TZ_n-2, TZ_n-1, TZ_n) im in Förderrichtung (C) hinteren Bereich des Trockneraufbaus (101) abgeführt wird, wobei wenigstens ein luftabführender Abschnitt (A, A1, A2, A3, A4) der Luftentnahmeführung (340) mit der letzten Trocknerzone (170) und/oder der anderen Trocknerzone (TZ_n-2, TZ_n-1, TZ_n) strömungsverbunden ist, und
- die Luftentnahmeführung (340) eine Luftentnahmeleitung (341) und Luftrückführleitung (354) mit Einbauten aufweist, und
- ein Strömungsquerschnitt in dem wenigstens einem luftabführenden Abschnitt (A, A1, A2, A3, A4) der Luftentnahmeführung (340) eine Querschnittsvergrößerung (Q, Q1, Q2, Q3, Q4) aufweist, wobei
der Abschnitt (A, A1, A2, A3, A4) der Luftentnahmeführung (340) durch einen Leitungsabschnitt einer Luftentnahmeleitung (341) und/oder Luftrückführleitung (354) gebildet ist, der die Querschnittsvergrößerung (Q, Q1, Q2, Q3, Q4) aufweist in Form eines oder mehrerer querschnittsvergrößernder Luftführungsmittel, wobei
die Querschnittsvergrößerung derart einen Querschnitt des luftabführenden Abschnitts (A, A1, A2, A3, A4) der Luftentnahmeführung vergrößert, dass
- die Rückführluft (RL) wenigstens in dem luftabführenden Abschnitt (A, A1, A2, A3, A4) der Luftentnahmeführung (340) mit einer verringerten Strömungsgeschwindigkeit abgeführt wird, wobei die verringerte Strömungsgeschwindigkeit geringer ist als an einem luftstromaufwärtigen Querschnitt der Luftentnahmeleitung und/oder als eine Eintragsgeschwindigkeit am Eintrags-Abschnitt (EA),
und/oder
- die Rückführluft (RL) wenigstens in einem querschnittsvergrößerten Eintrags-Abschnitt (EA) der Luftentnahmeführung (340) mit einer verringerten Eintragsgeschwindigkeit abgeführt wird, die einer verringerten Strömungsgeschwindigkeit entspricht, welche geringer ist als an einem luftstromabwärtigen Querschnitt der Luftentnahmeleitung.

2. Herstellungsverfahren nach Anspruch 1, **dadurch gekennzeichnet, dass** die Einbauten mindestens einen Filter (353), Wärmetauscher (352) und/oder Ventilator (351) aufweisen.

3. Herstellungsverfahren nach Anspruch 1 oder 2, **dadurch gekennzeichnet, dass** der Abschnitt (A, A1, A2, A3, A4) der Luftentnahmeführung (340) und/oder der Luftrückführung (350) mittels eines vertikal verlaufenden Leitungsabschnitts einer Luftentnahmeleitung (341) und/oder Luftrückführleitung (354) gebildet ist, wobei der vertikal verlaufende Leitungsabschnitt der Luftentnahmeleitung (341) und/oder der Luftrückführleitung (354) die Querschnittsvergrößerung (Q, Q1, Q2, Q3, Q4) als ein oder mehrere querschnittvergrößernde Luftführungsmittel aufweist.

4. Herstellungsverfahren nach Anspruch 1 oder 2, **dadurch gekennzeichnet, dass** der Abschnitt (A, A1, A2, A3, A4) der Luftentnahmeführung (340) und/oder der Luftrückführung (350) mittels eines horizontal verlaufenden Leitungsabschnitts einer Luftentnahmeleitung (341) und/oder Luftrückführleitung (354) gebildet ist, wobei der horizontal verlaufende Leitungsabschnitt der Luftentnahmeleitung (341) und/oder der Luftrückführleitung (354) die Querschnittsvergrößerung (Q, Q1, Q2, Q3, Q4) als ein oder mehrere querschnittvergrößernde Luftführungsmittel aufweist.

5. Herstellungsverfahren nach einem der Ansprüche 1 bis 4, **dadurch gekennzeichnet, dass** das oder die querschnittsvergrößernde Luftführungsmittel auf einer Höhe, welche oberhalb des Förderbandes (400) liegt, angeordnet sind.

6. Herstellungsverfahren nach einem der Ansprüche 1 bis 4, **dadurch gekennzeichnet, dass** das oder die querschnittsvergrößernde Luftführungsmittel auf einer Höhe, welche unterhalb des Förderbandes (400) liegt, angeordnet sind.

7. Herstellungsverfahren nach einem der Ansprüche 1 bis 6, **dadurch gekennzeichnet, dass** ein Luftführungsmittel gebildet ist mit:
- einem Anschluss wenigstens einer ersten Bypassleitung (341.1) an dem Leitungsabschnitt der Luftentnahmeleitung (341) zur Bildung eines ersten luftabführenden Abschnitts (A1) mit Querschnittsvergrößerung (Q1), wobei die wenigstens eine erste Bypassleitung (341.1) zur Luftentnahme aus dem Trockneraufbau (101) ausgebildet ist.

8. Herstellungsverfahren nach einem der Ansprüche 1 bis 7, **dadurch gekennzeichnet, dass** ein Luftführungsmittel gebildet ist mit:
- einem Anschluss wenigstens einer zweiten Bypassleitung (341.2) an dem Leitungsabschnitt der Luftentnahmeleitung (341) zur Bildung eines zweiten luftabführenden Abschnitts (A2) mit Querschnittsvergrößerung (Q2), wobei die wenigstens eine zweite Bypassleitung (341.2) zur Luftzufuhr von Frischluft (FL) aus der Umgebung ausgebildet ist.

9. Herstellungsverfahren nach einem der Ansprüche 1 bis 8, **dadurch gekennzeichnet, dass** ein Luftführungsmittel gebildet ist mit:
- einem Anschluss einer Setzkammer oder eines Fliehkraftabscheiders (349) in der Luftentnahmeleitung (341) zur Bildung eines dritten luftabführenden Abschnitts (A3) mit Querschnittsvergrößerung (Q3).

10. Herstellungsverfahren nach einem der Ansprüche 1 bis 9, **dadurch gekennzeichnet, dass** ein Luftführungsmittel an einem Eintrags-Abschnitt (EA) gebildet ist mit:
- einem Anschluss eines querschnittsgroßen Leitungseintrittsbereichs (341L), der als ein Strömungskanal (341Z) und/oder eine Strömungskanalausformung (341D) in der Luftentnahmeleitung (341) gebildet ist zur Bildung eines vierten luftabführenden Abschnitts (A4) mit Querschnittsvergrößerung (Q4).

11. Bandtrockner ausgebildet als ein Umluftbandtrockner (1000), der zur Führung von Umluft (UL) ausgebildet ist zur Trocknung eines wässrigen Polymergels und Fördern des Polymergels auf einem Förderband, wobei
- der Bandtrockner mit einem das Förderband weitgehend umfassenden Trockneraufbau (101) gebildet ist, wobei Umluft in einer Anzahl von Trocknerzonen (110, 120, 130, 140, 150, 160) umfassend eine in Förderrichtung (C) letzte Trocknerzone (170) durch das Polymergel zirkuliert wird,
wobei zur Trocknung des wässrigen Polymergels und Fördern des Polymergels auf dem Förderband bei einem Herstellungsverfahren nach einem der Ansprüche 1 bis 10,
der Bandtrockner mit einer am Trockneraufbau (101) anschließenden Luftrückführung (350) gebildet ist, wobei Rückführluft (RL) aus dem Trockneraufbau (101) entnehmbar und über die Luftrückführung (350) dem Trockneraufbau (101) wieder zuführbar ist, und die Umluft (UL) wenigstens teilweise als die Rückführluft (RL) aus der in Förderrichtung (C) letzten Trocknerzone (170) oder einer der letzten Trocknerzonen mittels der Luftentnahmeführung (340) abgeführt wird, wobei
- unter Luftrückführung eine Rückführung von entnommener Luft aus dem Trockneraufbau (101) zu verstehen, welche in der Luftentnahmeführung (340) abgeführt wird und als Rückführluft (RL) entgegen der Förderrichtung (C) des Förderbandes außerhalb des Trockneraufbaus (101) zurückgeführt wird und an einer entgegen der Förderrichtung (C) des Förderbandes gelegenen Stelle, nämlich an einem luftzuführenden Abschnitt (370) dem Trockneraufbau (101) wieder zugeführt wird, wobei
- die Luftentnahmeführung (340) an die Luftrückführung (350) für Rückführluft anschließt, welche die Rückführluft (RL) in dem luftzuführenden Abschnitt (370) der Luftrückführung (350) dem Trockneraufbau (101) wieder zuführt und der dazu ebenfalls am Trockneraufbau (101) angeschlossen ist, und
- die Luftrückführung (350) eine Luftentnahmeführung (340) aufweist, die zwischen einem luftstromaufwärtigen Eintrags-Abschnitt (EA) am Trockneraufbau (101) und einem abwärtigen Austrags-Abschnitt (AA) in der Luftrückführung (350) ausgebildet ist, wobei
- die Rückführluft (RL) an einer in der Förderrichtung (C) letzten Trocknerzone (170) und/oder einer anderen Trocknerzone (TZ_n-2, TZ_n-1, TZ_n) im in Förderrichtung (C) hinteren Bereich des Trockneraufbaus (101) abgeführt wird, wobei wenigstens ein luftabführender Abschnitt (A, A1, A2, A3, A4) der Luftentnahmeführung (340) mit der letzten Trocknerzone (170) und/oder der anderen Trocknerzone (TZ_n-2, TZ_n-1, TZ_n) strömungsverbunden ist, und
- die Luftentnahmeführung (340) eine Luftentnahmeleitung (341) und Luftrückführleitung (354) mit Einbauten aufweist,
- ein Strömungsquerschnitt in dem wenigstens einem luftabführenden Abschnitt (A, A1, A2, A3) der Luftentnahmeführung (340) mit einer Querschnittsvergrößerung (Q, Q1, Q2, Q3, Q4) versehen ist, wobei
der Abschnitt (A, A1, A2, A3, A4) der Luftentnahmeführung (340) durch einen Leitungsabschnitt einer Luftentnahmeleitung (341) und/oder Luftrückführleitung (354) gebildet ist, der die Querschnittsvergrößerung (Q, Q1, Q2, Q3, Q4) aufweist in Form eines oder mehrerer querschnittsvergrößernder Luftführungsmittel, wobei
die Querschnittsvergrößerung derart einen Querschnitt des luftabführenden Abschnitts (A, A1, A2, A3) der Luftentnahmeführung (340) vergrößert, dass
- die Rückführluft (RL) wenigstens in dem luftabführenden Abschnitt (A, A1, A2, A3) der Luftentnahmeführung (340) mit einer verringerten Strömungsgeschwindigkeit abführbar ist, wobei die verringerte Strömungsgeschwindigkeit geringer ist als an einem luftstromaufwärtigen Querschnitt der Luftentnahmeleitung und/oder als eine Eintragsgeschwindigkeit am Eintrags-Abschnitt (EA)
und/oder
- die Rückführluft (RL) wenigstens in einem querschnittsvergrößerten Eintrags-Abschnitt (EA) der Luftentnahmeführung (340) mit einer verringerten Eintragsgeschwindigkeit abführbar ist, die einer verringerten Strömungsgeschwindigkeit entspricht, welche geringer ist als an einem luftstromabwärtigen Querschnitt der Luftentnahmeleitung.

12. Bandtrockner nach Anspruch 11, **dadurch gekennzeichnet, dass** der Abschnitt (A, A1, A2, A3, A4) der Luftentnahmeführung (340) und/oder Luftrückführung (350) mittels eines vertikal verlaufenden Leitungsabschnitts einer Luftentnahmeleitung (341) und/oder Luftrückführleitung (354) gebildet ist, wobei der vertikal verlaufende Leitungsabschnitt der Luftentnahmeleitung (341) die Querschnittsvergrößerung (Q, Q1, Q2, Q3, Q4) in Form eines oder mehrerer querschnittsvergrößernder Luftführungsmittel aufweist.

13. Bandtrockner nach Anspruch 11, **dadurch gekennzeichnet, dass** der Abschnitt (A, A1, A2, A3, A4) der Luftentnahmeführung (340) und/oder Luftrückführung (350) mittels eines horizontal verlaufenden Leitungsabschnitts einer Luftentnahmeleitung (341) gebildet ist, wobei der horizontal verlaufende Leitungsabschnitt der Luftentnahmeleitung (341) und/oder Luftrückführleitung (354) die Querschnittsvergrößerung (Q, Q1, Q2, Q3, Q4) als ein oder mehrere querschnittvergrößernde Luftführungsmittel aufweist.

14. Bandtrockner nach einem der Ansprüche 11 bis 13, **dadurch gekennzeichnet, dass** der Abschnitt (A, A1, A2, A3, A4) der Luftentnahmeführung (340) durch einen Leitungsabschnitt einer Luftentnahmeleitung (341) gebildet ist, der die Querschnittsvergrößerung (Q, Q1, Q2, Q3, Q4) aufweist in Form eines oder mehrerer querschnittsvergrößernder Luftführungsmittel, die auf einer Höhe, welche oberhalb des Förderbandes (400) liegt, oder auf einer Höhe, welche unterhalb des Förderbandes (400) liegt, angeordnet sind.

15. Bandtrockner nach einem der Ansprüche 11 bis 14, **dadurch gekennzeichnet, dass** ein Luftführungsmittel gebildet ist mit:
- wenigstens einem Anschluss wenigstens einer ersten Bypassleitung (341.1) an dem Leitungsabschnitt der Luftentnahmeleitung (341) zur Bildung eines ersten luftabführenden Abschnitts (A1) mit Querschnittsvergrößerung (Q1), wobei die wenigstens eine erste Bypassleitung (341.1) zur Luftentnahme aus dem Trockneraufbau (101) oberhalb des Förderbandes (400) ausgebildet ist, wobei die Luftentnahmeleitung (341) eine erste Drossel (342) und/oder eine zweite Drossel (343) und/oder eine Gesamt-Drossel (344) aufweist.

16. Bandtrockner nach einem der Ansprüche 11 bis 15, **dadurch gekennzeichnet, dass** ein Luftführungsmittel gebildet ist mit:
- wenigstens einem Anschluss wenigstens einer zweiten Bypassleitung (341.2) an dem Leitungsabschnitt der Luftentnahmeleitung (341) oberhalb des Förderbandes (400) oder unterhalb des Förderbandes (400) zur Bildung eines zweiten luftabführenden Abschnitts (A2) mit Querschnittsvergrößerung (Q2), wobei wenigstens eine zweite Bypassleitung (341.2) zur Luftzufuhr von Frischluft (FL) aus der Umgebung oberhalb des Förderbandes (400) ausgebildet ist, wobei die Luftentnahmeleitung (341) eine erste Drossel (342) und/oder eine Gesamt-Drossel (344) und/oder eine Zuluft-Drossel (345) aufweist.

17. Bandtrockner nach einem der Ansprüche 11 bis 16, **dadurch gekennzeichnet, dass** ein Luftführungsmittel gebildet ist mit:
- einem Anschluss einer Setzkammer (348) oder eines Fliehkraftabscheiders (349) in der Luftentnahmeleitung (341) zur Bildung eines dritten luftabführenden Abschnitts (A3) oberhalb des Förderbandes (400) mit Querschnittsvergrößerung (Q3), wobei die Luftentnahmeleitung (341) eine erste Drossel (342) und/oder eine Gesamt-Drossel (344) aufweist.

18. Bandtrockner nach einem der Ansprüche 11 bis 17, **dadurch gekennzeichnet, dass** ein Luftführungsmittel gebildet ist mit:
- einem Anschluss eines querschnittsgroßen Leitungseintrittsbereich (341L), z.B. eines zylindrischen oder rechteckigen Strömungskanals (341Z) und/oder eines sich aufweitenden Diffusors, Trichters oder dergleichen Strömungskanalausformung (341D) in der Luftentnahmeleitung (341) zur Bildung eines vierten luftabführenden Abschnitts (A4) unterhalb des Förderbandes (400) mit Querschnittsvergrößerung (Q4), wobei die Luftentnahmeleitung (341) eine erste Drossel (342) und/oder eine Gesamt-Drossel (344) aufweist.

19. Bandtrockner nach einem der Ansprüche 11 bis 18, **dadurch gekennzeichnet, dass** die Trocknerzonen (110, 120, 130, 140, 150, 160) umfassend eine in Förderrichtung (C) letzte Trocknerzone (170 mindestens eine Luftzirkulationseinrichtung aufweisen, wobei ein Umluftventilator (320, 330) derart gestaltet ist, dass eine Luftzirkulation von Umluft, insbesondere Umluft (UL) und Frischluft (FL), durch das Polymergel ermöglicht ist und Umluft wenigstens teilweise als Rückführluft aus der in Förderrichtung (C) letzten Trocknerzone (170) in der Luftentnahmeführung (340) abführbar ist.

20. Bandtrockner (1000) nach einem der Ansprüche 11 bis 19, **dadurch gekennzeichnet, dass** eine Luftentnahmeführung (340) einen Absetzbereich (347), aufweist, der ausgebildet ist, die Strömungsgeschwindigkeit einer Rückführluft (RL) derart zu reduzieren, dass sich in der Rückführluft (RL) mitgeführte Polymerpartikel absetzen und/oder diese in den Trocknungsprozess rückführbar sind.

## Claims

1. A production process for production of water-absorbing polymer particles, where the production process has the following steps:
- polymerizing an aqueous monomer solution or suspension for production of an aqueous polymer gel,
- crushing and/or grinding a dried polymer gel to give water-absorbing polymer particles;
- drying the aqueous polymer gel in a belt drier in the form of an air circulation belt drier (1000) designed for guiding of circulating air (UL), with a conveyor belt, by accommodating the aqueous polymer gel on the conveyor belt and conveying the polymer gel on the conveyor belt in a conveying direction (C),
where, for drying:
- the belt drier is formed with a drier setup (101) substantially comprising the conveyor belt, where circulating air (UL) is circulated through the polymer gel in a number of drier zones (110, 120, 130, 140, 150, 160) comprising a last drier zone (170) in conveying direction (C),
wherein
the belt drier is formed with an air recycling conduit (350) downstream of the drier setup (101) for air recycling, where recycled air (RL) is withdrawn from the drier setup (101) and fed back to the drier setup (101) via the air recycling conduit (350), and the circulating air (UL) is at least partly removed by means of an air withdrawal conduit (340) as the recycled air (RL) from the last drier zone (170) in conveying direction (C) or one of the last drier zones, where
- air recycling is understood to mean recycling of air withdrawn from the drier setup (101), which is removed in the air withdrawal conduit (340) and is returned as recycled air (RL) counter to the conveying direction (C) of the conveyor belt outside the drier setup (101), and is fed back to the drier setup (101) at a point counter to the conveying direction (C) of the conveyor belt, namely in an air-supplying section (370), where
- the air withdrawal conduit (340) is directly connected to the air recycling conduit (350) for recycled air (RL), which feeds the recycled air (RL) back to the drier setup (101) in the air-supplying section (370) of the air recycling conduit (350), and for the purpose is likewise connected to the drier setup (101), and
- the air recycling conduit (350) has the air withdrawal conduit (340) formed between an upstream intake section (EA) relative to air flow direction in the drier setup (101) and a downstream outlet section (AA) relative to air flow direction in the air recycling conduit (350), wherein
- the recycled air (RL) in a last drier zone (170) and/or another drier zone (TZ_n-2, TZ_n-1, TZ_n) in conveying direction (C) is removed in the downstream region of the drier setup (101) in conveying direction (C), where at least one air-removing section (A, A1, A2, A3, A4) of the air withdrawal conduit (340) is connected for flow purposes to the last drier zone (170) and/or the other drier zone (TZ_n-2, TZ_n-1, TZ_n), and
- the air withdrawal conduit (340) has an air withdrawal line (341) and/or air recycling line (354) with internals, and
- a flow cross section in the at least one air-removing section (A, A1, A2, A3, A4) of the air withdrawal conduit (340) has an increase in cross section (Q, Q1, Q2, Q3, Q4), where
the section (A, A1, A2, A3, A4) of the air withdrawal conduit (340) is formed by a line section of an air withdrawal line (341) and/or air recycling line (354) that has the increase in cross section (Q, Q1, Q2, Q3, Q4) in the form of one or more cross section-increasing air guiding means, where
the increase in cross section increases a cross section of the air-removing section (A, A1, A2, A3, A4) of the air withdrawal conduit in such a way that
- the recycled air (RL) at least in the air-removing section (A, A1, A2, A3, A4) of the air withdrawal conduit (340) is removed at a reduced flow rate, where the reduced flow rate is lower than at a cross section of the air withdrawal line at an upstream point in the air flow and/or than an intake rate in the intake section (EA),
and/or
- the recycled air (RL) at least in an intake section (EA) of increased cross section in the air withdrawal conduit (340) is removed at a reduced intake rate corresponding to a reduced flow rate lower than at a downstream cross section of the air withdrawal line relative to air flow direction.

2. The production process according to claim 1, wherein the internals include at least one filter (353), heat exchanger (352) and/or ventilator (351).

3. The production process according to claim 1 or 2, wherein the section (A, A1, A2, A3, A4) of the air withdrawal conduit (340) and/or air recycling conduit (350) is formed by means of a vertical line section of an air withdrawal line (341) and/or air recycling line (354), where the vertical line section of the air withdrawal line (341) and/or air recycling line (354) has the increase in cross section (Q, Q1, Q2, Q3, Q4) in the form of one or more cross section-increasing air guiding means.

4. The production process according to claim 1 or 2, wherein the section (A, A1, A2, A3, A4) of the air withdrawal conduit (340) and/or air recycling conduit (350) is formed by means of a horizontal line section of an air withdrawal line (341) and/or air recycling line (354), where the horizontal line section of the air withdrawal line (341) and/or air recycling line (354) has the increase in cross section (Q, Q1, Q2, Q3, Q4) in the form of one or more cross section-increasing air guiding means.

5. The production process according to any of claims 1 to 4, wherein the cross section-increasing air guiding means is/are arranged at a level above the conveyor belt (400) .

6. The production process according to any of claims 1 to 4, wherein the cross section-increasing air guiding means is/are arranged at a level beneath the conveyor belt (400).

7. The production process according to any of claims 1 to 6, wherein an air guiding means is formed by:
- a connection of at least one first bypass line (341.1) to the line section of the air withdrawal line (341) for formation of a first air-removing section (A1) with increasing cross section (Q1), where the at least one first bypass line (341.1) is designed to withdraw air from the drier setup (101).

8. The production process according to any of claims 1 to 7, wherein an air guiding means is formed by:
- a connection of at least one second bypass line (341.2) to the line section of the air withdrawal line (341) for formation of a second air-removing section (A2) with increasing cross section (Q2), where the at least one second bypass line (341.2) is designed to supply fresh air (FL) from the environment.

9. The production process according to any of claims 1 to 8, wherein an air guiding means is formed by:
- a connection of a settling chamber or of a centrifugal separator (349) in the air withdrawal line (341) for formation of a third air-removing section (A3) with increasing cross section (Q3).

10. The production process according to any of claims 1 to 9, wherein an air guiding means is formed in an intake section (EA) by:
- a connection of a line intake region (341L) of large cross section, in the form of a flow channel (341Z) and/or a flow channel form (341D) in the air withdrawal line (341) for formation of a fourth air-removing section (A4) with increasing cross section (Q4).

11. A belt drier in the form of an air circulation belt drier (1000), designed for guiding of circulating air (UL) for drying an aqueous polymer gel and conveying the polymer gel on a conveyor belt, wherein
- the belt drier is formed with a drier setup (101) substantially comprising the conveyor belt, where circulating air is circulated through the polymer gel in a number of drier zones (110, 120, 130, 140, 150, 160) comprising a last drier zone (170) in conveying direction (C),
where, for drying of the aqueous polymer gel and conveying of the polymer gel on the conveyor belt in a production process according to any of claims 1 to 10, the belt drier is formed with an air recycling conduit (350) downstream of the drier setup (101), where recycled air (RL) can be withdrawn from the drier setup (101) and fed back to the drier setup (101) via the air recycling conduit (350), and the circulating air (UL) is at least partly removed by means of the air withdrawal conduit (340) as the recycled air (RL) from the last drier zone (170) in conveying direction (C) or one of the last drier zones, where
- air recycling is understood to mean recycling of air withdrawn from the drier setup (101), which is removed in the air withdrawal conduit (340) and is returned as recycled air (RL) counter to the conveying direction (C) of the conveyor belt outside the drier setup (101), and is fed back to the drier setup (101) at a point counter to the conveying direction (C) of the conveyor belt, namely in an air-supplying section (370), where
- the air withdrawal conduit (340) is directly connected to the air recycling conduit (350) for recycled air (RL), which feeds the recycled air (RL) back to the drier setup (101) in the air-supplying section (370) of the air recycling conduit (350), and for the purpose is likewise connected to the drier setup (101), and
- the air recycling conduit (350) has an air withdrawal conduit (340) formed between an upstream intake section (EA) relative to air flow direction in the drier setup (101) and a downstream outlet section (AA) in the air recycling conduit (350), wherein
- the recycled air (RL) in a last drier zone (170) and/or another drier zone (TZ_n-2, TZ_n-1, TZ_n) in conveying direction (C) is removed in the downstream region of the drier setup (101) in conveying direction (C), where at least one air-removing section (A, A1, A2, A3, A4) of the air withdrawal conduit (340) is connected for flow purposes to the last drier zone (170) and/or the other drier zone (TZ_n-2, TZ_n-1, TZ_n), and
- the air withdrawal conduit (340) has an air withdrawal line (341) and air recycling line (354) with internals,
- a flow cross section in the at least one air-removing section (A, A1, A2, A3) of the air withdrawal conduit (340) has an increase in cross section (Q, Q1, Q2, Q3, Q4), where
the section (A, A1, A2, A3, A4) of the air withdrawal conduit (340) is formed by a line section of an air withdrawal line (341) and/or air recycling line (354) that has the increase in cross section (Q, Q1, Q2, Q3, Q4) in the form of one or more cross section-increasing air guiding means, where
the increase in cross section increases a cross section of the air-removing section (A, A1, A2, A3) of the air withdrawal conduit (340) in such a way that
- the recycled air (RL) at least in the air-removing section (A, A1, A2, A3) of the air withdrawal conduit (340) can be removed at a reduced flow rate, where the reduced flow rate is lower than at a cross section of the air withdrawal line at an upstream point in the air flow and/or than an intake rate in the intake section (EA),
and/or
- the recycled air (RL) at least in an intake section (EA) of increased cross section in the air withdrawal conduit (340) can be removed at a reduced intake rate corresponding to a reduced flow rate lower than at a downstream cross section of the air withdrawal line relative to air flow direction.

12. The belt drier according to claim 11, wherein the section (A, A1, A2, A3, A4) of the air withdrawal conduit (340) and/or air recycling conduit (350) is formed by means of a vertical line section of an air withdrawal line (341) and/or air recycling line (354), where the vertical line section of the air withdrawal line (341) has the increase in cross section (Q, Q1, Q2, Q3, Q4) in the form of one or more cross section-increasing air guiding means.

13. The belt drier according to claim 11, wherein the section (A, A1, A2, A3, A4) of the air withdrawal conduit (340) and/or air recycling conduit (350) is formed by means of a horizontal line section of an air withdrawal line (341), where the horizontal line section of the air withdrawal line (341) and/or air recycling line (354) has the increase in cross section (Q, Q1, Q2, Q3, Q4) in the form of one or more cross section-increasing air guiding means.

14. The belt drier according to any of claims 11 to 13, wherein the section (A, A1, A2, A3, A4) of the air withdrawal conduit (340) is formed by a line section of an air withdrawal line (341) having the increase in cross section (Q, Q1, Q2, Q3, Q4) in the form of one or more cross section-increasing air guiding means arranged at a level above the conveyor belt (400), or at a level beneath the conveyor belt (400).

15. The belt drier according to any of claims 11 to 14, wherein an air guiding means is formed by:
- at least one connection of at least one first bypass line (341.1) to the line section of the air withdrawal line (341) for formation of a first air-removing section (A1) with increasing cross section (Q1), where the at least one first bypass line (341.1) is designed to withdraw air from the drier setup (101) above the conveyor belt (400), where the air withdrawal line (341) has a first throttle (342) and/or a second throttle (343) and/or an overall throttle (344).

16. The belt drier according to any of claims 11 to 15, wherein an air guiding means is formed by:
- at least one connection of at least one second bypass line (341.2) to the line section of the air withdrawal line (341) above the conveyor belt (400) or beneath the conveyor belt (400) for formation of a second air-removing section (A2) with increasing cross section (Q2), where at least one second bypass line (341.2) is designed to supply fresh air (FL) from the environment above the conveyor belt (400), where the air withdrawal line (341) has a first throttle (342) and/or an overall throttle (344) and/or an air feed throttle (345).

17. The belt drier according to any of claims 11 to 16, wherein an air guiding means is formed by:
- a connection of a settling chamber (348) or of a centrifugal separator (349) in the air withdrawal line (341) for formation of a third air-removing section (A3) above the conveyor belt (400) with increasing cross section (Q3), where the air withdrawal line (341) has a first throttle (342) and/or an overall throttle (344).

18. The belt drier according to any of claims 11 to 17, wherein an air guiding means is formed by:
- a connection of a line intake region (341L) of large cross section, for example a cylindrical or rectangular flow channel (341Z) and/or a widening diffuser, funnel or similar flow channel form (341D) in the air withdrawal line (341) for formation of a fourth air-removing section (A4) beneath the conveyor belt (400) with increasing cross section (Q4), where the air withdrawal line (341) has a first throttle (342) and/or an overall throttle (344).

19. The belt drier according to any of claims 11 to 18, wherein the drier zones (110, 120, 130, 140, 150, 160) comprising a last drier zone (170) in conveying direction (C) have at least one air circulation unit, where an air circulation ventilator (320, 330) is configured so as to enable air circulation of circulating air, especially circulating air (UL) and fresh air (FL), through the polymer gel and circulating air is at least partly removable as recycled air from the last drier zone (170) in conveying direction (C) in the air withdrawal conduit (340) .

20. The belt drier (1000) according to any of claims 11 to 19, wherein an air withdrawal conduit (340) has a settling region (347), designed to reduce the flow rate of recycled air (RL) in such a way that polymer particles entrained in the recycled air (RL) settle out and/or are recyclable into the drying process.

## Revendications

1. Procédé de préparation pour la préparation de particules polymères absorbant l'eau, le procédé de préparation présentant les étapes de :
- polymérisation d'une solution ou d'une suspension aqueuse de monomères pour la préparation d'un gel polymère aqueux,
- concassage et/ou broyage d'un gel polymère séché en particules polymères absorbant l'eau,
- séchage du gel polymère aqueux dans un sécheur à bande conçu comme un sécheur à bande à circulation d'air (1000), qui est conçu pour le guidage d'air en circulation (UL), comportant une bande transporteuse, par réception du gel polymère aqueux sur la bande transporteuse et transport du gel polymère sur la bande transporteuse dans un sens de transport (C),
dans lequel, pour le séchage :
- le sécheur à bande est formé avec une structure de sécheur (101) entourant dans une large mesure la bande transporteuse, l'air en circulation (UL) étant mis en circulation à travers le gel polymère dans un certain nombre de zones de sécheur (110, 120, 130, 140, 150, 160) comprenant une dernière zone de sécheur (170) dans le sens de transport (C),
le sécheur à bande étant formé avec un recyclage d'air (350) se raccordant de manière à recycler l'air à la structure de sécheur (101), l'air de recyclage (RL) étant prélevé de la structure de sécheur (101) et de nouveau introduit par l'intermédiaire du recyclage d'air (350) dans la structure de sécheur (101) et l'air en circulation (UL) étant évacué au moins partiellement en tant qu'air de recyclage (RL) à partir de la dernière zone de sécheur (170) ou de l'une des dernières zones de sécheur dans le sens de transport (C) au moyen d'un guidage de prélèvement d'air (340),
- le recyclage d'air signifiant un recyclage d'air prélevé à partir de la structure de sécheur (101), lequel air est évacué dans le guidage de prélèvement d'air (340) et recyclé en tant qu'air de recyclage (RL) en sens inverse du sens de transport (C) de la bande transporteuse en dehors de la structure de sécheur (101) et de nouveau introduit au niveau d'un endroit situé à l'opposé du sens de transport (C) de la bande transporteuse, à savoir au niveau d'un tronçon d'introduction d'air (370) dans la structure de sécheur (101),
- le guidage de prélèvement d'air (340) se raccordant au recyclage d'air (350) pour l'air de recyclage (RL), qui introduit de nouveau l'air de recyclage (RL) dans la structure de sécheur (101) dans le tronçon d'introduction d'air (370) du recyclage d'air (350) et qui est à cette fin également raccordé à la structure de sécheur (101) et
- le recyclage d'air (350) présentant le guidage de prélèvement d'air (340) qui est conçu entre un tronçon d'entrée (EA) en amont dans l'écoulement d'air au niveau de la structure de sécheur (101) et un tronçon de sortie (AA) en aval dans l'écoulement d'air dans le recyclage d'air (350),
- l'air de recyclage (RL) étant évacué au niveau d'une dernière zone de sécheur (170) dans le sens de transport (C) et/ou d'une autre zone de sécheur (TZ_n-2, TZ_n-1, TZ_n) dans la zone arrière de la structure de séchage (101) dans le sens de transport (C), au moins un tronçon d'évacuation d'air (A, A1, A2, A3, A4) du guidage de prélèvement d'air (340) étant relié fluidiquement à la dernière zone de sécheur (170) et/ou à l'autre zone de sécheur (TZ_n-2, TZ_n-1, TZ_n) et
- le guidage de prélèvement d'air (340) présentant une conduite de prélèvement d'air (341) et une conduite de recyclage d'air (354) comportant des inserts et
- une section transversale d'écoulement dans ledit au moins un tronçon d'évacuation d'air (A, A1, A2, A3, A4) du guidage de prélèvement d'air (340) présentant un agrandissement de section transversale (Q, Q1, Q2, Q3, Q4),
le tronçon (A, A1, A2, A3, A4) du guidage de prélèvement d'air (340) étant formé par un tronçon de conduite d'une conduite de prélèvement d'air (341) et/ou d'une conduite de recyclage d'air (354) qui présente l'agrandissement de section transversale (Q, Q1, Q2, Q3, Q4) sous forme d'un ou de plusieurs moyens de guidage d'air s'agrandissant en section transversale,
l'agrandissement de section transversale agrandissant une section transversale du tronçon d'évacuation d'air (A, A1, A2, A3, A4) du guidage de prélèvement d'air de manière telle que
- l'air de recyclage (RL) est évacué au moins dans le tronçon d'évacuation d'air (A, A1, A2, A3, A4) du guidage de prélèvement d'air (340) à une vitesse d'écoulement réduite, la vitesse d'écoulement réduite étant inférieure à celle au niveau d'une section transversale en amont dans l'écoulement d'air de la conduite de prélèvement d'air et/ou à une vitesse d'entrée au niveau du tronçon d'entrée (EA),
et/ou
- l'air de recyclage (RL) est évacué au moins dans un tronçon d'entrée (EA) à section transversale agrandie du guidage de prélèvement d'air (340) à une vitesse d'entrée réduite qui correspond à une vitesse d'écoulement réduite qui est inférieure à celle au niveau d'une section transversale en aval dans l'écoulement d'air de la conduite de prélèvement d'air.

2. Procédé de préparation selon la revendication 1, **caractérisé en ce que** les inserts présentent au moins un filtre (353), un échangeur thermique (352) et/ou un ventilateur (351).

3. Procédé de préparation selon la revendication 1 ou 2, **caractérisé en ce que** le tronçon (A, A1, A2, A3, A4) du guidage de prélèvement d'air (340) et/ou du recyclage d'air (350) est formé au moyen d'un tronçon de conduite s'étendant verticalement d'une conduite de prélèvement d'air (341) et/ou d'une conduite de recyclage d'air (354), le tronçon de conduite s'étendant verticalement de la conduite de prélèvement d'air (341) et/ou de la conduite de recyclage d'air (354) présentant l'agrandissement de section transversale (Q, Q1, Q2, Q3, Q4) en tant qu'un ou plusieurs moyens de guidage d'air s'agrandissant en section transversale.

4. Procédé de préparation selon la revendication 1 ou 2, **caractérisé en ce que** le tronçon (A, A1, A2, A3, A4) du guidage de prélèvement d'air (340) et/ou du recyclage d'air (350) est formé au moyen d'un tronçon de conduite s'étendant horizontalement d'une conduite de prélèvement d'air (341) et/ou d'une conduite de recyclage d'air (354), le tronçon de conduite s'étendant horizontalement de la conduite de prélèvement d'air (341) et/ou de la conduite de recyclage d'air (354) présentant l'agrandissement de section transversale (Q, Q1, Q2, Q3, Q4) en tant qu'un ou plusieurs moyens de guidage d'air s'agrandissant en section transversale.

5. Procédé de préparation selon l'une quelconque des revendications 1 à 4, **caractérisé en ce que** le ou les moyens de guidage d'air s'agrandissant en surface transversale est/sont agencé(s) à une hauteur qui est située au-dessus de la bande transporteuse (400).

6. Procédé de préparation selon l'une quelconque des revendications 1 à 4, **caractérisé en ce que** le ou les moyens de guidage d'air s'agrandissant en surface transversale est/sont agencé(s) à une hauteur qui est située sous la bande transporteuse (400).

7. Procédé de préparation selon l'une quelconque des revendications 1 à 6, **caractérisé**
**en ce qu'**un moyen de guidage d'air est formé avec :
- un raccord d'au moins une première conduite de dérivation (341.1) au tronçon de conduite de la conduite de prélèvement d'air (341) pour la formation d'un premier tronçon d'évacuation d'air (A1) comportant un agrandissement de section transversale (Q1), ladite au moins une première conduite de dérivation (341.1) étant conçue pour le prélèvement d'air à partir de la structure de sécheur (101).

8. Procédé de préparation selon l'une quelconque des revendications 1 à 7, **caractérisé**
**en ce qu'**un moyen de guidage d'air est formé avec :
- un raccord d'au moins une deuxième conduite de dérivation (341.2) au tronçon de conduite de la conduite de prélèvement d'air (341) pour la formation d'un deuxième tronçon d'évacuation d'air (A2) comportant un agrandissement de section transversale (Q2), ladite au moins une deuxième conduite de dérivation (341.2) étant conçue pour l'introduction d'air frais (FL) à partir de l'environnement.

9. Procédé de préparation selon l'une quelconque des revendications 1 à 8, **caractérisé**
**en ce qu'**un moyen de guidage d'air est formé avec :
- un raccord d'une chambre de dépôt ou d'un séparateur centrifuge (349) dans la conduite de prélèvement d'air (341) pour la formation d'un troisième tronçon d'évacuation d'air (A3) comportant un agrandissement de section transversale (Q3).

10. Procédé de préparation selon l'une quelconque des revendications 1 à 9, **caractérisé**
**en ce qu'**un moyen de guidage d'air au niveau d'un tronçon d'entrée (EA) est formé avec :
- un raccord d'une zone d'entrée de conduite (341L) à grande section transversale, qui est formée comme un canal d'écoulement (341Z) et/ou une conformation de canal d'écoulement (341D) dans la conduite de prélèvement d'air (341) pour la formation d'un quatrième tronçon d'évacuation d'air (A4) comportant un agrandissement de section transversale (Q4).

11. Sécheur à bande conçu comme un sécheur à bande à circulation d'air (1000), qui est conçu pour le guidage d'air en circulation (UL) pour le séchage d'un gel polymère aqueux et le transport du gel polymère sur une bande transporteuse,
- le sécheur à bande étant formé avec une structure de sécheur (101) entourant dans une large mesure la bande transporteuse, l'air en circulation étant mis en circulation à travers le gel polymère dans un certain nombre de zones de sécheur (110, 120, 130, 140, 150, 160) comprenant une dernière zone de sécheur (170) dans le sens de transport (C),
pour le séchage du gel polymère aqueux et le transport du gel polymère sur la bande transporteuse dans un procédé de préparation selon l'une quelconque des revendications 1 à 10, le sécheur à bande étant formé avec un recyclage d'air (350) se raccordant à la structure de sécheur (101), l'air de recyclage (RL) pouvant être prélevé à partir de la structure de sécheur (101) et de nouveau introduit dans la structure de sécheur (101) par l'intermédiaire du recyclage d'air (350) et l'air en circulation (UL) étant évacué au moins partiellement comme air de recyclage (RL) à partir de la dernière zone de sécheur (170) ou d'une des dernières zones de sécheur, dans le sens de transport (C), au moyen du guidage de prélèvement d'air (340),
- le recyclage d'air signifiant un recyclage d'air prélevé à partir de la structure de sécheur (101), lequel air est évacué dans le guidage de prélèvement d'air (340) et recyclé en tant qu'air de recyclage (RL) en sens inverse du sens de transport (C) de la bande transporteuse en dehors de la structure de sécheur (101) et de nouveau introduit au niveau d'un endroit situé à l'opposé du sens de transport (C) de la bande transporteuse, à savoir au niveau d'un tronçon d'introduction d'air (370) dans la structure de sécheur (101),
- le guidage de prélèvement d'air (340) se raccordant au recyclage d'air (350) pour l'air de recyclage, qui introduit de nouveau l'air de recyclage (RL) dans la structure de sécheur (101) dans le tronçon d'introduction d'air (370) du recyclage d'air (350) et qui est à cette fin également raccordé à la structure de sécheur (101) et
- le recyclage d'air (350) présentant un guidage de prélèvement d'air (340) qui est conçu entre un tronçon d'entrée (EA) en amont dans le flux d'air au niveau de la structure de sécheur (101) et un tronçon de sortie (AA) en aval dans le recyclage d'air (350),
- l'air de recyclage (RL) étant évacué au niveau d'une dernière zone de sécheur (170) dans le sens de transport (C) et/ou d'une autre zone de sécheur (TZ_n-2, TZ_n-1, TZ_n) dans la zone arrière de la structure de séchage (101) dans le sens de transport (C), au moins un tronçon d'évacuation d'air (A, A1, A2, A3, A4) du guidage de prélèvement d'air (340) étant relié fluidiquement à la dernière zone de sécheur (170) et/ou à l'autre zone de sécheur (TZ_n-2, TZ_n-1, TZ_n) et
- le guidage de prélèvement d'air (340) présentant une conduite de prélèvement d'air (341) et une conduite de recyclage d'air (354) comportant des inserts,
- une section transversale d'écoulement dans ledit au moins un tronçon d'évacuation d'air (A, A1, A2, A3) du guidage de prélèvement d'air (340) étant pourvue d'un agrandissement de section transversale (Q, Q1, Q2, Q3, Q4),
le tronçon (A, A1, A2, A3, A4) du guidage de prélèvement d'air (340) étant formé par un tronçon de conduite d'une conduite de prélèvement d'air (341) et/ou d'une conduite de recyclage d'air (354) qui présente l'agrandissement de section transversale (Q, Q1, Q2, Q3, Q4) sous forme d'un ou de plusieurs moyens de guidage d'air s'agrandissant en section transversale,
l'agrandissement de section transversale agrandissant une section transversale du tronçon d'évacuation d'air (A, A1, A2, A3) du guidage de prélèvement d'air (340) de manière telle que
- l'air de recyclage (RL) peut être évacué au moins dans le tronçon d'évacuation d'air (A, A1, A2, A3) du guidage de prélèvement d'air (340) à une vitesse d'écoulement réduite, la vitesse d'écoulement réduite étant inférieure à celle au niveau d'une section transversale en amont dans l'écoulement d'air de la conduite de prélèvement d'air et/ou à une vitesse d'entrée au niveau du tronçon d'entrée (EA),
et/ou
- l'air de recyclage (RL) peut être évacué au moins dans un tronçon d'entrée (EA) à section transversale agrandie du guidage de prélèvement d'air (340) à une vitesse d'entrée réduite qui correspond à une vitesse d'écoulement réduite qui est inférieure à celle au niveau d'une section transversale en aval dans l'écoulement d'air de la conduite de prélèvement d'air.

12. Sécheur à bande selon la revendication 11, **caractérisé en ce que** le tronçon (A, A1, A2, A3, A4) du guidage de prélèvement d'air (340) et/ou du recyclage d'air (350) est formé au moyen d'un tronçon de conduite s'étendant verticalement d'une conduite de prélèvement d'air (341) et/ou d'une conduite de recyclage d'air (354), le tronçon de conduite s'étendant verticalement de la conduite de prélèvement d'air (341) présentant l'agrandissement de section transversale (Q, Q1, Q2, Q3, Q4) sous forme d'un ou de plusieurs moyens de guidage d'air s'agrandissant en section transversale.

13. Sécheur à bande selon la revendication 11, **caractérisé en ce que** le tronçon (A, A1, A2, A3, A4) du guidage de prélèvement d'air (340) et/ou du recyclage d'air (350) est formé au moyen d'un tronçon de conduite s'étendant horizontalement d'une conduite de prélèvement d'air (341), le tronçon de conduite s'étendant horizontalement de la conduite de prélèvement d'air (341) et/ou de la conduite de recyclage d'air (354) présentant l'agrandissement de section transversale (Q, Q1, Q2, Q3, Q4) en tant qu'un ou plusieurs moyens de guidage d'air s'agrandissant en section transversale.

14. Sécheur à bande selon l'une quelconque des revendications 11 à 13, **caractérisé en ce que** le tronçon (A, A1, A2, A3, A4) du guidage de prélèvement d'air (340) est formé par un tronçon de conduite d'une conduite de prélèvement d'air (341) qui présente l'agrandissement de section transversale (Q, Q1, Q2, Q3, Q4) sous forme d'un ou de plusieurs moyens de guidage d'air s'agrandissant en section transversale, qui sont agencés à une hauteur qui se situe au-dessus de la bande transporteuse (400) ou à une hauteur qui se situe sous la bande transporteuse (400) .

15. Sécheur à bande selon l'une quelconque des revendications 11 à 14, **caractérisé**
**en ce qu'**un moyen de guidage d'air est formé avec :
- au moins un raccord d'au moins une première conduite de dérivation (341.1) au tronçon de conduite de la conduite de prélèvement d'air (341) pour la formation d'un premier tronçon d'évacuation d'air (A1) comportant un agrandissement de section transversale (Q1), ladite au moins une première conduite de dérivation (341.1) étant conçue pour le prélèvement d'air à partir de la structure de sécheur (101) au-dessus de la bande transporteuse (400), la conduite de prélèvement d'air (341) présentant un premier étranglement (342) et/ou un deuxième étranglement (343) et/ou un étranglement global (344).

16. Sécheur à bande selon l'une quelconque des revendications 11 à 15, **caractérisé**
**en ce qu'**un moyen de guidage d'air est formé avec :
- au moins un raccord d'au moins une deuxième conduite de dérivation (341.2) au tronçon de conduite de la conduite de prélèvement d'air (341) au-dessus de la bande transporteuse (400) ou sous la bande transporteuse (400) pour la formation d'un deuxième tronçon d'évacuation d'air (A2) comportant un agrandissement de section transversale (Q2), ladite au moins une deuxième conduite de dérivation (341.2) étant conçue pour l'introduction d'air frais (FL) à partir de l'environnement au-dessus de la bande transporteuse (400), la conduite de prélèvement d'air (341) présentant un premier étranglement (342) et/ou un étranglement global (344) et/ou un étranglement d'air d'alimentation (345).

17. Sécheur à bande selon l'une quelconque des revendications 11 à 16, **caractérisé**
**en ce qu'**un moyen de guidage d'air est formé avec :
- un raccord d'une chambre de dépôt (348) ou d'un séparateur centrifuge (349) dans la conduite de prélèvement d'air (341) pour la formation d'un troisième tronçon d'évacuation d'air (A3) au-dessus de la bande transporteuse (400) comportant un agrandissement de section transversale (Q3), la conduite de prélèvement d'air (341) présentant un premier étranglement (342) et/ou un étranglement global (344).

18. Sécheur à bande selon l'une quelconque des revendications 11 à 17, **caractérisé**
**en ce qu'**un moyen de guidage d'air est formé avec :
- un raccord d'une zone d'entrée de conduite (341L) à grande section transversale, par exemple d'un canal d'écoulement (341Z) cylindrique ou rectangulaire et/ou d'un diffuseur qui s'élargit, d'un entonnoir et/ou d'une conformation analogue de canal d'écoulement (341D) dans la conduite de prélèvement d'air (341) pour la formation d'un quatrième tronçon d'évacuation d'air (A4) sous la bande transporteuse (400) comportant un agrandissement de section transversale (Q4), la conduite de prélèvement d'air (341) présentant un premier étranglement (342) et/ou un étranglement global (344).

19. Sécheur à bande selon l'une quelconque des revendications 11 à 18, **caractérisé en ce que** les zones de sécheur (110, 120, 130, 140, 150, 160) comprenant une dernière zone de sécheur (170) dans le sens de transport (C) présentent au moins un dispositif de mise en circulation d'air, un ventilateur d'air en circulation (320, 330) étant réalisé de manière telle qu'une mise en circulation de l'air en circulation, en particulier d'air en circulation (UL) et d'air frais (FL), à travers le gel polymère est possible et l'air en circulation peut être évacué au moins partiellement comme air de recyclage à partir de la dernière zone de sécheur (170) dans le sens de transport (C) dans le guidage de prélèvement d'air (340) .

20. Sécheur à bande (1000) selon l'une quelconque des revendications 11 à 19, **caractérisé**
**en ce qu'**un guidage de prélèvement d'air (340) présente une zone de dépôt (347) qui est conçue pour réduire la vitesse d'écoulement d'un air de recyclage (RL) de manière telle que des particules polymères entraînées dans l'air de recyclage (RL) se déposent et/ou peuvent être recyclées dans le processus de séchage.
